(19) Europäisches Patentamt
European Patent Office
Office européen des brevets

(11) **EP 3 252 962 B1**

(12) **EUROPEAN PATENT SPECIFICATION**

(45) Date of publication and mention
of the grant of the patent:
**06.03.2019 Bulletin 2019/10**

(51) Int Cl.:
*H04B 5/00* *(2006.01)*        *B60L 11/18* *(2006.01)*

(21) Application number: **17163659.0**

(22) Date of filing: **10.03.2011**

(54) **WIRELESS ENERGY TRANSFER CONVERTERS**

DRAHTLOSE ENERGIEÜBERTRAGUNGSUMWANDLER

CONVERTISSEURS DE TRANSFERT D'ÉNERGIE SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 10.03.2010  US 721118
10.03.2010  US 720866
30.03.2010  US 749571
09.04.2010  US 757716
13.04.2010  US 759047
20.04.2010  US 326051 P
26.04.2010  US 767633
29.04.2010  US 770137
28.05.2010  US 789611
06.01.2011  US 201113986018
07.02.2011  US 201113021965

(43) Date of publication of application:
**06.12.2017   Bulletin 2017/49**

(62) Document number(s) of the earlier application(s) in
accordance with Art. 76 EPC:
**11754064.1 / 2 545 654**

(73) Proprietor: **WiTricity Corporation
Watertown, MA 02472 (US)**

(72) Inventors:
• **KESLER, Morris, P.
Bedford, MA Massachusetts 01730 (US)**

• **KURS, Andre, B.
Chestnut Hill, MA Massachusetts 02467 (US)**
• **CAMPANELLA, Andrew, J.
Somerville, MA Massachusetts 02143-4030 (US)**
• **FIORELLO, Ron
Tewksbury, MA 01876 (US)**
• **HALL, Katherine, L.
Arlington, MA Massachusetts 02474 (US)**
• **KARALIS, Aristeidis
Boston, MA Massachusetts 02111 (US)**
• **KULIKOWSKI, Konrad J.
Pine, CO Colorado 80470 (US)**
• **SCHATZ, David, A.
Needham, MA Massachusetts 02492 (US)**
• **SOLJACIC, Marin
Belmont, MA Massachusetts 02478 (US)**
• **LOU, Herbert, Toby
Carlisle, MA Massachusetts 01741 (US)**
• **GANEM, Steven, Joseph
Westwood, 02090 (US)**

(74) Representative: **Peterreins Schley
Patent- und Rechtsanwälte
Hermann-Sack-Strasse 3
80331 München (DE)**

(56) References cited:
**WO-A2-2010/014634     JP-A- 2009 038 924
US-A1- 2005 159 913**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Field:

This disclosure relates to wireless energy transfer, methods, systems and apparati to accomplish such transfer, and applications.

Description of the Related Art:

Energy or power may be transferred wirelessly using a variety of techniques as detailed, for example, in commonly owned U.S. Patent Application No. 12/789,611 published on September 23, 2010 as U.S. Pat. Pub. No. 2010/0237709 and entitled "RESONATOR ARRAYS FOR WIRELESS ENERGY TRANSFER," and U.S. Patent Application No. 12/722,050 published on July 22, 2010 as U.S. Pat. Pub. No. 2010/0181843 and entitled "WIRELESS ENERGY TRANSFER FOR REFRIGERATOR APPLICATION". Prior art wireless energy transfer systems have been limited by a variety of factors including concerns over user safety, low energy transfer efficiencies and restrictive physical proximity/alignment tolerances for the energy supply and sink components.

JP 2009-038924 describes a wireless electric power receiving adapter. WO 2010/014634 A2 discloses wireless power transmitters including a resonant tank and a parasitic resonant tank coupled to the resonant tank. US 2005/0159913 A1 describes a read-write processing device communicating with an RFID tag.

**SUMMARY**

Unless otherwise indicated, this disclosure uses the terms wireless energy transfer, wireless power transfer, wireless power transmission, and the like, interchangeably. Those skilled in the art will understand that a variety of system architectures may be supported by the wide range of wireless system designs and functionalities described in this application.

In the wireless energy transfer systems described herein, power may be exchanged wirelessly between at least two resonators. Resonators may supply, receive, hold, transfer, and distribute energy. Sources of wireless power may be referred to as sources or supplies and receivers of wireless power may be referred to as devices, receivers and power loads. A resonator may be a source, a device, or both, simultaneously or may vary from one function to another in a controlled manner. Resonators configured to hold or distribute energy that do not have wired connections to a power supply or power drain may be called repeaters.

The resonators of the wireless energy transfer systems of this invention are able to transfer power over distances that are large compared to the size of the resonators themselves. That is, if the resonator size is characterized by the radius of the smallest sphere that could enclose the resonator structure, the wireless energy transfer system of this invention can transfer power over distances greater than the characteristic size of a resonator. The system is able to exchange energy between resonators where the resonators have different characteristic sizes and where the inductive elements of the resonators have different sizes, different shapes, arc comprised of different materials, and the like.

The wireless energy transfer systems of this invention may be described as having a coupling region, an energized area or volume, all by way of describing that energy may be transferred between resonant objects that arc separated from each other, they may have variable distance from each other, and that may be moving relative to each other. In some embodiments, the area or volume over which energy can be transferred is referred to as the active field area or volume. In addition, the wireless energy transfer system may comprise more than two resonators that may each be coupled to a power source, a power load, both, or neither.

Wirelessly supplied energy may be used to power electric or electronic equipment, recharge batteries or charge energy storage units. Multiple devices may be charged or powered simultaneously or power delivery to multiple devices may be serialized such that one or more devices receive power for a period of time after which power delivery may be switched to other devices. In various embodiments, multiple devices may share power from one or more sources with one or more other devices either simultaneously, or in a time multiplexed manner, or in a frequency multiplexed manner, or in a spatially multiplexed manner, or in an orientation multiplexed manner, or in any combination of time and frequency and spatial and orientation multiplexing. Multiple devices may share power with each other, with at least one device being reconfigured continuously, intermittently, periodically, occasionally, or temporarily, to operate as a wireless power source. Those of ordinary skill in the art will understand that there are a variety of ways to power and/or charge devices applicable to the technologies and applications described herein.

In embodiments a wireless power transfer system may have a wireless power converter that includes at least one receiving magnetic resonator configured to capture electrical energy received wirelessly through a first oscillating magnetic field characterized by a first plurality of parameters. The converter may also have at least one transferring magnetic resonator configured to generate a second oscillating magnetic field characterized by a second plurality of parameters different from the first plurality of parameters, wherein the electrical energy from the at least one receiving magnetic resonator is used to energize the at least one transferring magnetic resonator to generate the second oscillating magnetic field. In embodiments the first plurality of parameters may include a first frequency different from a second frequency of the second plurality of parameters and first frequency may be approximately an integer multiple of the second frequency. In other embodiments the first plurality of parameters may include a first magnitude different from a second magnitude of the second plurality of parameters. The first plurality of parameters may also include a first frequency hopping sequence different from a second frequency hopping sequence of the second plurality of parameters, likewise the first plurality of parameters may include a first on/off sequence different from a second on/off sequence of the second plurality of parameters.

In other embodiments a wireless power transfer system may include a source resonator configured to generate a first oscillating magnetic field characterized by a first plurality of parameters and a device resonator configured to capture electrical energy received wirelessly through a second oscillating magnetic field characterized by a second plurality of parameters different from the first plurality of parameters. In the system a wireless power converter that includes conversion circuitry may be configured and used to capture energy from the second oscillating magnetic field and to energize the source resonator to generate the first oscillating magnetic field. In embodiments the first plurality of parameters may include a first frequency different from a second frequency of the second plurality of parameters and first frequency may be approximately an integer multiple of the second frequency. In other embodiments the first plurality of parameters may include a first magnitude different from a second magnitude of the second plurality of parameters. The first plurality of parameters may also include a first frequency hopping sequence different from a second frequency hopping sequence of the second plurality of parameters, likewise the first plurality of parameters may include a first on/off sequence different from a second on/off sequence of the second plurality of parameters.

In other embodiments a wireless power coverter may be used for conversion by providing a configurable magnetic resonator, tuning the configurable magnetic resonator to capture a first oscillating magnetic field characterized by a first plurality of parameters, converting the oscillating magnetic field into electrical energy, storing the electrical energy as stored energy in an energy storage element, tuning the configurable magnetic resonator to generate a second oscillating magnetic field characterized by a second plurality of parameters, and energizing the configurable magnetic resonator using the stored energy to produce the second oscillating magnetic field.

In other embodiments a resonator for wireless power transfer may include a conductor forming one or more loops and having an inductance L, a network of capacitors, having a capacitance, C, and a desired electrical parameter, coupled to the conductor, the network having at least one capacitor of a first type with a first temperature profile of the electrical parameter, and the network having at least one capacitor of a second type with a second temperature profile of the electrical parameter. The first temperature profile of the first type of capacitor may be complementary to the second temperature profile of the second type of capacitor such that there is less change in the electrical parameter of the network due to a temperature change than when only a one type of capacitor is used. In embodiments these parameters may be chosen such that there is substantially zero change in the electrical parameter due to a temperature change. In embodiments the electrical parameter may be capacitance, resistance, inductance, and the like.

In embodiments a resonator for wireless power transfer may include a conductor forming one or more loops, two or more types of electrical components having different temperature profiles for an electrical parameter, the electrical components forming a network connected to said conductor, wherein the electrical components are arranged such that the temperature profiles of the components are complementary and there is less change in the electrical parameter of the circuit due to a temperature change than when onlyone type of component is used. In embodiments there parameters may be chosen such that there is substantially zero change in the electrical parameter due to a temperature change. In embodiments the electrical parameter may be capacitance, resistance, inductance, and the like.

In embodiments wireless power transfer may include a source high-Q magnetic resonator coupled to a power source and generating an oscillating magnetic field, at least one device high-Q magnetic resonator configured to convert the oscillating magnetic field to electrical energy used to power a light coupled to the at least one device resonator, and at least one repeater resonator, larger than the device resonator. The repeater resonator may be positioned further from the source resonator than the device resonator to improve the power transfer efficiency between the source resonator and the device resonator. The system may be used to wirelessly power lights substantially below a cabinet from a source mounted on a wall with a repeater resonator positioned inside a cabinet above the device resonators. In embodiments the source resonator and the device resonators may be separated by 10 cm or more, or 20 cm or more, and the like. The source and device resonators may be tuned to substantially same resonant frequency.

In embodiments a device for wireless power transfer may include a conductor forming at least one loop of a high-Q resonator, a capacitive part electrically coupled to the conductor, and a power and control circuit electrically coupled to the conductor. The power and control circuit may provide two or more modes of operation and the power and control circuit selecting how the high-Q resonator receives and generates an oscillating magnetic field. The two or more modes of operation may include a repeater mode of operation wherein the high-Q resonator is used to wirelessly receive power from a source and wirelessly transmit power to a receiver. The two or more modes of operation may include a source mode of operation wherein the high-Q resonator is used to generate a magnetic field. The two or more modes of operation may include a device mode of operation wherein the high-Q resonator is used to convert an oscillating magnetic field into electrical energy.

In embodiments a resonator may be operated by providing a conductor forming at least one loop of a high-Q resonator, providing a capacitive part electrically coupled to the conductor, providing a power and control circuit electrically coupled to the conductor, measuring one or more operational parameters of one or more components of the high-Q resonator, and selecting one of a plurality of modes of operation of the power and control circuit based on the one or more operational parameters. The plurality of modes of operation may include a repeater mode of operation wherein the high-Q resonator is used to wirelessly receive power from a source and wirelessly transmit power to a receiver. The plurality of modes of operation may include a source mode of operation wherein the high-Q resonator is used to generate a magnetic field. The plurality of modes of operation may include a device mode of operation wherein the high-Q resonator is used to convert an oscillating magnetic field into electrical energy. The resonator may further include a battery that may be charged during the repeater or device modes of operation.

In another embodiment some resonators may have an enclosure that includes a support plate, a sheet of good conductor larger than the size of the resonator and positioned on one side of the support plate, a separator piece for maintaining a separation distance between the resonator and the sheet of good conductor, and a cover of a non-lossy material covering the resonator, the separator, the sheet of good conductor and attached to the support plate. The sheet of conductor may be copper, aluminum, and the like. The sheet of the good conductor may exceed the size of the resonator by at least 1cm, or at least 2 cm or more on all sides.

In yet another embodiment a resonator for wireless power transfer may include a magnetic material having a length along an axis, and a first conductor wrapped around the magnetic material to form a plurality of loops around the axis, the plurality of loops having a span over the magnetic material, wherein the length is a largest dimension of the magnetic material that is parallel to a dipole moment created by the plurality of loops, and the span of the plurality of loops is about one half of the length. The resonator may include one or more capacitors or inductors couple to the conductor. In some embodiments the the resonant frequency of the resonator may be tuned by these capacitors.

An embodiment of a system disclosed herein includes a source resonator including at least one high-Q magnetic resonator configured to generate an oscillating magnetic field, the source resonator located at a distance from a vehicle having a device resonator, and a positioning system that provides information on a relative alignment of the source resonator and the device resonator.

The positioning system may include a display adapted to display the information on the relative alignment to an operator of the vehicle. The positioning system may include a camera. The positioning system may employ machine vision.

The positioning system may measure a current in the source resonator. The positioning system may measure a phase of the current in the source resonator. The positioning system may measure a voltage in the source resonator. The positioning system may measure a phase of the voltage in the source resonator. The positioning system may include one or more sensors to detect a foreign object in a vicinity of the source resonator or the device resonator. The source resonator may reduce an output power when the foreign object is detected.

The positioning system may include one or more mechanical actuators configured to move the source resonator into a desired alignment with the device resonator. The positioning system may include one or more mechanical actuators configured to move the device resonator into a desired alignment with the source resonator.

The positioning system may be coupled to a control system of the vehicle and may be configured to provide a control signal to the control system for an automated positioning of the vehicle.

The source resonator and the device resonator each have a quality factor Q>100.

A system disclosed herein includes a source resonator including at least one source high-Q magnetic resonator configured to generate an oscillating magnetic field, the source resonator located at a distance from a vehicle, a device resonator attached to the vehicle, the device resonator including at least one device high-Q magnetic resonator configured to receive power through the oscillating magnetic field when the source resonator and the device resonator are in a desired alignment, wherein the source resonator and device resonator are sized and oriented to substantially maintain wireless power transfer efficiency within a range of misalignment from the desired alignment.

The source resonator may be larger than the device resonator. The source resonator may be 35% larger than the device resonator. The source resonator and the device resonator may each include a conductor wrapped around at least one axis of a magnetic material and wherein a dipole moment of each of the source resonator and the device resonator may be aligned with a longest dimension of the vehicle when the source resonator and the device resonator are in the desired alignment. The device resonator may be integrated into a recessed portion of the vehicle. The device resonator may include an active temperature control.

The active temperature control may be coupled to a cooling system of the vehicle to provide controllable cooling of the device resonator. The active temperature control may be coupled to a heating system of the vehicle to provide controllable heating of the device resonator.

The device resonator and the source resonator may each have a quality factor Q>100.

In another aspect, an embodiment of a system may include an apparatus comprising a plurality of resonators electrically interconnected and arranged in an array to form a composite resonator for wireless power transfer, each one of the plurality of resonators including a block of a magnetic material having a conductor wire wrapped around a cross section thereof to form at least one loop enclosing an area substantially equal to the cross section, wherein the plurality of resonators are oriented so that a dipole moment of each one of the plurality of resonators is aligned with a dipole moment of each other one of the plurality of resonators. The apparatus may further include a second plurality of resonators arranged in the array, the second plurality of resonators may each have a second dipole moment aligned with a second dipole moment of each other one of the second plurality of resonators. In another aspect the apparatus of may further include a second plurality of resonators arranged in the array, the second plurality of resonators electrically connected to one another in an electrical circuit separate from the first plurality of resonators. The apparatus may include at least one block of magnetic material without a wrapped conductor within the composite resonator. The separation between adjacent ones of the plurality of resonators in the array may be less than ten percent of the largest of the width, the height, and the length of the array.

In yet another aspect, an embodiment of a system may include an apparatus for wireless power transfer comprising a plurality of blocks of a magnetic material arranged in an array, and a plurality of conductor wires, each one of the plurality of conductor wires wrapped around at least one of the plurality of blocks to form a loop thereabout, thereby forming a plurality of resonators, wherein the plurality of resonators are electrically connected to one another and oriented with parallel dipole moments. The plurality of loops formed by the plurality of conductor wires may be substantially coaxial. The plurality of resonators may be spatially separated from one another by a plurality of gaps. The apparatus may include a plurality of power and control circuits, each one of the plurality of power and control circuits electrically connected to a different one of the plurality of resonators. Each resonator may further include at least two capacitors electrically connected to the array for setting a resonant frequency and an impedance of the apparatus.

In one more aspect of the invention an integrated magnetic resonator and shield structure is contemplated that may include a sheet of electrical conductor having a first side and a second side, a block of magnetic material covering an area of the first side of the sheet of conductor; and a plurality of conductor wire segments, each having a first end and a second end, wherein the ends of wire segments are routed over the block of magnetic material between points on the first side of the sheet of conductor. In some embodiments of the structure each conductor wire segment may not completely wrap around all sides of the block of magnetic material and the largest dimension of the sheet of conductor may be larger than the largest dimension of the block of magnetic material. The sheet of conductor may include a plurality of individual isolated conductor segments and in some embodiments the isolated conductor segments may be shaped to electrically connect different said conductor wire segments. In other embodiments the isolated conductor segments may be shaped to connect at least two of the conductor wire segments in series and the conductor segments may be shaped to form paths that surround the block of magnetic material and are substantially confined to the area of the sheet of conductor not overlapped by the block of magnetic material. The conductor segments may be sized , shaped, and interconnected so as to substantially equalize electrical current distribution in all of the conductor segments during the operation of the resonator. In addition, the sheet of conductor of the structure may include a cutout of a substantial part of the area overlapped by the block of magnetic material. The block of magnetic material of the structure may be shaped to have a recessed cavity accessible through said cutout in the sheet of conductor allowing placement of power and control circuitry in some embodiments. Furthermore, the conductor wire segments may be arranged to be substantially parallel to each other. In some embodiments some conductor wire segments may be arranged to be substantially non-parallel to generate a structure with more than one magnetic dipole moment. The conductor segments may be fabricated on a printed circuit board, the conductor wire segments may include Litz wire. The conductor wire segments and the conductor shield of the structure may be formed on a flex circuit and shaped to receive a block of magnetic material.

In still another aspect of the invention an integrated magnetic resonator and shield structure is contemplated that may include a sheet of electrical conductor, a block of magnetic material positioned on the first of the sheet of the conductor overlapping and covering an area of the sheet of conductor; and a plurality of conductor wire segments, wherein the ends of said wire segments are coupled at distinct points of the sheet of conductor and the said conductor wire segments are routed over the block of magnetic material and wherein the conductor shield is used as a current path for the conductor wire segments during operation of said resonator.

In an embodiment, tiles of magnetic material of a resonator may be arranged to minimize the number of tile seams or joints that are substantially perpendicular to the dipole moment of the resonator. In another aspect thermal conductors may be positioned in contact with the tiles of the magnetic material and oriented to be substantially perpendicular to the dipole moment of the resonator. The thermal conductors may be connected to an additional heatsink that through convection, conduction, or radiation, dissipates the heat transferred by the thermal conductors. For resonators comprising a block of magnetic material that is composed of smaller tiles of magnetic material, the thermal conductors are preferably located such that they cover seams between the tiles, especially the seams that are perpendicular to the dipole moment of the resonator.

In embodiments, in a system adapted for wireless power transfer, a tunable resonant amplifier circuit may be provided for driving an inductive load having a varying impedance, the circuit comprising: a switching amplifier with a variable duty cycle; an inductive load; a connection between the inductive load and the switching amplifier, the connection including at least one tunable component; and a feedback loop for adjusting the at least one tunable component and the duty cycle of the amplifier, wherein the feedback loop adjusts the duty cycle of the amplifier and the at least one tunable component to maintain substantially zero voltage switching and zero current switching at the output of the amplifier under different load conditions of the inductive load. The at least one tunable component may include a tunable capacitor. The tunable capacitor may be in series with the inductive load. The tunable capacitor may be in parallel with the inductive load. The connection between the inductive load and the switching amplifier may include more than one tunable component. The switching amplifier may use a variable switching frequency. A bus voltage of the switching amplifier may be variable and used to control an amount of power delivered to the inductive load. The feedback loop may include an impedance measuring facility. The feedback loop may include a processor, the processor configured to monitor an impedance at an output of the switching amplifier and to compute an adjustment to the variable duty cycle of the switching amplifier such that zero voltage switching is substantially maintained. The processor may be configured to compute a second adjustment to at least one tunable component such that zero current switching is substantially maintained. The inductive load may include a high-Q magnetic resonator. The circuit may be used as a source in a wireless power transmission system.

In embodiments, a method of tuning a resonant amplifier circuit in a wireless power transfer facility may be provided that includes a connection between a switching amplifier and an inductive load having a varying impedance, the method comprising the steps of: measuring a number of parameters at an output of the switching amplifier; adjusting a duty cycle of the switching amplifier; and adjusting at least one tunable component in the connection between the switching amplifier and the inductive load, wherein adjusting the duty cycle of the switching amplifier and adjusting at least one tunable component are controlled to maintain a substantially zero voltage switching and a substantially zero current switching at the output of the switching amplifier under different load conditions of the inductive load. The at least one tunable component may include a tunable capacitor. Measuring a number of parameters may include measuring an impedance at the output of the switching amplifier. Further, computing necessary adjustments to the duty cycle of the switching amplifier and adjustments to the at least one tunable component may be based on the impedance, to maintain substantially zero voltage and substantially zero current switching at the output of the switching amplifier. The inductive load and at least a part of the connection between the switching amplifier and the inductive load may form a high-Q magnetic resonator. The circuit may be used as a source in a wireless power transmission system.

This disclosure references certain individual circuit components and elements such as capacitors, inductors, resistors, diodes, transformers, switches and the like; combinations of these elements as networks, topologies, circuits, and the like; and objects that have inherent characteristics such as "self-resonant" objects with capacitance or inductance distributed (or partially distributed, as opposed to solely lumped) throughout the entire object. It would be understood by one of ordinary skill in the art that adjusting and controlling variable components within a circuit or network may adjust the performance of that circuit or network and that those adjustments may be described generally as tuning, adjusting, matching, correcting, and the like. Other methods to tune or adjust the operating point of the wireless power transfer system may be used alone, or in addition to adjusting tunable components such as inductors and capacitors, or banks of inductors and capacitors. Those skilled in the art will recognize that a particular topology discussed in this disclosure can be implemented in a variety of other ways.

Any of the features described above may be used, alone or in combination, without departing from the scope of this disclosure. Other features, objects, and advantages of the systems and methods disclosed herein will be apparent from the following detailed description and figures.

The invention is defined by the independent claim. Preferred embodiments are provided by dependent claims.

## BRIEF DESCRIPTION OF FIGURES

Fig.1 is a system block diagram of wireless energy transfer configurations.
Figs. 2A-2F are exemplary structures and schematics of simple resonator structures.
Fig. 3 is a block diagram of a wireless source with a single-ended amplifier.
Fig. 4 is a block diagram of a wireless source with a differential amplifier.
Figs. 5A and 5B are block diagrams of sensing circuits.
Figs. 6A, 6B, and 6C are block diagrams of a wireless source.
Fig. 7 is a plot showing the effects of a duty cycle on the parameters of an amplifier.

Fig. 8 is a simplified circuit diagram of a wireless power source with a switching amplifier.

Fig. 9 shows plots of the effects of changes of parameters of a wireless power source.

Fig. 10 shows plots of the effects of changes of parameters of a wireless power source.

Figs. 11A, 11B, and 11C are plots showing the effects of changes of parameters of a wireless power source.

Fig. 12 shows plots of the effects of changes of parameters of a wireless power source.

Fig. 13 is a simplified circuit diagram of a wireless energy transfer system comprising a wireless power source with a switching amplifier and a wireless power device.

Fig. 14 shows plots of the effects of changes of parameters of a wireless power source.

Fig. 15 is a diagram of a resonator showing possible nonuniform magnetic field distributions due to irregular spacing between tiles of magnetic material.

Fig. 16 is a resonator with an arrangement of tiles in a block of magnetic material that may reduce hotspots in the magnetic material block.

Fig. 17A is a resonator with a block of magnetic material comprising smaller individual tiles and 17B and 17C is the resonator with additional strips of thermally conductive material used for thermal management.

Fig. 18A and 18B are resonator configurations comprising repeater resonators.

Fig. 19A and 19B are resonator configurations comprising repeater resonators.

Fig. 20A is a configuration with two repeater resonators 20B is a resonator configuration with a device resonator acting as a repeater resonator.

Fig. 21 is an under the cabinet lighting application comprising repeater resonators.

Fig. 22 is a source resonator integrated into an electrical outlet cover.

Fig. 23 is an exploded view of a resonator enclosure.

Fig. 24A is a vehicle with device resonators mounded on the underside, 24B is a source resonator integrated into a mat, 24C is a vehicle with a device resonator and a source integrated with a mat, and 24D is a robot with a device resonator mounted to the underside.

Fig. 25 is a graph showing capacitance changes due to temperature of one ceramic capacitor.

Fig. 26A are example capacitance versus temperature profiles of two components which can be used for passive compensation 26B are example capacitance versus temperature profiles of three components which can be used for passive compensations.

Fig. 27A is diagram of a resonator showing the span of the conductor, 27B is a cross section of resonator that has a hollow compartment.

Fig. 28A is an isometric view of a resonator with a conductor shield comprising flaps, 28B is a side view of a resonator with a conductor shield comprising flaps.

Fig. 29 is a diagram of a system utilizing a repeater resonator with a desk environment.

Fig. 30 is a diagram of a system utilizing a resonator that may be operated in multiple modes.

Fig. 31 is a circuit block diagram of the power and control circuitry of a resonator configured to have multiple modes of operation.

Fig. 32A is a block diagram of a configuration of a system utilizing a wireless power converter, 32B is a block diagram of a configuration of a system utilizing a wireless power converter that may also function as a repeater.

Fig. 33 is a block diagram showing different configurations and uses of a wireless power converter.

Fig. 34A is a block diagram of a wireless power converter that uses two separate resonators and a AC to DC converter, 34B is a block diagram of a wireless power converter that uses two separate resonators and an AC to AC converter.

Fig. 35 is a circuit block diagram of a wireless power converter utilizing one resonator.

Fig. 36A,36B are circuit diagrams of system configurations utilizing a wireless power converter with differently sized resonators.

Fig. 37 is a diagram showing relative source and device resonator dimensions to allow lateral displacement or side to side positioning uncertainty of a vehicle.

Fig. 38A is a resonator comprising a single block of magnetic material, 38B, 38C, 38D are resonator comprising of multiple separate blocks of magnetic material.

Fig. 39A, 39B, 39C are isometric views of resonator configurations used for comparison of wirelss power transfer characteristics between resonators comprising one and more than one separate block of magnetic material.

Fig. 40 is an isometric view of a resonator comprising four separate blocks of magnetic material each wrapped with a conductor.

Fig. 41A is a top view of a resonator comprising two blocks of magnetic material with staggered conductor windings, 41B is a top view of a resonator comprising two block of magnetic material shaped to decrease the spacing between them.

Fig. 42A is an isometric view of a resonator with a conductor shield, 42B is an isometric view of an embodiment of a resonator with an integrated conductor shield, and 42C is an isometric view of a resonator with an integrated conductor shield with individual conductor segments.

Fig. 43A, 43B, 43C are the top, side, and front views of an embodiment of an integrated resonator-shield structure respectively.

Fig. 44 is an exploded view of an embodiment of an integrated resonator-shield structure.

Fig. 45A is the top view of an embodiment of an integrated resonator-shield structure with symmetric conductor segments on the conductor shield, 45B is an isometric view of another embodiment of an integrated resonator-shield structure.

Fig. 46A is an isometric view of an integrated resonator-shield structure with a cavity in the block of magnetic material, 46B is an isometric view of an embodiment of the conductor parts of the integrated resonator-shield structure.

Fig. 47 is an isometric view of an embodiment of an integrated resonator-shield structure with two dipole moments.

Fig 48 is a diagram showing application of wireless energy transfer to a surgical robot and a hospital bed.

Fig 49 is a diagram showing application of wireless energy transfer to a surgical robot and a hospital bed.

Fig. 50A is embodiment of a medical cart with wireless energy transfer, 50B is an embodiment of a computer cart with wireless energy transfer.

## DETAILED DESCRIPTION

As described above, this disclosure relates to wireless energy transfer using coupled electromagnetic resonators. However, such energy transfer is not restricted to electromagnetic resonators, and the wireless energy transfer systems described herein are more general and may be implemented using a wide variety of resonators and resonant objects.

As those skilled in the art will recognize, important considerations for resonator-based power transfer include resonator efficiency and resonator coupling. Extensive discussion of such issues, e.g., coupled mode theory (CMT), coupling coefficients and factors, quality factors (also referred to as Q-factors), and impedance matching is provided, for example, in U.S. patent application 12/789,611 published on September 23, 2010 as US 20100237709 and entitled "RESONATOR ARRAYS FOR WIRELESS ENERGY TRANSFER," and U.S. patent application 12/722,050 published on July 22, 2010 as US 20100181843 and entitled "WIRELESS ENERGY TRANSFER FOR REFRIGERATOR APPLICATION".

A resonator may be defined as a resonant structure that can store energy in at least two different forms, and where the stored energy oscillates between the two forms. The resonant structure will have a specific oscillation mode with a resonant (modal) frequency, $f$, and a resonant (modal) field. The angular resonant frequency, $\omega$, may be defined as $\omega = 2\pi f$ the resonant period, $T$, may be defined as $T = 1/f = 2\pi/\omega$, and the resonant wavelength, $\lambda$, may be defined as $\lambda = c/f$, where c is the speed of the associated field waves (light, for electromagnetic resonators). In the absence of loss mechanisms, coupling mechanisms or external energy supplying or draining mechanisms, the total amount of energy stored by the resonator, $W$, would stay fixed, but the form of the energy would oscillate between the two forms supported by the resonator, wherein one form would be maximum when the other is minimum and vice versa.

For example, a resonator may be constructed such that the two forms of stored energy are magnetic energy and electric energy. Further, the resonator may be constructed such that the electric energy stored by the electric field is primarily confined within the structure while the magnetic energy stored by the magnetic field is primarily in the region surrounding the resonator. In other words, the total electric and magnetic energies would be equal, but their localization would be different. Using such structures, energy exchange between at least two structures may be mediated by the resonant magnetic near-field of the at least two resonators. These types of resonators may be referred to as **magnetic resonators.**

An important parameter of resonators used in wireless power transmission systems is the **Quality Factor,** or *Q* **-factor,** or *Q*, of the resonator, which characterizes the energy decay and is inversely proportional to energy losses of the resonator. It may be defined as $Q = \omega * W/P$, where $P$ is the time-averaged power lost at steady state. That is, a resonator with a high-$Q$ has relatively low intrinsic losses and can store energy for a relatively long time. Since the resonator loses energy at its intrinsic decay rate, $2\Gamma$, its $Q$, also referred to as its intrinsic $Q$, is given by $Q = \omega/2\Gamma$. The quality factor also represents the number of oscillation periods, $T$, it takes for the energy in the resonator to decay by a factor of $e^{-2\pi}$. Note that the quality factor or intrinsic quality factor or $Q$ of the resonator is that due only to intrinsic loss mechanisms. The $Q$ of a resonator connected to, or coupled to a power generator, $g$, or load, $l$, may be called the **"loaded quality factor"** or the "loaded *Q"*. The $Q$ of a resonator in the presence of an extraneous object that is not intended to be part of the energy transfer system may be called the **"perturbed quality factor"** or the "perturbed *Q*".

Resonators, coupled through any portion of their near-fields may interact and exchange energy. The efficiency of this energy transfer can be significantly enhanced if the resonators operate at substantially the same resonant frequency. By way of example, but not limitation, imagine a source resonator with $Q_s$ and a device resonator with $Q_d$. High-Q wireless energy transfer systems may utilize resonators that are high-Q. The $Q$ of each resonator may be high. The geometric mean of the resonator $Q$'s, $\sqrt{Q_s Q_d}$ may also or instead be high.

The **coupling factor,** $k$, is a number between $0 \leq |k| \leq 1$, and it may be independent (or nearly independent) of the resonant frequencies of the source and device resonators , when those are placed at sub-wavelength distances. Rather the coupling factor $k$ may be determined mostly by the relative geometry and the distance between the source and device resonators where the physical decay-law of the field mediating their coupling is taken into account. The coupling coefficient used in CMT, $\kappa = k\sqrt{\omega_s \omega_d}/2$, may be a strong function of the resonant frequencies, as well as other properties of the resonator structures. In applications for wireless energy transfer utilizing the near-fields of the resonators, it is desirable to have the size of the resonator be much smaller than the resonant wavelength, so that power lost by radiation is reduced. In some embodiments, high-Q resonators are sub-wavelength structures. In some electromagnetic embodiments, high-Q resonator structures are designed to have resonant frequencies higher than 100 kHz. In other embodiments, the resonant frequencies may be less than 1 GHz.

In exemplary embodiments, the power radiated into the far-field by these sub wavelength resonators may be further reduced by lowering the resonant frequency of the resonators and the operating frequency of the system. In other embodiments, the far field radiation may be reduced by arranging for the far fields of two or more resonators to interfere destructively in the far field.

In a wireless energy transfer system a resonator may be used as a wireless energy source, a wireless energy capture device, a repeater or a combination thereof. In embodiments a resonator may alternate between transferring energy, receiving energy or relaying energy. In a wireless energy transfer system one or more magnetic resonators may be coupled to an energy source and be energized to produce an oscillating magnetic near-field. Other resonators that are within the oscillating magnetic near-fields may capture these fields and convert the energy into electrical energy that may be used to power or charge a load thereby enabling wireless transfer of useful energy.

The so-called "useful" energy in a useful energy exchange is the energy or power that must be delivered to a device in order to power or charge it at an acceptable rate. The transfer efficiency that corresponds to a useful energy exchange may be system or application-dependent. For example, high power vehicle charging applications that transfer kilowatts of power may need to be at least 80% efficient in order to supply useful amounts of power resulting in a useful energy exchange sufficient to recharge a vehicle battery without significantly heating up various components of the transfer system. In some consumer electronics applications, a useful energy exchange may include any energy transfer efficiencies greater than 10%, or any other amount acceptable to keep rechargeable batteries "topped off' and running for long periods of time. In implanted medical device applications, a useful energy exchange may be any exchange that does not harm the patient but that extends the life of a battery or wakes up a sensor or monitor or stimulator. In such applications, 100 mW of power or less may be useful. In distributed sensing applications, power transfer of microwatts may be useful, and transfer efficiencies may be well below 1%.

A useful energy exchange for wireless energy transfer in a powering or recharging application may be efficient, highly efficient, or efficient enough, as long as the wasted energy levels, heat dissipation, and associated field strengths are within tolerable limits and are balanced appropriately with related factors such as cost, weight, size, and the like.

The resonators may be referred to as source resonators, device resonators, first resonators, second resonators, repeater resonators, and the like. Implementations may include three (3) or more resonators. For example, a single source resonator may transfer energy to multiple device resonators or multiple devices. Energy may be transferred from a first device to a second, and then from the second device to the third, and so forth. Multiple sources may transfer energy to a single device or to multiple devices connected to a single device resonator or to multiple devices connected to multiple device resonators. Resonators may serve alternately or simultaneously as sources, devices, and/or they may be used to relay power from a source in one location to a device in another location. Intermediate electromagnetic resonators may be used to extend the distance range of wireless energy transfer systems and/or to generate areas of concentrated magnetic near-fields. Multiple resonators may be daisy-chained together, exchanging energy over extended distances and with a wide range of sources and devices. For example, a source resonator may transfer power to a device resonator via several repeater resonators. Energy from a source may be transferred to a first repeater resonator, the first repeater resonator may transfer the power to a second repeater resonator and the second to a third and so on until the final repeater resonator transfers its energy to a device resonator. In this respect the range or distance of wireless energy transfer may be extended and/or tailored by adding repeater resonators. High power levels may be split between multiple sources, transferred to multiple devices and recombined at a distant location.

The resonators may be designed using coupled mode theory models, circuit models, electromagnetic field models, and the like. The resonators may be designed to have tunable characteristic sizes. The resonators may be designed to handle different power levels. In exemplary embodiments, high power resonators may require larger conductors and higher current or voltage rated components than lower power resonators.

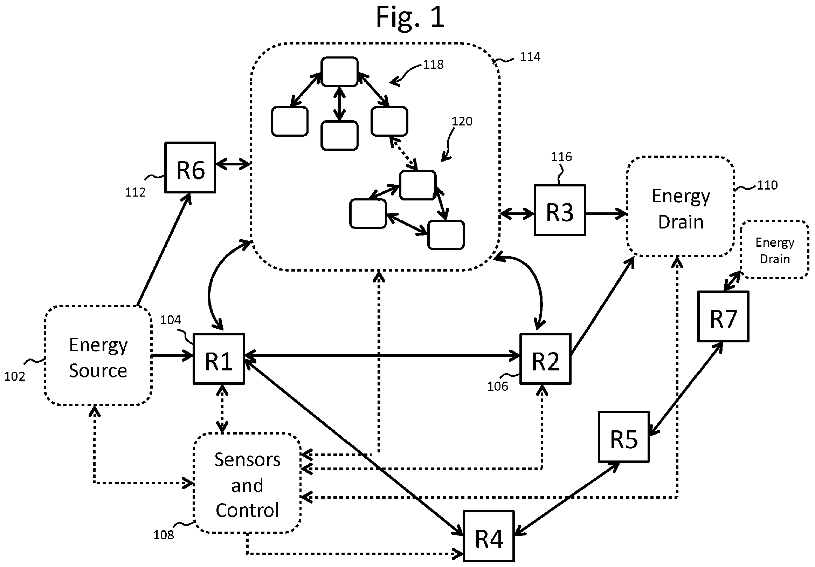

Fig. 1 shows a diagram of exemplary configurations and arrangements of a wireless energy transfer system.

A wireless energy transfer system may include at least one source resonator (R1)**104** (optionally R6, **112**) coupled to an energy source **102** and optionally a sensor and control unit **108.** The energy source may be a source of any type of energy capable of being converted into electrical energy that may be used to drive the source resonator **104.** The energy source may be a battery, a solar panel, the electrical mains, a wind or water turbine, an electromagnetic resonator, a generator, and the like. The electrical energy used to drive the magnetic resonator is converted into oscillating magnetic fields by the resonator. The oscillating magnetic fields may be captured by other resonators which may be device resonators (R2) **106,** (R3) **116** that are optionally coupled to an energy drain **110.** The oscillating fields may be optionally coupled to repeater resonators (R4, R5) that arc configured to extend or tailor the wireless energy transfer region. Device resonators may capture the magnetic fields in the vicinity of source resonator(s), repeater resonators and other device resonators and convert them into electrical energy that may be used by an energy drain. The energy drain **110** may be an electrical, electronic, mechanical or chemical device and the like configured to receive electrical energy. Repeater resonators may capture magnetic fields in the vicinity of source, device and repeater resonator(s) and may pass the energy on to other resonators.

A wireless energy transfer system may comprise a single source resonator **104** coupled to an energy source **102** and a single device resonator **106** coupled to an energy drain **110.** In embodiments a wireless energy transfer system may comprise multiple source resonators coupled to one or more energy sources and may comprise multiple device resonators coupled to one or more energy drains.

In embodiments the energy may be transferred directly between a source resonator **104** and a device resonator **106.** In other embodiments the energy may be transferred from one or more source resonators **104, 112** to one or more device resonators **106, 116** via any number of intermediate resonators which may be device resonators, source resonators, repeater resonators, and the like. Energy may be transferred via a network or arrangement of resonators **114** that may include subnetworks **118, 120** arranged in any combination of topologies such as token ring, mesh, ad hoc, and the like.

In embodiments the wireless energy transfer system may comprise a centralized sensing and control system **108.** In embodiments parameters of the resonators, energy sources, energy drains, network topologies, operating parameters, etc. may be monitored and adjusted from a control processor to meet specific operating parameters of the system. A central control processor may adjust parameters of individual components of the system to optimize global energy transfer efficiency, to optimize the amount of power transferred, and the like. Other embodiments may be designed to have a substantially distributed sensing and control system. Sensing and control may be incorporated into each resonator or group of resonators, energy sources, energy drains, and the like and may be configured to adjust the parameters of the individual components in the group to maximize the power delivered, to maximize energy transfer efficiency in that group and the like.

In embodiments, components of the wireless energy transfer system may have wireless or wired data communication links to other components such as devices, sources, repeaters, power sources, resonators, and the like and may transmit or receive data that can be used to enable the distributed or centralized sensing and control. A wireless communication channel may be separate from the wireless energy transfer channel, or it may be the same. In one embodiment the resonators used for power exchange may also be used to exchange information. In some cases, information may be exchanged by modulating a component in a source or device circuit and sensing that change with port parameter or other monitoring equipment. Resonators may signal each other by tuning, changing, varying, dithering, and the like, the resonator parameters such as the impedance of the resonators which may affect the reflected impedance of other resonators in the system. The systems and methods described herein may enable the simultaneous transmission of power and communication signals between resonators in wireless power transmission systems, or it may enable the transmission of power and communication signals during different time periods or at different frequencies using the same magnetic fields that are used during the wireless energy transfer. In other embodiments wireless communication may be enabled with a separate wireless communication channel such as WiFi, Bluetooth, Infrared, and the like.

In embodiments, a wireless energy transfer system may include multiple resonators and overall system performance may be improved by control of various elements in the system. For example, devices with lower power requirements may tune their resonant frequency away from the resonant frequency of a high-power source that supplies power to devices with higher power requirements. In this way, low and high power devices may safely operate or charge from a single high power source. In addition, multiple devices in a charging zone may find the power available to them regulated according to any of a variety of consumption control algorithms such as First-Come-First-Serve, Best Effort, Guaranteed Power, etc. The power consumption algorithms may be hierarchical in nature, giving priority to certain users or types of devices, or it may support any number of users by equally sharing the power that is available in the source. Power may be shared by any of the multiplexing techniques described in this disclosure.

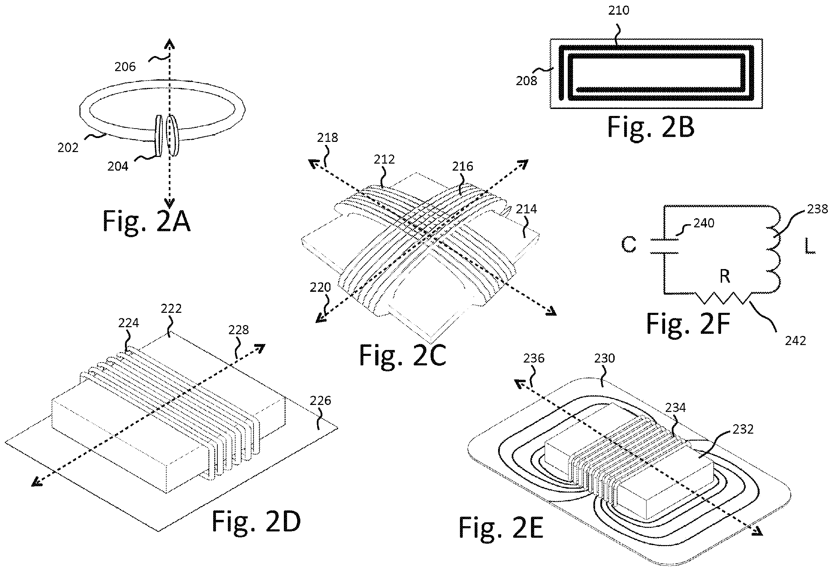

In embodiments electromagnetic resonators may be realized or implemented using a combination of shapes, structures, and configurations. Electromagnetic resonators may include an inductive element, a distributed inductance, or a combination of inductances with a total inductance, $L$, and a capacitive element, a distributed capacitance, or a combination of capacitances, with a total capacitance, $C$. A minimal circuit model of an electromagnetic resonator comprising capacitance, inductance and resistance, is shown in Fig. 2F. The resonator may include an inductive element **238** and a capacitive element **240.** Provided with initial energy, such as electric field energy stored in the capacitor **240,** the system will oscillate as the capacitor discharges transferring energy into magnetic field energy stored in the inductor **238** which in turn transfers energy back into electric field energy stored in the capacitor **240**. Intrinsic losses in these electromagnetic resonators include losses due to resistance in the inductive and capacitive elements and to radiation losses, and arc represented by the resistor, R, **242** in Fig. 2F.

Fig. 2A shows a simplified drawing of an exemplary magnetic resonator structure. The magnetic resonator may include a loop of conductor acting as an inductive element **202** and a capacitive element **204** at the ends of the conductor loop. The inductor **202** and capacitor **204** of an electromagnetic resonator may be bulk circuit elements, or the inductance and capacitance may be distributed and may result from the way the conductors are formed, shaped, or positioned, in the structure.

For example, the inductor **202** may be realized by shaping a conductor to enclose a surface area, as shown in Figs. 2A. This type of resonator may be referred to as a capacitively-loaded loop inductor or a capacitively-loaded conducting loop. Note that we may use the terms "loop" or "coil" to indicate generally a conducting structure (wire, tube, strip, etc.), enclosing a surface of any shape and dimension, with any number of turns. In Fig. 2A, the enclosed surface area is circular, but the surface may be any of a wide variety of other shapes and sizes and may be designed to achieve certain system performance specifications and/or to fit within certain volumes or spaces. In embodiments the inductance may be realized using inductor elements, distributed inductance, networks, arrays, series and parallel combinations of inductors and inductances, and the like. The inductance may be fixed or variable and may be used to vary impedance matching as well as resonant frequency operating conditions.

There are a variety of ways to realize the capacitance required to achieve the desired resonant frequency for a resonator structure. Capacitor plates **204** may be formed and utilized as shown in Fig. 2A, or the capacitance may be distributed and be realized between adjacent windings of a multi-loop conductor. The capacitance may be realized using capacitor elements, distributed capacitance, networks, arrays, series and parallel combinations of capacitances, and the like. The capacitance may be fixed or variable and may be used to vary impedance matching as well as resonant frequency operating conditions.

The inductive elements used in magnetic resonators may contain more than one loop and may spiral inward or outward or up or down or in some combination of directions. In general, the magnetic resonators may have a variety of shapes, sizes and number of turns and they may be composed of a variety of conducing materials. The conductor **210,** for example, may be a wire, a Litz wire, a ribbon, a pipe, a trace formed from conducting ink, paint, gels, and the like or from single or multiple traces printed on a circuit board. An exemplary embodiment of a trace pattern on a substrate **208** forming inductive loops is depicted in Fig. 2B.

In embodiments the inductive elements maybe formed using magnetic materials of any size, shape thickness, and the like, and of materials with a wide range of permeability and loss values. These magnetic materials may be solid blocks, they may enclose hollow volumes, they may be formed from many smaller pieces of magnetic material tiled and or stacked together, and they may be integrated with conducting sheets or enclosures made from highly conducting materials. Conductors may be wrapped around the magnetic materials to generate the magnetic field. These conductors may be wrapped around one or more than one axis of the structure. Multiple conductors may be wrapped around the magnetic materials and combined in parallel, or in series, or via a switch to form customized near-field patterns and/or to orient the dipole moment of the structure. Examples of resonators comprising magnetic material are depicted in Figs. 2C, 2D, 2E. In Fig. 2D the resonator comprises loops of conductor **224** wrapped around a core of magnetic material **222** creating a structure that has a magnetic dipole moment **228** that is parallel to the axis of the loops of the conductor **224**. The resonator may comprise multiple loops of conductor **216, 212** wrapped in orthogonal directions around the magnetic material **214** forming a resonator with a magnetic dipole moment **218, 220** that may be oriented in more than one direction as depicted in Fig. 2C, depending on how the conductors are driven.

An electromagnetic resonator may have a characteristic, natural, or resonant frequency determined by its physical properties. This resonant frequency is the frequency at which the energy stored by the resonator oscillates between that stored by the electric field, $W_E$, ($W_E = q^2/2C$, where $q$ is the charge on the capacitor, $C$) and that stored by the magnetic field, $W_B$, ($W_B = Li^2/2$, where $i$ is the current through the inductor, $L$) of the resonator. The frequency at which this energy is exchanged may be called the characteristic frequency, the natural frequency, or the resonant frequency of the resonator, and is given by $\omega$,

$$\omega = 2\pi f = \sqrt{\frac{1}{LC}} \, .$$

The resonant frequency of the resonator may be changed by tuning the inductance, $L$, and/or the capacitance, $C$, of the resonator. In one embodiment system parameters are dynamically adjustable or tunable to achieve as close as possible to optimal operating conditions. However, based on the discussion above, efficient enough energy exchange may be realized even if some system parameters are not variable or components are not capable of dynamic adjustment.

In embodiments a resonator may comprise an inductive element coupled to more than one capacitor arranged in a network of capacitors and circuit elements. In embodiments the coupled network of capacitors and circuit elements may be used to define more than one resonant frequency of the resonator. In embodiments a resonator may be resonant, or partially resonant, at more than one frequency.

In embodiments, a wireless power source may comprise of at least one resonator coil coupled to a power supply, which may be a switching amplifier, such as a class-D amplifier or a class-E amplifier or a combination thereof. In this case, the resonator coil is effectively a power load to the power supply. In embodiments, a wireless power device may comprise of at least one resonator coil coupled to a power load, which may be a switching rectifier, such as a class-D rectifier or a class-E rectifier or a combination thereof. In this case, the resonator coil is effectively a power supply for the power load, and the impedance of the load directly relates also to the work-drainage rate of the load from the resonator coil. The efficiency of power transmission between a power supply and a power load may be impacted by how closely matched the output impedance of the power source is to the input impedance of the load. Power may be delivered to the load at a maximum possible efficiency, when the input impedance of the load is equal to the complex conjugate of the internal impedance of the power supply. Designing the power supply or power load impedance to obtain a maximum power transmission efficiency is often called "impedance matching", and may also referred to as optimizing the ratio of useful-to-lost powers in the system. Impedance matching may be performed by adding networks or sets of elements such as capacitors, inductors, transformers, switches, resistors, and the like, to form impedance matching networks between a power supply and a power load. In embodiments, mechanical adjustments and changes in element positioning may be used to achieve impedance matching. For varying loads, the impedance matching network may include variable components that are dynamically adjusted to ensure that the impedance at the power supply terminals looking towards the load and the characteristic impedance of the power supply remain substantially complex conjugates of each other, even in dynamic environments and operating scenarios.

In embodiments, impedance matching may be accomplished by tuning the duty cycle, and/or the phase, and/or the frequency of the driving signal of the power supply or by tuning a physical component within the power supply, such as a capacitor. Such a tuning mechanism may be advantageous because it may allow impedance matching between a power supply and a load without the use of a tunable impedance matching network, or with a simplified tunable impedance matching network, such as one that has fewer tunable components for example. In embodiments, tuning the duty cycle, and/or frequency, and/or phase of the driving signal to a power supply may yield a dynamic impedance matching system with an extended tuning range or precision, with higher power, voltage and/or current capabilities, with faster electronic control, with fewer external components, and the like.

In some wireless energy transfer systems the parameters of the resonator such as the inductance may be affected by environmental conditions such as surrounding objects, temperature, orientation, number and position of other resonators and the like. Changes in operating parameters of the resonators may change certain system parameters, such as the efficiency of transferred power in the wireless energy transfer. For example, high-conductivity materials located near a resonator may shift the resonant frequency of a resonator and detune it from other resonant objects. In some embodiments, a resonator feedback mechanism is employed that corrects its frequency by changing a reactive element (e.g., an inductive element or capacitive element). In order to achieve acceptable matching conditions, at least some of the system parameters may need to be dynamically adjustable or tunable. All the system parameters may be dynamically adjustable or tunable to achieve approximately the optimal operating conditions. However, efficient enough energy exchange may be realized even if all or some system parameters are not variable. In some examples, at least some of the devices may not be dynamically adjusted. In some examples, at least some of the sources may not be dynamically adjusted. In some examples, at least some of the intermediate resonators may not be dynamically adjusted. In some examples, none of the system parameters may be dynamically adjusted.

In some embodiments changes in parameters of components may be mitigated by selecting components with characteristics that change in a complimentary or opposite way or direction when subjected to differences in operating environment or operating point. In embodiments, a system may be designed with components, such as capacitors, that have an opposite dependence or parameter fluctuation due to temperature, power levels, frequency, and the like. In some embodiments, the component values as a function of temperature may be stored in a look-up table in a system microcontroller and the reading from a temperature sensor may be used in the system control feedback loop to adjust other parameters to compensate for the temperature induced component value changes.

In some embodiments the changes in parameter values of components may be compensated with active tuning circuits comprising tunable components. Circuits that monitor the operating environment and operating point of components and system may be integrated in the design. The monitoring circuits may provide the signals necessary to actively compensate for changes in parameters of components. For example, a temperature reading may be used to calculate expected changes in, or to indicate previously measured values of, capacitance of the system allowing compensation by switching in other capacitors or tuning capacitors to maintain the desired capacitance over a range of temperatures. In embodiments, the RF amplifier switching waveforms may be adjusted to compensate for component value or load changes in the system. In some embodiments the changes in parameters of components may be compensated with active cooling, heating, active environment conditioning, and the like.

The parameter measurement circuitry may measure or monitor certain power, voltage, and current, signals in the system, and processors or control circuits may adjust certain settings or operating parameters based on those measurements. In addition the magnitude and phase of voltage and current signals, and the magnitude of the power signals, throughout the system may be accessed to measure or monitor the system performance. The measured signals referred to throughout this disclosure may be any combination of port parameter signals, as well as voltage signals, current signals, power signals, temperatures signals and the like. These parameters may be measured using analog or digital techniques, they may be sampled and processed, and they may be digitized or converted using a number of known analog and digital processing techniques. In embodiments, preset values of certain measured quantities are loaded in a system controller or memory location and used in various feedback and control loops. In embodiments, any combination of measured, monitored, and/or preset signals may be used in feedback circuits or systems to control the operation of the resonators and/or the system.

Adjustment algorithms may be used to adjust the frequency, Q, and/or impedance of the magnetic resonators. The algorithms may take as inputs reference signals related to the degree of deviation from a desired operating point for the system and may output correction or control signals related to that deviation that control variable or tunable elements of the system to bring the system back towards the desired operating point or points. The reference signals for the magnetic resonators may be acquired while the resonators are exchanging power in a wireless power transmission system, or they may be switched out of the circuit during system operation. Corrections to the system may be applied or performed continuously, periodically, upon a threshold crossing, digitally, using analog methods, and the like.

In embodiments, lossy extraneous materials and objects may introduce potential reductions in efficiencies by absorbing the magnetic and/or electric energy of the resonators of the wireless power transmission system. Those impacts may be mitigated in various embodiments by positioning resonators to minimize the effects of the lossy extraneous materials and objects and by placing structural field shaping elements (e.g., conductive structures, plates and sheets, magnetic material structures, plates and sheets, and combinations thereof) to minimize their effect.

One way to reduce the impact of lossy materials on a resonator is to use high-conductivity materials, magnetic materials, or combinations thereof to shape the resonator fields such that they avoid the lossy objects. In an exemplary embodiment, a layered structure of high-conductivity material and magnetic material may tailor, shape, direct, reorient, etc. the resonator's electromagnetic fields so that they avoid lossy objects in their vicinity by deflecting the fields. Fig. 2D shows a top view of a resonator with a sheet of conductor **226** below the magnetic material that may be used to tailor the fields of the resonator so that they avoid lossy objects that may be below the sheet of conductor **226.** The layer or sheet of good **226** conductor may comprise any high conductivity materials such as copper, silver, aluminum, as may be most appropriate for a given application. In certain embodiments, the layer or sheet of good conductor is thicker than the skin depth of the conductor at the resonator operating frequency. The conductor sheet may be preferably larger than the size of the resonator, extending beyond the physical extent of the resonator.

In environments and systems where the amount of power being transmitted could present a safety hazard to a person or animal that may intrude into the active field volume, safety measures may be included in the system. In embodiments where power levels require particularized safety measures, the packaging, structure, materials, and the like of the resonators may be designed to provide a spacing or "keep away" zone from the conducting loops in the magnetic resonator. To provide further protection, high-Q resonators and power and control circuitry may be located in enclosures that confine high voltages or currents to within the enclosure, that protect the resonators and electrical components from weather, moisture, sand, dust, and other external elements, as well as from impacts, vibrations, scrapes, explosions, and other types of mechanical shock . Such enclosures call for attention to various factors such as thermal dissipation to maintain an acceptable operating temperature range for the electrical components and the resonator. In embodiments, enclosure may be constructed of non-lossy materials such as composites, plastics, wood, concrete, and the like and may be used to provide a minimum distance from lossy objects to the resonator components. A minimum separation distance from lossy objects or environments which may include metal objects, salt water, oil and the like, may improve the efficiency of wireless energy transfer. In embodiments, a "keep away" zone may be used to increase the perturbed Q of a resonator or system of resonators. In embodiments a minimum separation distance may provide for a more reliable or more constant operating parameters of the resonators.

In embodiments, resonators and their respective sensor and control circuitry may have various levels of integration with other electronic and control systems and subsystems. In some embodiments the power and control circuitry and the device resonators are completely separate modules or enclosures with minimal integration to existing systems, providing a power output and a control and diagnostics interface. In some embodiments a device is configured to house a resonator and circuit assembly in a cavity inside the enclosure, or integrated into the housing or enclosure of the device.

## Example Resonator Circuitry

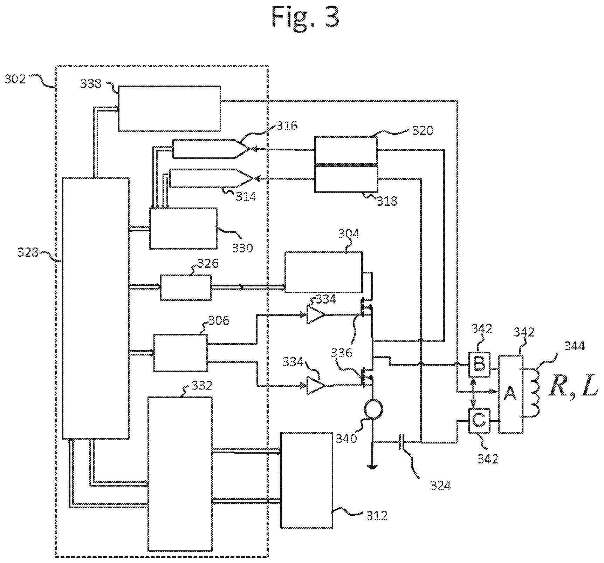

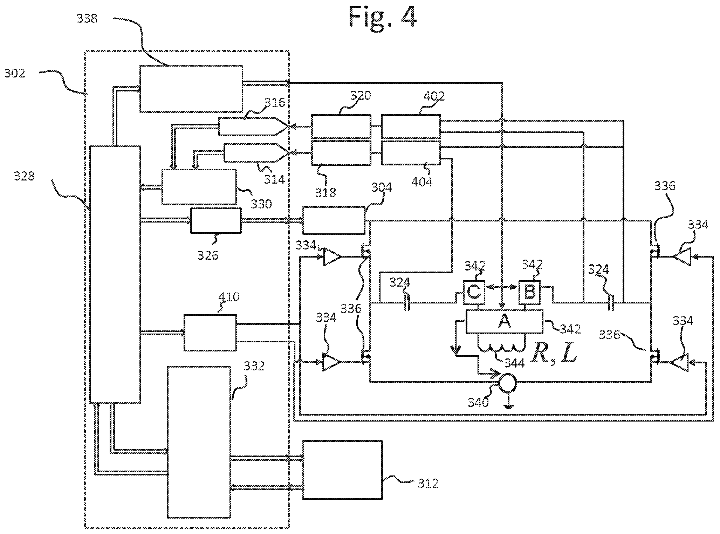

Figures 3 and 4 show high level block diagrams depicting power generation, monitoring, and control components for exemplary sources of a wireless energy transfer system. Fig. 3 is a block diagram of a source comprising a half-bridge switching power amplifier and some of the associated measurement, tuning, and control circuitry. Fig. 4 is a block diagram of a source comprising a full-bridge switching amplifier and some of the associated measurement, tuning, and control circuitry.

The half bridge system topology depicted in Fig. 3 may comprise a processing unit that executes a control algorithm **328**. The processing unit executing a control algorithm **328** may be a microcontroller, an application specific circuit, a field programmable gate array, a processor, a digital signal processor, and the like. The processing unit may be a single device or it may be a network of devices. The control algorithm may run on any portion of the processing unit. The algorithm may be customized for certain applications and may comprise a combination of analog and digital circuits and signals. The master algorithm may measure and adjust voltage signals and levels, current signals and levels, signal phases, digital count settings, and the like.

The system may comprise an optional source/device and/or source/other resonator communication controller **332** coupled to wireless communication circuitry **312**. The optional source/device and/or source/other resonator communication controller **332** may be part of the same processing unit that executes the master control algorithm, it may a part or a circuit within a microcontroller **302,** it may be external to the wireless power transmission modules, it may be substantially similar to communication controllers used in wire powered or battery powered applications but adapted to include some new or different functionality to enhance or support wireless power transmission.

The system may comprise a PWM generator **306** coupled to at least two transistor gate drivers **334** and may be controlled by the control algorithm. The two transistor gate drivers **334** may be coupled directly or via gate drive transformers to two power transistors **336** that drive the source resonator coil **344** through impedance matching network components **342**. The power transistors **336** may be coupled and powered with an adjustable DC supply **304** and the adjustable DC supply **304** may be controlled by a variable bus voltage, Vbus. The Vbus controller may be controlled by the control algorithm **328** and may be part of, or integrated into, a microcontroller **302** or other integrated circuits. The Vbus controller **326** may control the voltage output of an adjustable DC supply **304** which may be used to control power output of the amplifier and power delivered to the resonator coil **344.**

The system may comprise sensing and measurement circuitry including signal filtering and buffering circuits **318, 320** that may shape, modify, filter, process, buffer, and the like, signals prior to their input to processors and/or converters such as analog to digital converters (ADC) **314, 316,** for example. The processors and converters such as ADCs **314, 316** may be integrated into a microcontroller **302** or may be separate circuits that may be coupled to a processing core **330**. Based on measured signals, the control algorithm **328** may generate, limit, initiate, extinguish, control, adjust, or modify the operation of any of the PWM generator **306,** the communication controller **332,** the Vbus control **326,** the source impedance matching controller **338,** the filter/buffering elements, **318, 320,** the converters, **314, 316,** the resonator coil **344,** and may be part of, or integrated into, a microcontroller **302** or a separate circuit. The impedance matching networks **342** and resonator coils **344** may include electrically controllable, variable, or tunable components such as capacitors, switches, inductors, and the like, as described herein, and these components may have their component values or operating points adjusted according to signals received from the source impedance matching controller **338**. Components may be tuned to adjust the operation and characteristics of the resonator including the power delivered to and by the resonator, the resonant frequency of the resonator, the impedance of the resonator, the Q of the resonator, and any other coupled systems, and the like. The resonator may be any type or structure resonator described herein including a capacitively loaded loop resonator, a planar resonator comprising a magnetic material or any combination thereof.

The full bridge system topology depicted in Fig. 4 may comprise a processing unit that executes a master control algorithm **328**. The processing unit executing the control algorithm **328** may be a microcontroller, an application specific circuit, a field programmable gate array, a processor, a digital signal processor, and the like. The system may comprise a source/device and/or source/other resonator communication controller **332** coupled to wireless communication circuitry **312**. The source/device and/or source/other resonator communication controller **332** may be part of the same processing unit that executes that master control algorithm, it may a part or a circuit within a microcontroller **302,** it may be external to the wireless power transmission modules, it may be substantially similar to communication controllers used in wire powered or battery powered applications but adapted to include some new or different functionality to enhance or support wireless power transmission.

The system may comprise a PWM generator **410** with at least two outputs coupled to at least four transistor gate drivers **334** that may be controlled by signals generated in a master control algorithm. The four transistor gate drivers **334** may be coupled to four power transistors **336** directly or via gate drive transformers that may drive the source resonator coil **344** through impedance matching networks **342**. The power transistors **336** may be coupled and powered with an adjustable DC supply **304** and the adjustable DC supply **304** may be controlled by a Vbus controller **326** which may be controlled by a master control algorithm. The Vbus controller **326** may control the voltage output of the adjustable DC supply **304** which may be used to control power output of the amplifier and power delivered to the resonator coil **344.**

The system may comprise sensing and measurement circuitry including signal filtering and buffering circuits **318, 320** and differential/single ended conversion circuitry **402, 404** that may shape, modify, filter, process, buffer, and the like, signals prior to being input to processors and/or converters such as analog to digital converters (ADC) **314, 316.** The processors and/or converters such as ADC **314, 316** may be integrated into a microcontroller **302** or may be separate circuits that may be coupled to a processing core **330.** Based on measured signals, the master control algorithm may generate, limit, initiate, extinguish, control, adjust, or modify the operation of any of the PWM generator **410,** the communication controller **332,** the Vbus controller **326,** the source impedance matching controller **338,** the filter/buffering elements, **318, 320,** differential/single ended conversion circuitry **402, 404,** the converters, **314, 316,** the resonator coil **344,** and may be part of or integrated into a microcontroller **302** or a separate circuit.

Impedance matching networks **342** and resonator coils **344** may comprise electrically controllable, variable, or tunable components such as capacitors, switches, inductors, and the like, as described herein, and these components may have their component values or operating points adjusted according to signals received from the source impedance matching controller **338.** Components may be tuned to enable tuning of the operation and characteristics of the resonator including the power delivered to and by the resonator, the resonant frequency of the resonator, the impedance of the resonator, the Q of the resonator, and any other coupled systems, and the like. The resonator may be any type or structure resonator described herein including a capacitively loaded loop resonator, a planar resonator comprising a magnetic material or any combination thereof.

Impedance matching networks may comprise fixed value components such as capacitors, inductors, and networks of components as described herein. Parts of the impedance matching networks A, B and C, may comprise inductors, capacitors, transformers, and series and parallel combinations of such components, as described herein. In some embodiments, parts of the impedance matching networks A, B, and C, may be empty (short-circuited). In some embodiments, part B comprises a series combination of an inductor and a capacitor, and part C is empty.

The full bridge topology may allow operation at higher output power levels using the same DC bus voltage as an equivalent half bridge amplifier. The half bridge exemplary topology of Fig. 3 may provide a single-ended drive signal, while the exemplary full bridge topology of Fig. 4 may provide a differential drive to the source resonator **308.** The impedance matching topologies and components and the resonator structure may be different for the two systems, as discussed herein.

The exemplary systems depicted in Figs. 3 and 4 may further include fault detection circuitry **340** that may be used to trigger the shutdown of the microcontroller in the source amplifier or to change or interrupt the operation of the amplifier. This protection circuitry may comprise a high speed comparator or comparators to monitor the amplifier return current, the amplifier bus voltage (Vbus) from the DC supply **304,** the voltage across the source resonator **308** and/or the optional tuning board, or any other voltage or current signals that may cause damage to components in the system or may yield undesirable operating conditions. Preferred embodiments may depend on the potentially undesirable operating modes associated with different applications. In some embodiments, protection circuitry may not be implemented or circuits may not be populated. In some embodiments, system and component protection may be implemented as part of a master control algorithm and other system monitoring and control circuits. In embodiments, dedicated fault circuitry **340** may include an output (not shown) coupled to a master control algorithm **328** that may trigger a system shutdown, a reduction of the output power (e.g. reduction of Vbus), a change to the PWM generator, a change in the operating frequency, a change to a tuning element, or any other reasonable action that may be implemented by the control algorithm **328** to adjust the operating point mode, improve system performance, and/or provide protection.

As described herein, sources in wireless power transfer systems may use a measurement of the input impedance of the impedance matching network **342** driving source resonator coil **344** as an error or control signal for a system control loop that may be part of the master control algorithm. In exemplary embodiments, variations in any combination of three parameters may be used to tune the wireless power source to compensate for changes in environmental conditions, for changes in coupling, for changes in device power demand, for changes in module, circuit, component or subsystem performance, for an increase or decrease in the number or sources, devices, or repeaters in the system, for user initiated changes, and the like. In exemplary embodiments, changes to the amplifier duty cycle, to the component values of the variable electrical components such as variable capacitors and inductors, and to the DC bus voltage may be used to change the operating point or operating range of the wireless source and improve some system operating value. The specifics of the control algorithms employed for different applications may vary depending on the desired system performance and behavior.

Impedance measurement circuitry such as described herein, and shown in Figs. 3 and 4, may be implemented using two-channel simultaneous sampling ADCs and these ADCs may be integrated into a microcontroller chip or may be part of a separate circuit. Simultaneously sampling of the voltage and current signals at the input to a source resonator's impedance matching network and/or the source resonator, may yield the phase and magnitude information of the current and voltage signals and may be processed using known signal processing techniques to yield complex impedance parameters. In some embodiments, monitoring only the voltage signals or only the current signals may be sufficient.

The impedance measurements described herein may use direct sampling methods which may be relatively simpler than some other known sampling methods. In embodiments, measured voltage and current signals may be conditioned, filtered and scaled by filtering/buffering circuitry before being input to ADCs. In embodiments, the filter/buffering circuitry may be adjustable to work at a variety of signal levels and frequencies, and circuit parameters such as filter shapes and widths may be adjusted manually, electronically, automatically, in response to a control signal, by the master control algorithm, and the like. Exemplary embodiments of filter/buffering circuits arc shown in Figs. 3, 4, and 5.

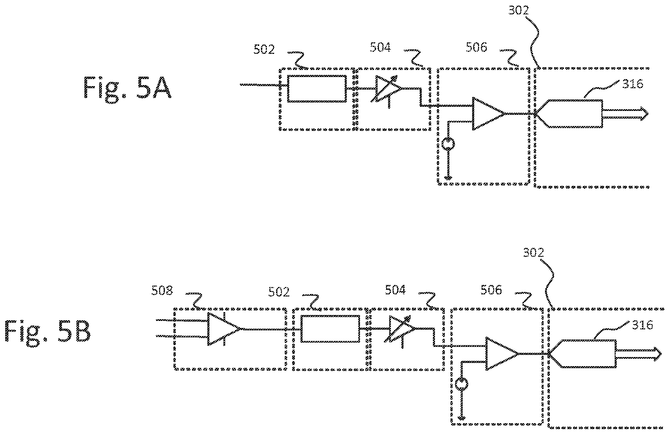

Fig. 5 shows more detailed views of exemplary circuit components that may be used in filter/buffering circuitry. In embodiments, and depending on the types of ADCs used in the system designs, single-ended amplifier topologies may reduce the complexity of the analog signal measurement paths used to characterize system, subsystem, module and/or component performance by eliminating the need for hardware to convert from differential to single-ended signal formats. In other implementations, differential signal formats may be preferable. The implementations shown in Fig. 5 are exemplary, and should not be construed to be the only possible way to implement the functionality described herein. Rather it should be understood that the analog signal path may employ components with different input requirements and hence may have different signal path architectures.

In both the single ended and differential amplifier topologies, the input current to the impedance matching networks **342** driving the resonator coils **344** may be obtained by measuring the voltage across a capacitor **324,** or via a current sensor of some type. For the exemplary single-ended amplifier topology in Fig. 3, the current may be sensed on the ground return path from the impedance matching network **342.** For the exemplary differential power amplifier depicted in Fig. 4, the input current to the impedance matching networks **342** driving the resonator coils **344** may be measured using a differential amplifier across the terminals of a capacitor **324** or via a current sensor of some type. In the differential topology of Fig. 4, the capacitor **324** may be duplicated at the negative output terminal of the source power amplifier.

In both topologies, after single ended signals representing the input voltage and current to the source resonator and impedance matching network arc obtained, the signals may be filtered **502** to obtain the desired portions of the signal waveforms. In embodiments, the signals may be filtered to obtain the fundamental component of the signals. In embodiments, the type of filtering performed, such as low pass, bandpass, notch, and the like, as well as the filter topology used, such as elliptical, Chebyshev, Butterworth, and the like, may depend on the specific requirements of the system. In some embodiments, no filtering will be required.

The voltage and current signals may be amplified by an optional amplifier **504.** The gain of the optional amplifier **504** may be fixed or variable. The gain of the amplifier may be controlled manually, electronically, automatically, in response to a control signal, and the like. The gain of the amplifier may be adjusted in a feedback loop, in response to a control algorithm, by the master control algorithm, and the like. In embodiments, required performance specifications for the amplifier may depend on signal strength and desired measurement accuracy, and may be different for different application scenarios and control algorithms.

The measured analog signals may have a DC offset added to them, **506,** which may be required to bring the signals into the input voltage range of the ADC which for some systems may be 0 to 3.3V. In some systems this stage may not be required, depending on the specifications of the particular ADC used.

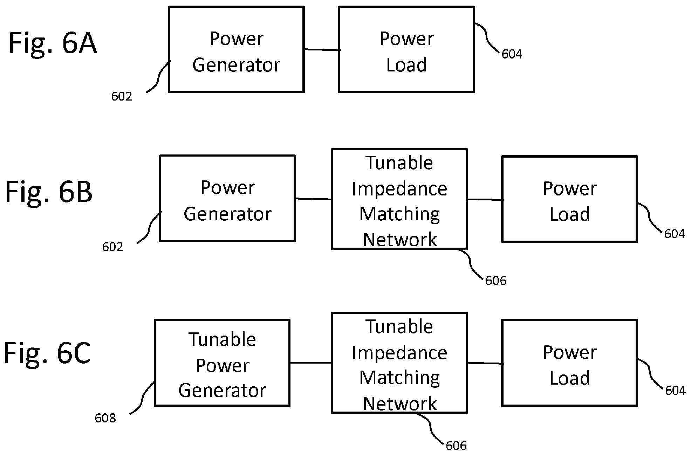

As described above, the efficiency of power transmission between a power generator and a power load may be impacted by how closely matched the output impedance of the generator is to the input impedance of the load. In an exemplary system as shown in Fig. 6A, power may be delivered to the load at a maximum possible efficiency, when the input impedance of the load **604** is equal to the complex conjugate of the internal impedance of the power generator or the power amplifier **602.** Designing the generator or load impedance to obtain a high and/or maximum power transmission efficiency may be called "impedance matching". Impedance matching may be performed by inserting appropriate networks or sets of elements such as capacitors, resistors, inductors, transformers, switches and the like, to form an impedance matching network **606,** between a power generator **602** and a power load **604** as shown in Fig. 6B. In other embodiments, mechanical adjustments and changes in element positioning may be used to achieve impedance matching. As described above for varying loads, the impedance matching network **606** may include variable components that are dynamically adjusted to ensure that the impedance at the generator terminals looking towards the load and the characteristic impedance of the generator remain substantially complex conjugates of each other, even in dynamic environments and operating scenarios. In embodiments, dynamic impedance matching may be accomplished by tuning the duty cycle, and/or the phase, and/or the frequency of the driving signal of the power generator or by tuning a physical component within the power generator, such as a capacitor,as depicted in Fig. 6C. Such a tuning mechanism may be advantageous because it may allow impedance matching between a power generator **608** and a load without the use of a tunable impedance matching network, or with a simplified tunable impedance matching network **606,** such as one that has fewer tunable components for example. In embodiments, tuning the duty cycle, and/or frequency, and/or phase of the driving signal to a power generator may yield a dynamic impedance matching system with an extended tuning range or precision, with higher power, voltage and/or current capabilities, with faster electronic control, with fewer external components, and the like. The impedance matching methods, architectures, algorithms, protocols, circuits, measurements, controls, and the like, described below, may be useful in systems where power generators drive high-Q magnetic resonators and in high-Q wireless power transmission systems as described herein. In wireless power transfer systems a power generator may be a power amplifier driving a resonator, sometimes referred to as a source resonator, which may be a load to the power amplifier. In wireless power applications, it may be preferable to control the impedance matching between a power amplifier and a resonator load to control the efficiency of the power delivery from the power amplifier to the resonator. The impedance matching may be accomplished, or accomplished in part, by tuning or adjusting the duty cycle, and/or the phase, and/or the frequency of the driving signal of the power amplifier that drives the resonator.

**Efficiency of switching amplifiers**

Switching amplifiers, such as class D, E, F amplifiers, and the like or any combinations thereof, deliver power to a load at a maximum efficiency when no power is dissipated on the switching elements of the amplifier. This operating condition may be accomplished by designing the system so that the switching operations which arc most critical (namely those that are most likely to lead to switching losses) are done when both the voltage across the switching element and the current through the switching element are zero. These conditions may be referred to as Zero Voltage Switching (ZVS) and Zero Current Switching (ZCS) conditions respectively. When an amplifier operates at ZVS and ZCS either the voltage across the switching element or the current through the switching element is zero and thus no power can be dissipated in the switch. Since a switching amplifier may convert DC (or very low frequency AC) power to AC power at a specific frequency or range of frequencies, a filter may be introduced before the load to prevent unwanted harmonics that may be generated by the switching process from reaching the load and being dissipated there. In embodiments, a switching amplifier may be designed to operate at maximum efficiency of power conversion, when connected to a resonant load, with a nontrivial quality factor (say Q>5), and of a specific impedance $Z_o^* = R_o + jX_o$, which leads to simultaneous ZVS and ZCS. We define $Z_o = R_o - jX_o$ as the characteristic impedance of the amplifier, so that achieving maximum power transmission efficiency is equivalent to impedance matching the resonant load to the characteristic impedance of the amplifier.

In a switching amplifier, the switching frequency of the switching elements, $f_{switch}$, wherein $f_{switch} = \omega/2\pi$ and the duty cycle, $dc$, of the ON switch-state duration of the switching elements may be the same for all switching elements of the amplifier. In this specification, we will use the term "class D" to denote both class D and class DE amplifiers, that is, switching amplifiers with $dc<=50\%$.

The value of the characteristic impedance of the amplifier may depend on the operating frequency, the amplifier topology, and the switching sequence of the switching elements. In some embodiments, the switching amplifier may be a half-bridge topology and, in some embodiments, a full-bridge topology. In some embodiments, the switching amplifier may be class D and, in some embodiments, class E. In any of the above embodiments, assuming the elements of the bridge are symmetric, the characteristic impedance of the switching amplifier has the form

$$R_o = F_R(dc)/\omega C_a , X_o = F_X(dc)/\omega C_a , \qquad (1)$$

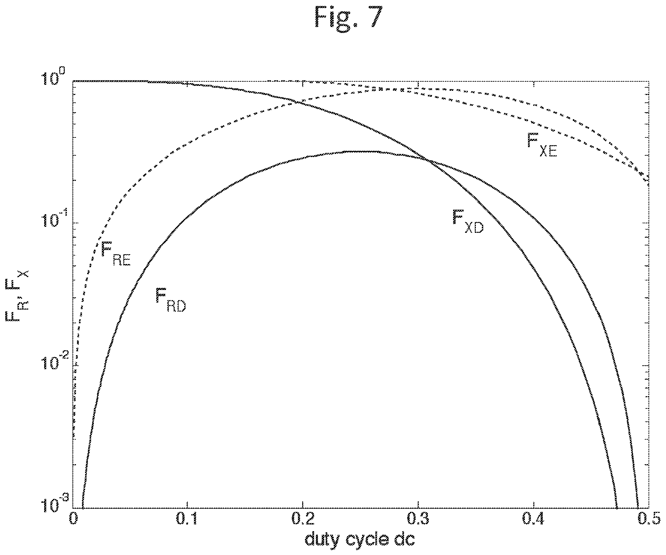

where $dc$ is the duty cycle of ON switch-state of the switching elements, the functions $F_R(dc)$ and $F_X(dc)$ arc plotted in Fig. 7 (both for class D and E), $\omega$ is the frequency at which the switching elements are switched, and $C_a = n_a C_{switch}$ where $C_{switch}$ is the capacitance across each switch, including both the transistor output capacitance and also possible external capacitors placed in parallel with the switch, while $n_a = 1$ for a full bridge and $n_a = 2$ for a half bridge. For class D, one can also write the analytical expressions

$$F_R(dc) = sin^2 u/\pi, \quad F_X(dc) = (u - sinu * cosu)/\pi , \qquad (2)$$

where $u = \pi(1 - 2 * dc)$, indicating that the characteristic impedance level of a class D amplifier decreases as the duty cycle, $dc$, increases towards 50%. For a class D amplifier operation with dc=50%, achieving ZVS and ZCS is possible only when the switching elements have practically no output capacitance ($C_a = 0$) and the load is exactly on resonance ($X_o = 0$), while $R_o$ can be arbitrary.

**Impedance Matching Networks**

In applications, the driven load may have impedance that is very different from the characteristic impedance of the external driving circuit, to which it is connected. Furthermore, the driven load may not be a resonant network. An Impedance Matching Network (IMN) is a circuit network that may be connected before a load as in Fig. 6B, in order to regulate the impedance that is seen at the input of the network consisting of the IMN circuit and the load. An IMN circuit may typically achieve this regulation by creating a resonance close to the driving frequency. Since such an IMN circuit accomplishes all conditions needed to maximize the power transmission efficiency from the generator to the load (resonance and impedance matching - ZVS and ZCS for a switching amplifier), in embodiments, an IMN circuit may be used between the driving circuit and the load.

For an arrangement shown in Fig. 6B, let the input impedance of the network consisting of the Impedance Matching Network (IMN) circuit and the load (denoted together from now on as IMN+load) be $Z_l = R_l(\omega) + jX_l(\omega)$. The impedance matching conditions of this network to the external circuit with characteristic impedance $Z_o = R_o - jX_o$ arc then $R_l(\omega) = R_o$, $X_l(\omega) = X_o$.

## Methods for tunable Impedance Matching of a variable load

In embodiments where the load may be variable, impedance matching between the load and the external driving circuit, such as a linear or switching power amplifier, may be achieved by using adjustable/tunable components in the IMN circuit that may be adjusted to match the varying load to the fixed characteristic impedance $Z_o$ of the external circuit (Fig. 6B). To match both the real and imaginary parts of the impedance two tunable/variable elements in the IMN circuit may be needed.

In embodiments, the load maybe inductive (such as a resonator coil) with impedance $R + j\omega L$, so the two tunable elements in the IMN circuit may be two tunable capacitance networks or one tunable capacitance network and one tunable inductance network or one tunable capacitance network and one tunable mutual inductance network.

In embodiments where the load may be variable, the impedance matching between the load and the driving circuit, such as a linear or switching power amplifier, may be achieved by using adjustable/tunable components or parameters in the amplifier circuit that may be adjusted to match the characteristic impedance $Z_o$ of the amplifier to the varying (due to load variations) input impedance of the network consisting of the IMN circuit and the load (TMN+load), where the IMN circuit may also be tunable (Fig. 6C). To match both the real and imaginary parts of the impedance, a total of two tunable/variable elements or parameters in the amplifier and the IMN circuit may be needed. The disclosed impedance matching method can reduce the required number of tunable/variable elements in the IMN circuit or even completely eliminate the requirement for tunable/variable elements in the IMN circuit. In some examples, one tunable element in the power amplifier and one tunable element in the IMN circuit may be used. In some examples, two tunable elements in the power amplifier and no tunable element in the IMN circuit may be used.

In embodiments, the tunable elements or parameters in the power amplifier may be the frequency, amplitude, phase, waveform, duty cycle and the like of the drive signals applied to transistors, switches, diodes and the like.

In embodiments, the power amplifier with tunable characteristic impedance may be a tunable switching amplifier of class D, E, F or any combinations thereof. Combining Equations (1) and (2), the impedance matching conditions for this network are

$$R_l(\omega) = F_R(dc)/\omega C_a \ , \ X_l(\omega) = F_X(dc)/\omega C_a \qquad (3).$$

In some examples of a tunable switching amplifier, one tunable element may be the capacitance $C_a$, which may be tuned by tuning the external capacitors placed in parallel with the switching elements.

In some examples of a tunable switching amplifier, one tunable element may be the duty cycle $dc$ of the ON switch-state of the switching elements of the amplifier. Adjusting the duty cycle, $dc$, via Pulse Width Modulation (PWM) has been used in switching amplifiers to achieve output power control. In this specification, we disclose that PWM may also be used to achieve impedance matching, namely to satisfy Eqs.(3), and thus maximize the amplifier efficiency.

In some examples of a tunable switching amplifier one tunable element may be the switching frequency, which is also the driving frequency of the IMN+load network and may be designed to be substantially close to the resonant frequency of the IMN+load network. Tuning the switching frequency may change the characteristic impedance of the amplifier and the impedance of the IMN+load network. The switching frequency of the amplifier may be tuned appropriately together with one more tunable parameters, so that Eqs.(3) are satisfied.

A benefit of tuning the duty cycle and/or the driving frequency of the amplifier for dynamic impedance matching is that these parameters can be tuned electronically, quickly, and over a broad range. In contrast, for example, a tunable capacitor that can sustain a large voltage and has a large enough tunable range and quality factor may be expensive, slow or unavailable for with the necessary component specifications

Examples of methods for tunable Impedance Matching of a variable load

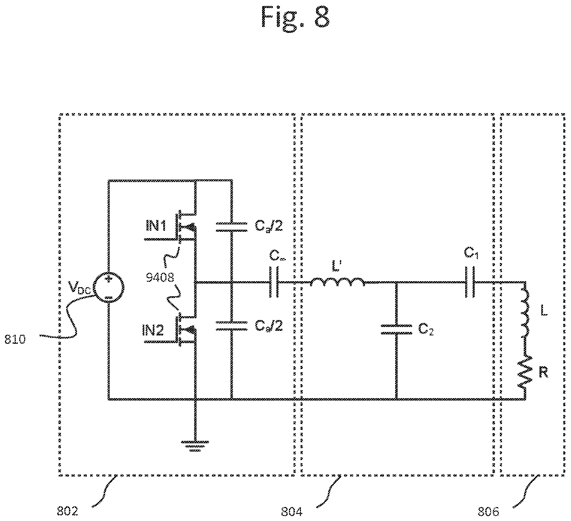

A simplified circuit diagram showing the circuit level structure of a class D power amplifier **802,** impedance matching network **804** and an inductive load **806** is shown in Fig. 8. The diagram shows the basic components of the system with the switching amplifier **804** comprising a power source **810,** switching elements **808,** and capacitors. The impedance matching network **804** comprising inductors and capacitors, and the load **806** modeled as an inductor and a resistor.

An exemplary embodiment of this inventive tuning scheme comprises a half-bridge class-D amplifier operating at switching frequency $f$ and driving a low-loss inductive element $R + j\omega L$ via an IMN, as shown in Fig. 8.

In some embodiments $L'$ may be tunable. $L'$ may be tuned by a variable tapping point on the inductor or by connecting a tunable capacitor in series or in parallel to the inductor. In some embodiments $C_a$ may be tunable. For the half bridge topology, $C_a$ may be tuned by varying either one or both capacitors $C_{switch}$, as only the parallel sum of these capacitors matters for the amplifier operation. For the full bridge topology, $C_a$ may be tuned by varying either one, two, three or all capacitors $C_{switch}$, as only their combination (series sum of the two parallel sums associated with the two halves of the bridge) matters for the amplifier operation.

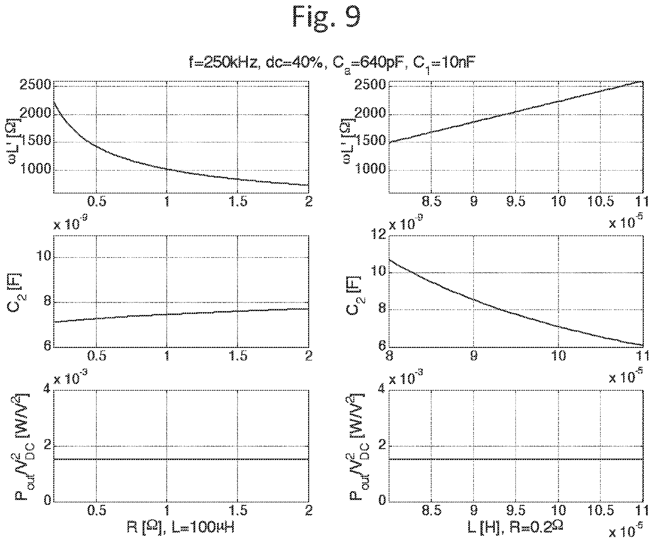

In some embodiments of tunable impedance matching, two of the components of the IMN may be tunable. In some embodiments, $L'$ and $C_2$ may be tuned. Then, Fig. 9 shows the values of the two tunable components needed to achieve impedance matching as functions of the varying $R$ and $L$ of the inductive element, and the associated variation of the output power (at given DC bus voltage) of the amplifier, for $f$ = 250kHz, $dc$ = 40%, $C_a$ = 640pF and $C_1$ = 10nF. Since the IMN always adjusts to the fixed characteristic impedance of the amplifier, the output power is always constant as the inductive element is varying.

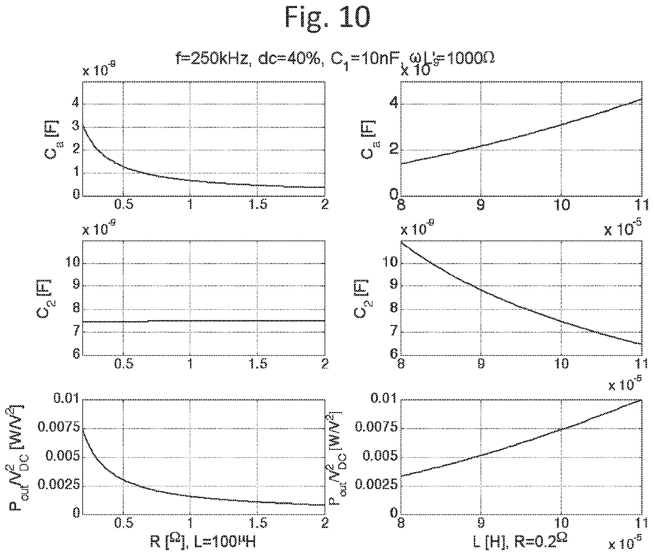

In some embodiments of tunable impedance matching, elements in the switching amplifier may also be tunable. In some embodiments the capacitance $C_a$ along with the IMN capacitor $C_2$ may be tuned. Then, Fig. 10 shows the values of the two tunable components needed to achieve impedance matching as functions of the varying $R$ and $L$ of the inductive element, and the associated variation of the output power (at given DC bus voltage) of the amplifier for $f$ = 250kHz, $dc$ = 40%, $C_1$ = 10nF and $\omega L'$ = 1000Ω. It can be inferred from Fig. 10 that $C_2$ needs to be tuned mainly in response to variations in $L$ and that the output power decreases as $R$ increases.

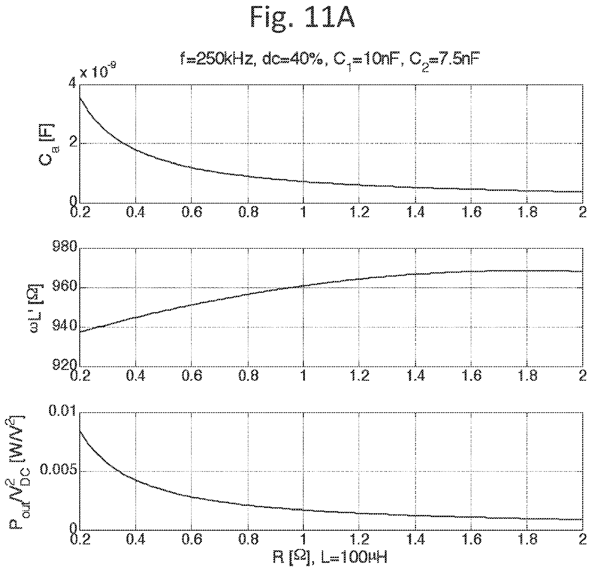

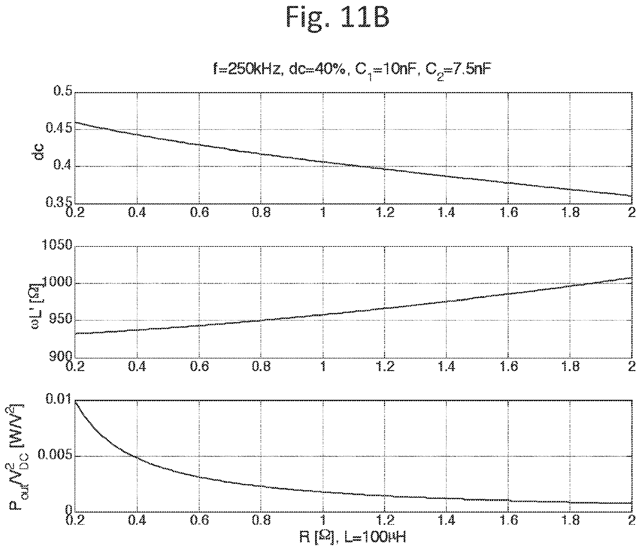

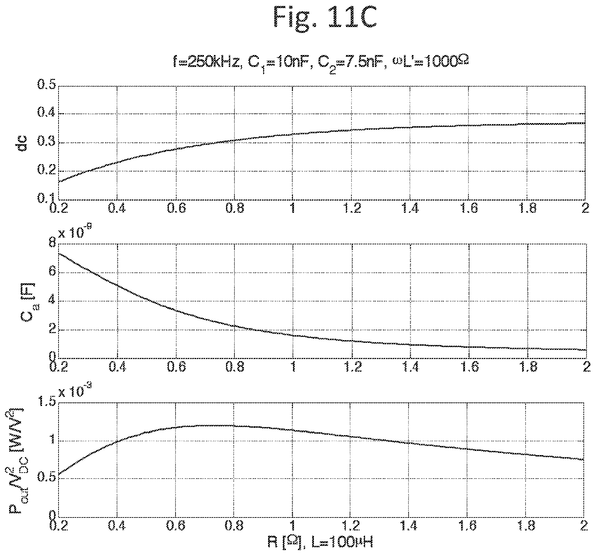

In some embodiments of tunable impedance matching, the duty cycle $dc$ along with the IMN capacitor $C_2$ may be tuned. Then, Fig. 11 shows the values of the two tunable parameters needed to achieve impedance matching as functions of the varying $R$ and $L$ of the inductive clement, and the associated variation of the output power (at given DC bus voltage) of the amplifier for $f$ = 250kHz, $C_a$ = 640pF, $C_1$ = 10nF and $\omega L'$ = 1000Ω. It can be inferred from Fig. 11 that $C_2$ needs to be tuned mainly in response to variations in $L$ and that the output power decreases as $R$ increases.

In some embodiments of tunable impedance matching, the capacitance $C_a$ along with the IMN inductor $L'$ may be tuned. Then, Fig. 11A shows the values of the two tunable components needed to achieve impedance matching as functions of the varying $R$ of the inductive element, and the associated variation of the output power (at given DC bus voltage) of the amplifier for $f$ = 250kHz, $dc$ = 40%, $C_1$ = 10nF and $C_2$ = 7.5nF. It can be inferred from Fig. 11A that the output power decreases as $R$ increases.

In some embodiments of tunable impedance matching, the duty cycle $dc$ along with the IMN inductor $L'$ may be tuned. Then, Fig. 11B shows the values of the two tunable parameters needed to achieve impedance matching as functions of the varying $R$ of the inductive element, and the associated variation of the output power (at given DC bus voltage) of the amplifier for $f$ = 250kHz, $C_a$ = 640pF, $C_1$ = 10nF and $C_2$ = 7.5nF as functions of the varying $R$ of the inductive clement. It can be inferred from Fig. 11B that the output power decreases as $R$ increases.

In some embodiments of tunable impedance matching, only elements in the switching amplifier may be tunable with no tunable elements in the IMN. In some embodiments the duty cycle $dc$ along with the capacitance $C_a$ may be tuned. Then, Fig. 11C, shows the values of the two tunable parameters needed to achieve impedance matching as functions of the varying $R$ of the inductive element, and the associated variation of the output power (at given DC bus voltage) of the amplifier for $f$ = 250kHz, $C_1$ = 10nF, $C_2$ = 7.5nF and $\omega L'$ = 1000Ω. It can be inferred from Fig. 11C that the output power is a non-monotonic function of $R$. These embodiments may be able to achieve dynamic impedance matching when variations in $L$ (and thus the resonant frequency) are modest.

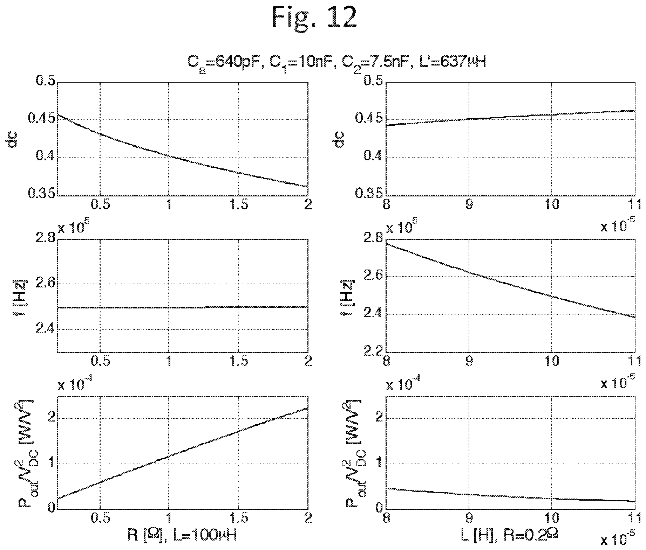

In some embodiments, dynamic impedance matching with fixed elements inside the TMN, also when $L$ is varying greatly as explained earlier, may be achieved by varying the driving frequency of the external frequency $f$(e.g. the switching frequency of a switching amplifier) so that it follows the varying resonant frequency of the resonator. Using the switching frequency $f$ and the switch duty cycle $dc$ as the two variable parameters, full impedance matching can be achieved as $R$ and $L$ are varying without the need of any variable components. Then, Fig. 12 shows the values of the two tunable parameters needed to achieve impedance matching as functions of the varying $R$ and $L$ of the inductive element, and the associated variation of the output power (at given DC bus voltage) of the amplifier for $C_a$ = 640pF, $C_1$ = 10nF, $C_2$ = 7.5nF and $L'$ = 637$\mu$H. It can be inferred from Fig. 12 that the frequency $f$ needs to be tuned mainly in response to variations in $L$, as explained earlier.

**Tunable Impedance Matching for systems of wireless power transmission**

In applications of wireless power transfer the low-loss inductive element may be the coil of a source resonator coupled to one or more device resonators or other resonators, such as repeater resonators, for example. The impedance of the inductive element $R + j\omega L$ may include the reflected impedances of the other resonators on the coil of the source resonator. Variations of $R$ and $L$ of the inductive element may occur due to external perturbations in the vicinity of the source resonator and/or the other resonators or thermal drift of components. Variations of $R$ and $L$ of the inductive element may also occur during normal use of the wireless power transmission system due to relative motion of the devices and other resonators with respect to the source. The relative motion of these devices and other resonators with respect to the source, or relative motion or position of other sources, may lead to varying coupling (and thus varying reflected impedances) of the devices to the source. Furthermore, variations of $R$ and $L$ of the inductive element may also occur during normal use of the wireless power transmission system due to changes within the other coupled resonators, such as changes in the power draw of their loads. All the methods and embodiments disclosed so far apply also to this case in order to achieve dynamic impedance matching of this inductive element to the external circuit driving it.

To demonstrate the presently disclosed dynamic impedance matching methods for a wireless power transmission system, consider a source resonator including a low-loss source coil, which is inductively coupled to the device coil of a device resonator driving a resistive load.

In some embodiments, dynamic impedance matching may be achieved at the source circuit. In some embodiments, dynamic impedance matching may also be achieved at the device circuit. When full impedance matching is obtained (both at the source and the device), the effective resistance of the source inductive element (namely the resistance of the source coil $R_s$ plus the reflected impedance from the device) is $R = R_s\sqrt{1 + U_{sd}^2}.$ (Similarly the effective resistance of the device inductive element is $R_d\sqrt{1 + U_{sd}^2},$ where $R_d$ is the resistance of the device coil.) Dynamic variation of the mutual inductance between the coils due to motion results in a dynamic variation of $U_{sd} = \omega M_{sd}/\sqrt{R_s R_d}.$ Therefore, when both source and device are dynamically tuned, the variation of mutual inductance is seen from the source circuit side as a variation in the source inductive element resistance $R$. Note that in this type of variation, the resonant frequencies of the resonators may not change substantially, since $L$ may not be changing. Therefore, all the methods and examples presented for dynamic impedance matching may be used for the source circuit of the wireless power transmission system.

Note that, since the resistance $R$ represents both the source coil and the reflected impedances of the device coils to the source coil, in Figs. 9-12, as $R$ increases due to the increasing $U,$ the associated wireless power transmission efficiency increases. In some embodiments, an approximately constant power may be required at the load driven by the device circuitry. To achieve a constant level of power transmitted to the device, the required output power of the source circuit may need to decrease as $U$ increases. If dynamic impedance matching is achieved via tuning some of the amplifier parameters, the output power of the amplifier may vary accordingly. In some embodiments, the automatic variation of the output power is preferred to be monotonically decreasing with $R,$ so that it matches the constant device power requirement. In embodiments where the output power level is set by adjusting the DC driving voltage of the power generator, using an impedance matching set of tunable parameters which leads to monotonically decreasing output power vs. $R$ may imply that constant power can be kept at the power load in the device with only a moderate adjustment of the DC driving voltage. In embodiments, where the "knob" to adjust the output power level is the duty cycle $dc$ or the phase of a switching amplifier or a component inside an Impedance Matching Network, using an impedance matching set of tunable parameters which leads to monotonically decreasing output power vs. $R$ may imply that constant power can be kept at the power load in the device with only a moderate adjustment of this power "knob".

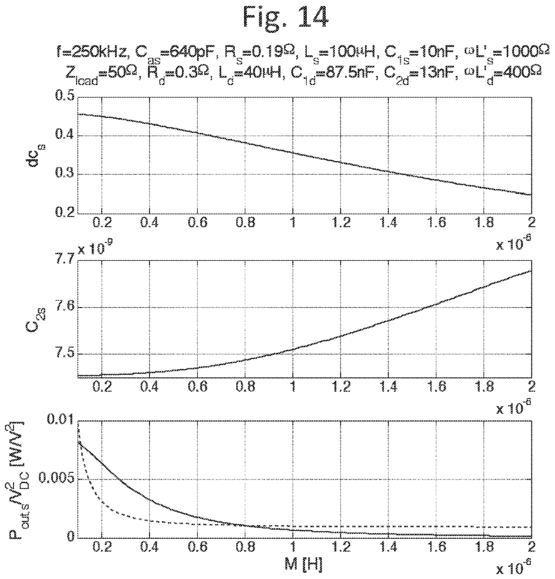

In the examples of Figs. 9-12, if $R_s = 0.19\Omega$, then the range $R = 0.2 - 2\Omega$ corresponds approximately to $U_{sd} = 0.3 - 10.5$. For these values, in Fig. 14, we show with dashed lines the output power (normalized to DC voltage squared) required to keep a constant power level at the load, when both source and device are dynamically impedance matched. The similar trend between the solid and dashed lines explains why a set of tunable parameters with such a variation of output power may be preferable.

In some embodiments, dynamic impedance matching may be achieved at the source circuit, but impedance matching may not be achieved or may only partially be achieved at the device circuit. As the mutual inductance between the source and device coils varies, the varying reflected impedance of the device to the source may result in a variation of both the effective resistance $R$ and the effective inductance $L$ of the source inductive clement. The methods presented so far for dynamic impedance matching are applicable and can be used for the tunable source circuit of the wireless power transmission system.

As an example, consider the circuit of Fig. 14, where $f = 250kHz$, $C_a = 640pF$, $R_s = 0.19\Omega$, $L_s = 100\mu H$, $C_{1s} =$

*10nF, $\omega L'_s$ = 1000Ω, $R_d$ = 0.3Ω, $L_d$ = 40$\mu$H, $C_{1d}$ = 87.5nF, $C_{2d}$ = 13nF, $\omega L'_d$ = 400Ω and $Z_l$ = 50Ω, where s and d* denote the source and device resonators respectively and the system is matched at $U_{sd}$ = 3. Tuning the duty cycle *dc* of the switching amplifier and the capacitor $C_{2s}$ may be used to dynamically impedance match the source, as the non-tunable device is moving relatively to the source changing the mutual inductance *M* between the source and the device. In Fig. 14, we show the required values of the tunable parameters along with the output power per DC voltage of the amplifier. The dashed line again indicates the output power of the amplifier that would be needed so that the power at the load is a constant value.

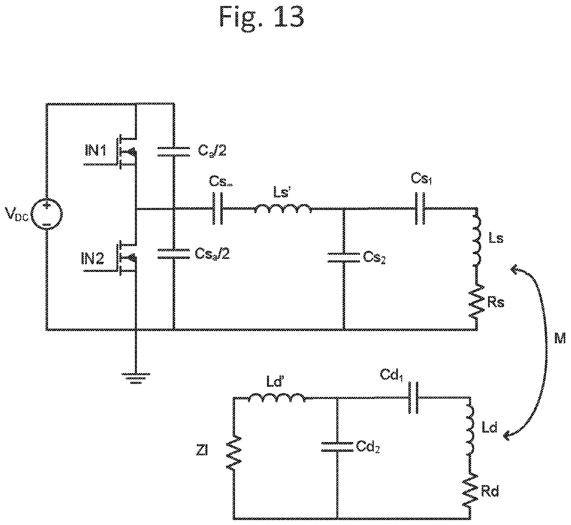

In some embodiments, tuning the driving frequency *f* of the source driving circuit may still be used to achieve dynamic impedance matching at the source for a system of wireless power transmission between the source and one or more devices. As explained earlier, this method enables full dynamic impedance matching of the source, even when there are variations in the source inductance $L_s$ and thus the source resonant frequency. For efficient power transmission from the source to the devices, the device resonant frequencies must be tuned to follow the variations of the matched driving and source-resonant frequencies. Tuning a device capacitance (for example, in the embodiment of Fig. 13 $C_{1d}$ or $C_{2d}$) may be necessary, when there are variations in the resonant frequency of either the source or the device resonators. In fact, in a wireless power transfer system with multiple sources and devices, tuning the driving frequency alleviates the need to tune only one source-object resonant frequency, however, all the rest of the objects may need a mechanism (such as a tunable capacitance) to tune their resonant frequencies to match the driving frequency.

### Resonator Thermal Management

In wireless energy transfer systems, some portion of the energy lost during the wireless transfer process is dissipated as heat. Energy may be dissipated in the resonator components themselves. For example, even high-Q conductors and components have some loss or resistance, and these conductors and components may heat up when electric currents and/or electromagnetic fields flow through them. Energy may be dissipated in materials and objects around a resonator. For example, eddy currents dissipated in imperfect conductors or dielectrics surrounding or near-by the resonator may heat up those objects. In addition to affecting the material properties of those objects, this heat may be transferred through conductive, radiative, or convective processes to the resonator components. Any of these heating effects may affect the resonator Q, impedance, frequency, etc., and therefore the performance of the wireless energy transfer system.

In a resonator comprising a block or core of magnetic material, heat may be generated in the magnetic material due to hysteresis losses and to resistive losses resulting from induced eddy currents. Both effects depend on the magnetic flux density in the material, and both can create significant amounts of heat, especially in regions where the flux density or eddy currents may be concentrated or localized. In addition to the flux density, the frequency of the oscillating magnetic field, the magnetic material composition and losses, and the ambient or operating temperature of the magnetic material may all impact how hysteresis and resistive losses heat the material.

In embodiments, the properties of the magnetic material such as the type of material, the dimensions of the block, and the like, and the magnetic field parameters may be chosen for specific operating power levels and environments to minimize heating of the magnetic material. In some embodiments, changes, cracks, or imperfections in a block of magnetic material may increase the losses and heating of the magnetic material in wireless power transmission applications.

For magnetic blocks with imperfections, or that are comprised of smaller size tiles or pieces of magnetic material arranged into a larger unit, the losses in the block may be uneven and may be concentrated in regions where there are inhomogeneities or relatively narrow gaps between adjacent tiles or pieces of magnetic material. For example, if an irregular gap exists in a magnetic block of material, then the effective reluctance of various magnetic flux paths through the material may be substantially irregular and the magnetic field may be more concentrated in portions of the block where the magnetic reluctance is lowest. In some cases, the effective reluctance may be lowest where the gap between tiles or pieces is narrowest or where the density of imperfections is lowest. Because the magnetic material guides the magnetic field, the magnetic flux density may not be substantially uniform across the block, but may be concentrated in regions offering relatively lower reluctance. Irregular concentrations of the magnetic field within a block of magnetic material may not be desirable because they may result in uneven losses and heat dissipation in the material.

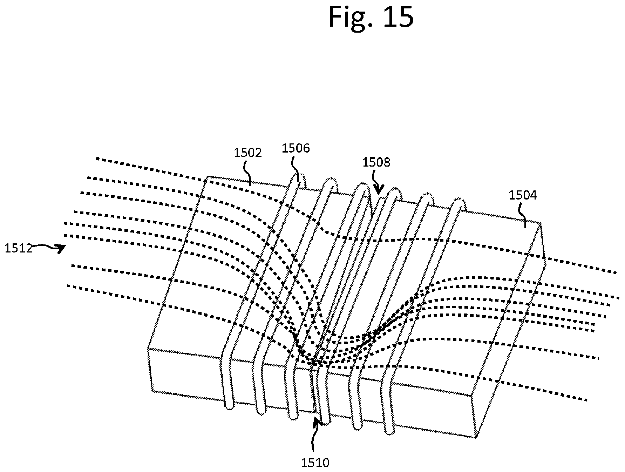

For example, consider a magnetic resonator comprising a conductor **1506** wrapped around a block of magnetic material composed of two individual tiles **1502, 1504** of magnetic material joined such that they form a seam **1508** that is perpendicular to the axis of the conductor **1506** loops as depicted in Fig. 15. An irregular gap in the scam **1508** between the tiles of magnetic material **1502, 1504** may force the magnetic field **1512** (represented schematically by the dashed magnetic field lines) in the resonator to concentrate in a sub region **1510** of the cross section of the magnetic material. Since the magnetic field will follow the path of least reluctance, a path including an air gap between two pieces of magnetic material may create an effectively higher reluctance path than one that traverses the width of the magnetic material at a point where the pieces of magnetic materials touch or have a smaller air gap. The magnetic flux density may therefore preferentially flow through a relatively small cross area of the magnetic material resulting in a high concentration of magnetic flux in that small area **1510.**

In many magnetic materials of interest, more inhomogeneous flux density distributions lead to higher overall losses. Moreover, the more inhomogeneous flux distribution may result in material saturation and cause localized heating of the area in which the magnetic flux is concentrated. The localized heating may alter the properties of the magnetic material, in some cases exacerbating the losses. For example, in the relevant regimes of operation of some materials, hysteresis and resistive losses increase with temperature. If heating the material increases material losses, resulting in more heating, the temperature of the material may continue to increase and even runaway if no corrective action is taken. In some instances, the temperature may reach 100 degrees C or more and may degrade the properties of the magnetic material and the performance of wireless power transfer. In some instances, the magnetic materials may be damaged, or the surrounding electronic components, packaging and/or enclosures may be damaged by the excessive heat.

In embodiments, variations or irregularities between tiles or pieces of the block of magnetic material may be minimized by machining, polishing, grinding, and the like, the edges of the tiles or pieces to ensure a tight fit between tiles of magnetic materials providing a substantially more uniform reluctance through the whole cross section of the block of magnetic material. In embodiments, a block of magnetic material may require a means for providing a compression force between the tiles to ensure the tiles are pressed tight together without gaps. In embodiments, an adhesive may be used between the tiles to ensure they remain in tight contact.

In embodiments the irregular spacing of adjacent tiles of magnetic material may be reduced by adding a deliberate gap between adjacent tiles of magnetic material. In embodiments a deliberate gap may be used as a spacer to ensure even or regular separations between magnetic material tiles or pieces. Deliberate gaps of flexible materials may also reduce irregularities in the spacings due to tile movement or vibrations. In embodiments, the edges of adjacent tiles of magnetic material may be taped, dipped, coated, and the like with an electrical insulator, to prevent eddy currents from flowing through reduced cross-sectional areas of the block, thus lowering the eddy current losses in the material. In embodiments a separator may be integrated into the resonator packaging. The spacer may provide a spacing of 1mm or less.

In embodiments, the mechanical properties of the spacer between tiles may be chosen so as to improve the tolerance of the overall structure to mechanical effects such as changes in the dimensions and/or shape of the tiles due to intrinsic effects (e.g,, magnetostriction, thermal expansion, and the like) as well as external shocks and vibrations. For example, the spacer may have a desired amount of mechanical give to accommodate the expansion and/or contraction of individual tiles, and may help reduce the stress on the tiles when they are subjected to mechanical vibrations, thus helping to reduce the appearance of cracks and other defects in the magnetic material.

In embodiments, it may be preferable to arrange the individual tiles that comprise the block of magnetic material to minimize the number of scams or gaps between tiles that are perpendicular to the dipole moment of the resonator. In embodiments it may be preferable to arrange and orient the tiles of magnetic material to minimize the gaps between tiles that are perpendicular to the axis formed by the loops of a conductor comprising the resonator.

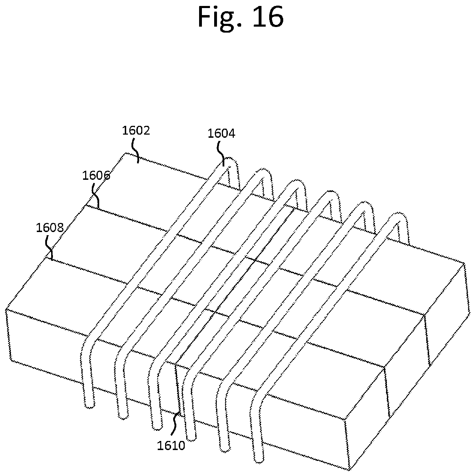

For example, consider the resonator structure depicted in Fig. 16. The resonator comprises a conductor **1604** wrapped around a block of magnetic material comprising six separate individual tiles **1602** arranged in a three by two array. The arrangement of tiles results in two tile seams **1606, 1608** when traversing the block of magnetic material in one direction, and only one tile seam **1610** when traversing the block of magnetic material in the orthogonal direction. In embodiments, it may be preferable to wrap the conductor wire **1604** around the block of magnetic material such that the dipole moment of the resonator is perpendicular to the fewest number of tile seams. The inventors have observed that there is relatively less heating induced around seams and gaps **1606, 1608** that are parallel to the dipole moment of the resonator. Scams and gaps that run perpendicular to the dipole moment of the resonator may also be referred to as critical seams or critical seam areas. It may still be desirable, however, to electrically insulate gaps that run parallel to the dipole moment of the resonator (such as **1606** and **1608**) so as to reduce eddy current losses. Uneven contact between tiles separated by such parallel gaps may cause eddy currents to flow through narrow contact points, leading to large losses at such points.

In embodiments, irregularities in spacing may be tolerated with adequate cooling of the critical seam areas to prevent the localized degradation of material properties when the magnetic material heats up. Maintaining the temperature of the magnetic material below a critical temperature may prevent a runaway effect caused by a sufficiently high temperature. With proper cooling of the critical seam area, the wireless energy transfer performance may be satisfactory despite the additional loss and heating effects due to irregular spacing, cracks, or gaps between tiles.

Effective heatsinking of the resonator structure to prevent excessive localized heating of the magnetic material poses several challenges. Metallic materials that are typically used for heatsinks and thermal conduction can interact with the magnetic fields used for wireless energy transfer by the resonators and affect the performance of the system. Their location, size, orientation, and use should be designed so as to not excessively lower the perturbed Q of the resonators in the presence of these heatsinking materials. In addition, owing to the relatively poor thermal conductivity of magnetic materials such as ferrites, a relatively large contact area between the heatsink and the magnetic material may be required to provide adequate cooling which may require placement of substantial amount of lossy materials close to the magnetic resonator.

In embodiments, adequate cooling of the resonator maybe achieved with minimal effect on the wireless energy transfer performance with strategic placement of thermally conductive materials. In embodiments, strips of thermally conductive material may be placed in between loops of conductor wire and in thermal contact with the block of magnetic material.

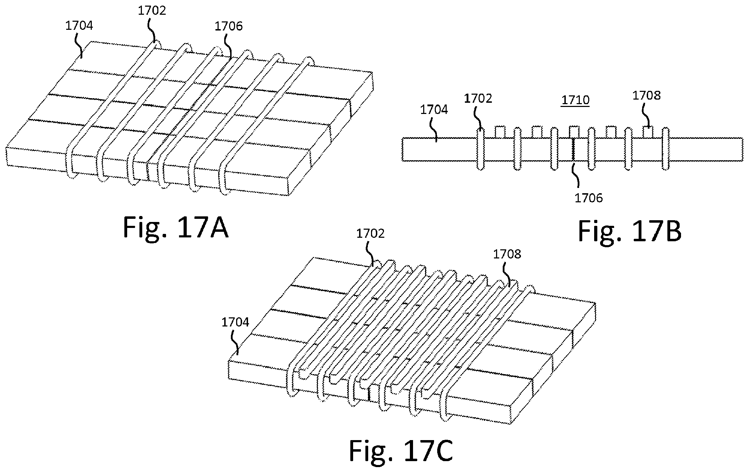

One exemplary embodiment of a resonator with strips of thermally conductive material is depicted in Fig. 17. Fig. 17A shows the resonator structure without the conducting strips and with the block of magnetic material comprising smaller tiles of magnetic material forming gaps or scams. Strips of thermally conductive **1708** material may be placed in between the loops of the conductor **1702** and in thermal contact with the block of magnetic material **1704** as depicted in Figs. 17B and 17C. To minimize the effects of the strips on the parameters of the resonator, in some embodiments it may be preferable to arrange the strips parallel to the loops of conductor or perpendicular to the dipole moment of the resonator. The strips of conductor may be placed to cover as much or as many of the seams or gaps between the tiles as possible especially the seams between tiles that are perpendicular to the dipole moment of the resonator.

In embodiments the thermally conductive material may comprise copper, aluminum, brass, thermal epoxy, paste, pads, and the like, and may be any material that has a thermal conductivity that is at least that of the magnetic material in the resonator (~5W/(K-m) for some commercial ferrite materials). In embodiments where the thermally conductive material is also electrically conducting, the material may require a layer or coating of an electrical insulator to prevent shorting and direct electrical contact with the magnetic material or the loops of conductor of the resonator.

In embodiments the strips of thermally conductive material may be used to conduct heat from the resonator structure to a structure or medium that can safely dissipate the thermal energy. In embodiments the thermally conductive strips may be connected to a heat sink such as a large plate located above the strips of conductor that can dissipate the thermal energy using passive or forced convection, radiation, or conduction to the environment. In embodiments the system may include any number of active cooling systems that may be external or internal to the resonator structure that can dissipate the thermal energy from the thermally conducting strips and may include liquid cooling systems, forced air systems, and the like. For example, the thermally conducting strips may be hollow or comprise channels for coolant that may be pumped or forced through to cool the magnetic material. In embodiments, a field deflector made of a good electrical conductor (such as copper, silver, aluminum, and the like) may double as part of the heatsinking apparatus. The addition of thermally and electrically conducting strips to the space between the magnetic material and the field deflector may have a marginal effect on the perturbed $Q$, as the the electromagnetic fields in that space are typically suppressed by the presence of the field deflector. Such conducting strips may be thermally connected to both the magnetic material and the field deflector to make the temperature distribution among different strips more homogeneous.

In embodiments the thermally conducting strips are spaced to allow at least one loop of conductor to wrap around the magnetic material. In embodiments the strips of thermally conductive material may be positioned only at some or all of the gaps or seams of the magnetic material. In other embodiments, the strips may be positioned to contact the magnetic material at substantially throughout its complete length. In other embodiments, the strips may be distributed to match the flux density within the magnetic material. Areas of the magnetic material which under normal operation of the resonator may have higher magnetic flux densities may have a higher density of contact with the thermally conductive strips. In embodiments, such as depicted in Fig 17A for example, the highest magnetic flux density in the magnetic material may be observed toward the center of the block of magnetic material and the lower density may be toward the ends of the block in the direction of the dipole moment of the resonator.

To show how the use of thermally conducting strips helps to reduce the overall temperature in the magnetic material as well as the temperature at potential hot spots, the inventors have performed a finite element simulation of a resonator structure similar to that depicted in Fig. 17C. The structure was simulated operating at a frequency of 235 kHz and comprising a block of EPCOS N95 magnetic material measuring 30 cm x 30 cm x 5 mm excited by 10 turns of litz wire (symmetrically placed at 25 mm, 40 mm, 55 mm, 90 mm and 105 mm from the plane of symmetry of the structure) carrying 40 A of peak current each, and thermally connected to a 50 cm x 50 cm x 4 mm field deflector by means of three 3 x ¾ x 1' hollow square tubes (1/8" wall thickness) of aluminum (alloy 6063) whose central axes are placed at -75mm, 0 mm, and +75 from the symmetry plane of the structure. The perturbed Q due to the field deflector and hollow tubes was found to be 1400 (compared to 1710 for the same structure without the hollow tubes). The power dissipated in the shield and tubes was calculated to be 35.6 W, while that dissipated in the magnetic material was 58.3 W. Assuming the structure is cooled by air convection and radiation and an ambient temperature of 24 °C, the maximum temperature in the structure was 85 °C (at points in the magnetic material approximately halfway between the the hollow tubes) while the temperature in parts of the magnetic material in contact with the hollow tubes was approximately 68 °C. By comparison, the same resonator without the thermally conducting hollow tubes dissipated 62.0 W in the magnetic material for the same excitation current of 40 W peak and the maximum temperature in the magnetic material was found to be 111 °C.

The advantage of the conducting strips is more apparent still if we introduce a defect in a portion of the magnetic material that is in good thermal contact with the tubes. An air gap 10 cm long and 0.5 mm placed at the center of the magnetic material and oriented perpendicular to the dipole moment increases the power dissipated in the magnetic material to 69.9 W (the additional 11.6W relative to the previously discussed no-defect example being highly concentrated in the vicinity of the gap), but the conducting tube ensures that the maximum temperature in the magnetic material has only a relative modest increase of 11 °C to 96 °C. In contrast, the same defect without the conducting tubes leads to a maximum temperature of 161 °C near the defect. Cooling solutions other than convection and radiation, such as thermally connecting the conducting tubes body with large thermal mass or actively cooling them, may lead to even lower operational temperatures for this resonator at the same current level.

In embodiments thermally conductive strips of material may be positioned at areas that may have the highest probability of developing cracks that may cause irregular gaps in the magnetic material. Such areas may be areas of high stress or strain on the material, or areas with poor support or backing from the packaging of the resonator. Strategically positioned thermally conductive strips may ensure that as cracks or irregular gaps develop in the magnetic material, the temperature of the magnetic material will be maintained below its critical temperature. The critical temperature may be defined as the Curie temperature of the magnetic material, or any temperature at which the characteristics of the resonator have been degraded beyond the desired performance parameters.

In embodiments the heat sinking structure may provide mechanical support to the magnetic material. In embodiments the heatsinking structure may be designed to have a desired amount of mechanical give (e.g., by using epoxy, thermal pads, and the like having suitable mechanical properties to thermally connect different elements of the structure) so as to provide the resonator with a greater amount of tolerance to changes in the intrinsic dimensions of its elements (due to thermal expansion, magnetostriction, and the like) as well as external shocks and vibrations, and prevent the formation of cracks and other defects.

In embodiments where the resonator comprises orthogonal windings wrapped around the magnetic material, the strips of conducting material may be tailored to make thermal contact with the magnetic material within areas delimited by two orthogonal sets of adjacent loops. In embodiments a strip may contain appropriate indentations to fit around the conductor of at least one orthogonal winding while making thermal contact with the magnetic material at at least one point. In embodiments the magnetic material may be in thermal contact with a number of thermally conducting blocks placed between adjacent loops. The thermally conducting blocks may be in turn thermally connected to one another by means of a good thermal conductor and/or heatsinked.

Throughout this description although the term thermally conductive strips of material was used as an exemplary specimen of a shape of a material it should be understood by those skilled in the art that any shapes and contours may be substituted by squared, ovals, strips, dots, elongated shapes, and the like.

### Wireless Power Repeater Resonators

A wireless power transfer system may incorporate a repeater resonator configured to exchange energy with one or more source resonators, device resonators, or additional repeater resonators. A repeater resonator may be used to extend the range of wireless power transfer. A repeater resonator may be used to change, distribute, concentrate, enhance, and the like, the magnetic field generated by a source. A repeater resonator may be used to guide magnetic fields of a source resonator around lossy and/or metallic objects that might otherwise block the magnetic field. A repeater resonator may be used to eliminate or reduce areas of low power transfer, or areas of low magnetic field around a source. A repeater resonator may be used to improve the coupling efficiency between a source and a target device resonator or resonators, and may be used to improve the coupling between resonators with different orientations, or whose dipole moments are not favorably aligned.

An oscillating magnetic field produced by a source magnetic resonator can cause electrical currents in the conductor part of the repeater resonator. These electrical currents may create their own magnetic field as they oscillate in the resonator thereby extending or changing the magnetic field area or the magnetic field distribution of the source.

In embodiments, a repeater resonator may operate as a source for one or more device resonators. In other embodiments, a device resonator may simultaneously receive a magnetic field and repeat a magnetic field. In still other embodiments, a resonator may alternate between operating as a source resonator, device resonator or repeater resonator. The alternation may be achieved through time multiplexing, frequency multiplexing, self-tuning, or through a centralized control algorithm. In embodiments, multiple repeater resonators may be positioned in an area and tuned in and out of resonance to achieve a spatially varying magnetic field. In embodiments, a local area of strong magnetic field may be created by an array of resonators, and the positioned of the strong field area may be moved around by changing electrical components or operating characteristics of the resonators in the array.

In embodiments a repeater resonator may be an air-core capacitively loaded loop magnetic resonator. In embodiments a repeater resonator may be a magnetic-material core capacitively loaded loop magnetic resonator. In embodiments the repeater resonator may be tuned to have a resonant frequency that is substantially equal to that of the frequency of a source or device or at least one other repeater resonator with which the repeater resonator is designed to interact or couple. In other embodiments the repeater resonator may be detuned to have a resonant frequency that is substantially greater than, or substantially less than the frequency of a source or device or at least one other repeater resonator with which the repeater resonator is designed to interact or couple. Preferably, the repeater resonator may be a high-$Q$ magnetic resonator with an intrisic quality factor, $Q_r$, of 100 or more. In some embodiments the repeater resonator may have quality factor of less than 100. In some embodiments, $\sqrt{Q_s Q_r} > 100$. In other embodiments, $\sqrt{Q_d Q_r} > 100$. In still other embodiments, $\sqrt{Q_{r1} Q_{r2}} > 100$.

In embodiments, the repeater resonator may include only the inductive and capacitive components that comprise the resonator without any additional circuitry, for connecting to sources, loads, controllers, monitors, control circuitry and the like. In some embodiments the repeater resonator may include additional control circuitry, tuning circuitry, measurement circuitry, or monitoring circuitry. Additional circuitry may be used to monitor the voltages, currents, phase, inductance, capacitance, and the like of the repeater resonator. The measured parameters of the repeater resonator may be used to adjust or tune the repeater resonator. A controller or a microcontroller may be used by the repeater resonator to actively adjust the capacitance, resonant frequency, inductance, resistance, and the like of the repeater resonator. A tunable repeater resonator may be necessary to prevent the repeater resonator from exceeding its voltage, current, temperature, or power limits. A repeater resonator may for example detune its resonant frequency to reduce the amount of power transferred to the repeater resonator, or to modulate or control how much power is transferred to other devices or resonators that couple to the repeater resonator.

In some embodiments the power and control circuitry of the repeater resonators may be powered by the energy captured by the repeater resonator. The repeater resonator may include AC to DC, AC to AC, or DC to DC converters and regulators to provide power to the control or monitoring circuitry. In some embodiments the repeater resonator may include an additional energy storage component such as a battery or a super capacitor to supply power to the power and control circuitry during momentary or extended periods of wireless power transfer interruptions. The battery, super capacitor, or other power storage component may be periodically or continuously recharged during normal operation when the repeater resonator is within range of any wireless power source.

In some embodiments the repeater resonator may include communication or signaling capability such as WiFi, Bluetooth, near field, and the like that may be used to coordinate power transfer from a source or multiple sources to a specific location or device or to multiple locations or devices. Repeater resonators spread across a location may be signaled to selectively tune or detune from a specific resonant frequency to extend the magnetic field from a source to a specific location, area, or device. Multiple repeater resonators may be used to selectively tune, or detune, or relay power from a source to specific areas or devices.

The repeater resonators may include a device into which some, most, or all of the energy transferred or captured from the source to the repeater resonator may be available for use. The repeater resonator may provide power to one or more electric or electronic devices while relaying or extending the range of the source. In some embodiments low power consumption devices such as lights, LEDs, displays, sensors, and the like may be part of the repeater resonator.

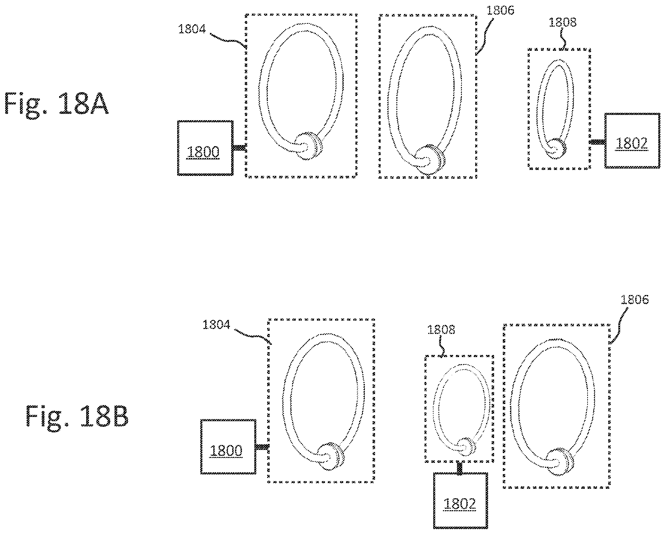

Several possible usage configurations arc shown in Figs. 18-20 showing example arrangements of a wireless power transfer system that includes a source **1804** resonator coupled to a power source **1800,** a device resonator **1808** coupled to a device **1802,** and a repeater resonator **1806.** In some embodiments, a repeater resonator may be used between the source and the device resonator to extend the range of the source. In some embodiments the repeater resonator may be positioned after, and further away from the source than the device resonator as shown in Fig. 18B. For the configuration shown in Fig. 18B more efficient power transfer between the source and the device may be possible compared to if no repeater resonator was used. In embodiments of the configuration shown in Fig. 18B it may be preferable for the repeater resonator to be larger than the device resonator.

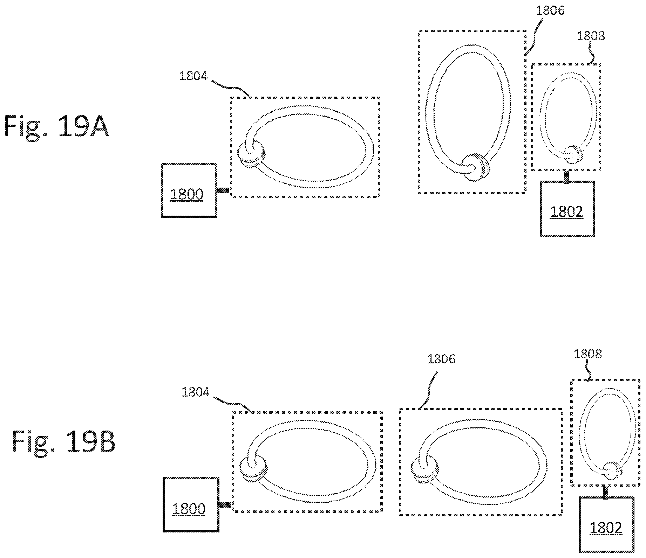

In some embodiments a repeater resonator may be used to improve coupling between non-coaxial resonators or resonators whose dipole moments are not aligned for high coupling factors or energy transfer efficiencies. For example, a repeater resonator may be used to enhance coupling between a source and a device resonator that are not coaxially aligned by placing the repeater resonator between the source and device aligning it with the device resonator as shown in Fig. 19A or aligning with the source resonator as shown in Fig. 19B.

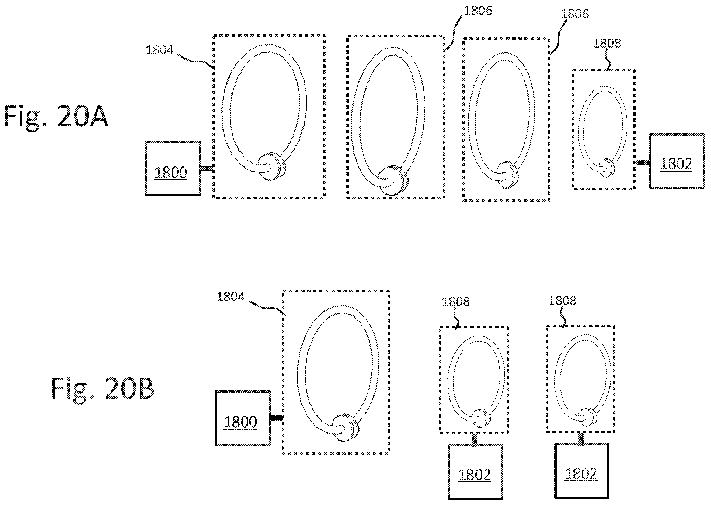

In some embodiments multiple repeater resonators may be used to extend the wireless power transfer into multiple directions or multiple repeater resonators, one after another, to extend the power transfer distance as shown in Fig. 20A. In some embodiments, a device resonator that is connected to a load or electronic device may operate simultaneously, or alternately as a repeater resonator for another device, repeater resonator, or device resonator as shown in Fig. 20B. Note that there is no theoretical limit to the number of resonators that may be used in a given system or operating scenario, but there may be practical issues that make a certain number of resonators a preferred embodiment. For example, system cost considerations may constrain the number of resonators that may be used in a certain application. System size or integration considerations may constrain the size of resonators used in certain applications.

In some embodiments the repeater resonator may have dimensions, size, or configuration that is the same as the source or device resonators. In some embodiments the repeater resonator may have dimensions, size, or configuration that is different than the source or device resonators. The repeater resonator may have a characteristic size that is larger than the device resonator or larger than the source resonator, or larger than both. A larger repeater resonator may improve the coupling between the source and the repeater resonator at a larger separation distance between the source and the device.

In some embodiments two or more repeater resonators may be used in a wireless power transfer system. In some embodiments two or more repeater resonators with two or more sources or devices may be used.

## Under Cabinet Lighting with Repeater Resonators

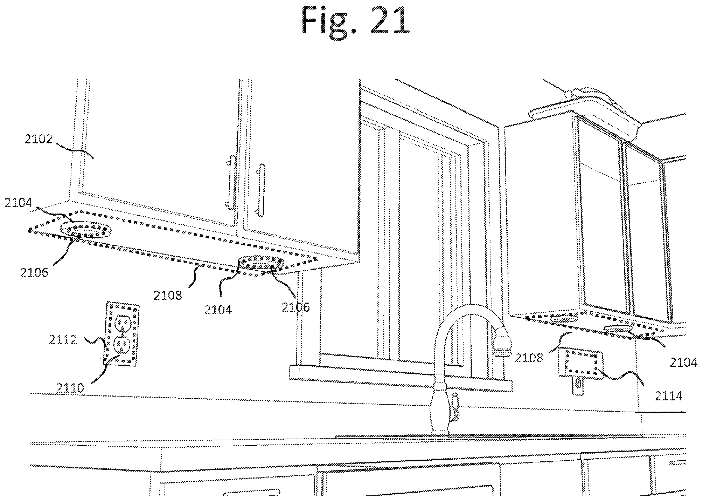

A repeater resonator may be used to enhance power transfer in lighting applications. One example application of a wireless power transfer system using a repeater resonator is shown in Fig. 21 for a kitchen lighting configuration. Power transfer between a source resonator **2112, 2114** and a device resonator **2106** built into a light **2104** may be enhanced or improved, by an additional repeater resonator **2108** positioned above or next to the lights **2104** or the device resonators **2106.**

The addition of a larger repeater resonator next to the lights may increase the coupling and power transfer efficiency between the source and the lights and may allow the use of smaller, less obtrusive, and more efficient sources or source resonators, or smaller lights, or device resonators.

In embodiments, the repeater resonator may be a capacitively loaded loop wound in a planar, flat, rectangular coil sized to fit inside of a cabinet. The repeater resonator may be integrated into a rigid or flexible pad or housing allowing placement of regular cabinet contents on top of the resonator. The repeater resonator may be incorporated in materials typically used to line cabinets such as contact paper, mats, non-skid placemats, and the like. In embodiments the repeater resonator may be designed to attach to the bottom of the cabinet and may be integrated with an attachment mechanism or attachment points for lights. In some embodiments the lights may not require additional device resonators but may directly connect or may be integrated into the repeater resonator.

In embodiments a device resonator may be built into the light and designed to couple to the repeater resonator. Each light may be integrated with its own device resonator and power and control circuitry described herein. Each light my include appropriate AC to AC, AC to DC, or DC to DC converters and drivers to power and control the light emitting portion of the device. With a repeater resonator above the device resonators embedded in the lights, it may be possible to position the lights anywhere under the cabinet with freedom to point and move the light at specific areas or points under the cabinet. The lights with the integrated resonators and device power and control circuitry may be attached to the bottom of the cabinet using adhesives, or any number of known fasteners.

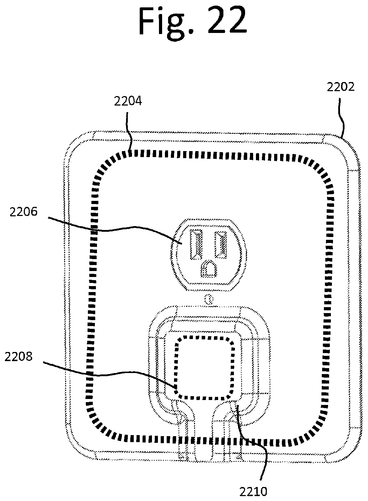

In embodiments the source resonator may be integrated in a source that is an electrical outlet cover or any type of wall plate. One example of a source for under cabinet lighting is depicted in Fig. 22. The source resonator **2204** may be integrated into a cover of an electrical outlet **2202** that may cover and fit around an existing outlet **2206.** The power and control circuitry **2208** of the source may be integrated into the cover. The cover may plug-in or connect to one of the outlets allowing the power and control circuitry to be powered directly from the outlet with 120 VAC or 230VAC, and the like, making the source self contained and not requiring any additional wiring, plugs, electrical outlets, junction boxes, and the like. The source may be retrofitted by end users by replacing the receptacle cover with the wireless source cover.

In embodiments the source resonator may be integrated in a source that plugs into an electrical located under the cabinet. The source may extend out or around the electrical outlet providing an extended volume or box into which the resonator and the power and control circuitry may be integrated.

In embodiments the source resonator may be designed to replace a complete outlet, where the outlet box or outlet junction box may be used for the power and control circuitry of the source. The cover replacing the outlet may have a similar shape or look as a functional outlet cover but may have a resonator integrated into the perimeter of the cover for transferring wireless power. In embodiments, the cover may be decorative to match the kitchen furnishings. In embodiments, the wireless power circuit may include fault interrupt circuits and other necessary safety, power saving, or regulatory circuits.

In embodiments the source may include manual or automatic switches or sensors for turning the source on or off and thereby allowing a central place for switching on or off the wirelessly powered lights. The source may be integrated with a timer or light sensor to automatically turn on or off when other lights in the area or turned on or off. For example, the wireless power transfer system may include motion sensors or timers to turn lights on and off according to the detected presence of someone in the room or a certain time of day.

In one example configuration, a 15 cm by 15 cm source resonator comprising 10 turns of Litz wire and having a quality factor $Q$ greater than 100 is attached to a wall, 23 cm below a hanging cabinet. One round light with an integrated 7.5 cm diameter resonator comprising eight turns of Litz wire and having a quality factor greater than 100 is mounted 23 cm above the source resonator on the bottom of the cabinet. A rectangular repeater resonator, 29 cm by 86 cm, comprising 10 turns of Litz wire and having a quality factor greater than 100 is placed inside a cabinet 24 cm above the source. In this exemplary embodiment, the repeater resonator is used to enhance the efficiency of power transfer between the wall-mounted source and the under-cabinet-mounted lights. Without the repeater resonator, the efficiency of power transfer was less than 5%. With the repeater resonator positioned as described, the efficiency of power transfer was greater than 50%.

Note that while certain embodiments have been described in terms of one source resonator and one device resonator, systems using multiple sources and/or multiple devices are encompassed by this description. Note too that the resonators may be tuned to be either source resonators, device resonators, or repeater resonators, simultaneously or alternately.

**High Power Resonator Enclosures**

In embodiments, high-$Q$ resonators and power and control circuitry may require special packaging or enclosures that confine high voltages or currents to within the enclosure, that protect the resonators and electrical components from weather, moisture, sand, dust, and other external elements, as well as from impacts, vibrations, scrapes, explosions, and other mechanical shocks. In embodiments, the packaging and enclosure may require special considerations for thermal dissipation to maintain an operating temperature range for the electrical components and the resonator in the enclosure. The packaging and enclosures may require special considerations to reduce losses or energy dissipation in materials or components of the enclosure or surroundings during wireless power transfer.

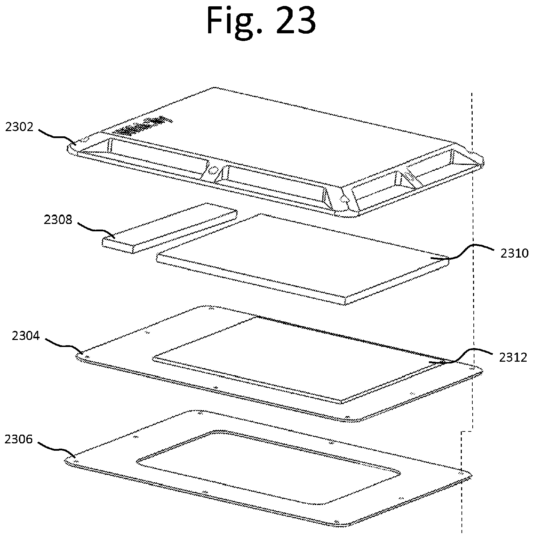

An exploded view of one embodiment of a resonator enclosure designed for vehicle charging applications is shown in Fig. 23. The enclosure includes a support plate **2306,** a layer or sheet of a good conductor **2304** a separator piece **2312,** and an enclosure cover **2302** that encloses the resonator **2310,** any or all of the power and control circuitry or electronic components **2308,** and any or all of the enclosure pieces. The support plate **2306** may be made from rigid materials that may support the structural integrity of the enclosure. For example, the support plate may be made from aluminum, steel, cast iron, brass, wood, plastic, any type of composite material, and the like, that provides sufficient rigidity for mounting the cover and sustaining the weight of the resonator which in some embodiments may be as much as 10 kilograms or as much as 20 kilograms. The support plate may comprise mounting holes for mounting the enclosure to a vehicle, in this exemplary embodiment.

A layer or sheet of good conductor **2304** may be included above the support plate **2306.** In some embodiments the layer or sheet of good conductor may be electrically and/or thermally isolated from the support plate. In other embodiments, it may be preferable to have the layer or sheet of good conductor in electrical and/or thermal contact with the support plate.

A separator piece **2312** may be located on top of the conductor sheet and may provide a certain separation distance between the layer or sheet of good conductor and the resonator **7910.** The preferable separation between the layer or sheet of good conductor and the resonator may depend on the operating frequency of the resonators, the dimensions of the resonators, the materials comprised by the resonators, the power level that will be transferred, the materials surrounding the resonators, and the like.

An enclosure cover **2302** may attach to the support plate in a manner that covers or encloses and protects the internal resonator and any internal components. For the enclosure design of Fig. 23, it may be preferable to use a planar resonator such as that depicted in Fig. 2D comprising a conductor wrapped around a rectangular form of magnetic material.

In embodiments, the layer or sheet of good conductor may comprise any high conductivity materials such as copper, silver, aluminum, and the like. In embodiments, the layer or sheet of good conductor may be thicker than the skin depth of the conductor at the resonator operating frequency. In embodiments, the layer or sheet of good conductor may be thicker than a few times the skin depth of the conductor at the resonator operating frequency. In embodiments, it may be beneficial for the conductor sheet to be larger than the size of the resonator, or to extend beyond the physical extent of the resonator, to shield the resonator from lossy and/or metallic materials that may be outside the enclosure and behind or beneath the support plate **2306.** In embodiments the conductor sheet may extend at least 1cm past the perimeter of the resonator. In other embodiments the conductor sheet may extend at least 2 cm past the perimeter of the resonator. In embodiments, the size of the conducting sheet may be chosen so that the perturbed $Q$ of the mounted resonator is at least 2% of the perturbed $Q$ of the resonator in the unmounted enclosure. In embodiments, the size of the conducting sheet may be chosen so that the perturbed $Q$ of the mounted resonator is at least 10% of the perturbed $Q$ of the resonator in the unmounted enclosure. In other embodiments, the size of the conducting sheet may be chosen so that the perturbed $Q$ of the mounted resonator is at least 25% of the perturbed $Q$ of the resonator in the unmounted enclosure. In embodiments, the size of the conducting sheet may be chosen so that the perturbed $Q$ of the mounted resonator is at least 50% of the perturbed $Q$ of the resonator in the unmounted enclosure. In other embodiments the conductor sheet maybe as large as possible and still fitting into the enclosure.

In embodiments the separator piece, that provides spacing between the conductor sheet and the resonator may be an electrical insulator. In embodiments it may be advantageous for the separator piece to also be a good thermal conductor that may provide for heat dissipation from the resonator. In embodiments the separator piece may include provisions for active cooling comprising air or coolant circulation. The separator piece may be approximately the same size of the resonator of the enclosure or it may be smaller than the resonator. The size of the separator piece may depend on the rigidity of the resonator. In embodiments the separator piece may provide for at least of 0.5 cm of spacing between the resonator and the conductor sheet. In other embodiments the separator piece may provide for at least 1 cm of spacing between the resonator and the conductor sheet. In embodiments, the separator sheet may be shaped to provide more separation for certain portions of the resonator.

In embodiments, the thickness and material of the separator piece may be chosen so that the perturbed Q of the enclosed resonator is at least 2% of the unperturbed $Q$. In embodiments, the thickness and material of the separator piece may be chosen so that the perturbed $Q$ of the enclosed resonator is at least 10% of the unperturbed $Q$. In embodiments, the thickness and material of the separator piece may be chosen so that the perturbed $Q$ of the enclosed resonator is at least 25% of the unperturbed $Q$. In embodiments, the thickness and material of the separator piece may be chosen so that the perturbed $Q$ of the enclosed resonator is at least 50% of the unperturbed $Q$.

In embodiments the enclosure cover may be made of a non-lossy material, preferably of a non-metallic material. In embodiments the enclosure cover may be made from plastic, nylon, Teflon, Rexolite, ABS (Acrylonitrile butadiene styrene), rubber, PVC (Polyvinyl chloride), acrylic, polystyrene, and the like. The material may be chosen to provide for sufficient structural strength to protect the resonator from impact, vibrations, and the sustained load on the cover. The material may be chosen to withstand the operating environment envisioned for the vehicle.

In embodiments, the enclosure may include additional layers to give added support, rigidity, ruggedness, tolerance, survivability, and the like. In embodiments, the enclosure may be mounted behind a Kevlar sheet or layer, or may be wrapped in Kevlar, in order to withstand bullets, grenades, improvised explosive devices (IEDs), and other weaponry. In environments, the enclosures may comprise special thermal materials, electrical materials, weatherproof materials, optical materials, and the like. In embodiments, the enclosures may include materials or parts to enable safety systems, control systems, monitoring systems, billing systems, and the like.

In some embodiments the enclosure and packaging may comprise electronic components and circuits. The electronic components may include capacitors, inductors, switches, and the like, of the resonator or capacitors, inductors, switches, and the like, used for impedance matching. In some embodiments the enclosure may enclose any and all parts of the power and control circuitry including amplifiers, rectifiers, controllers, voltage sensors, current sensors, temperature sensors, and the like. The power and control circuitry may require additional cooling or temperature regulation and may require an active cooling system or a connection to an external active cooling system that circulates air or coolant through the enclosure or parts of the enclosure. In embodiments it may be preferable to position or locate the electric or electronic components such that they are not in-line with the dipole moment of the resonator. In embodiments it may be preferable to position or locate the electric or electronic components such that they minimize the perturbed $Q$ of the resonator. In embodiments it may be preferable to position or locate the electric or electronic components underneath the layer or sheet of good conductor in the enclosure, so that the components are shielded from the electromagnetic fields generated by the resonator, and so the resonator is shielded from the lossy portions of the electric and electronic enclosure.

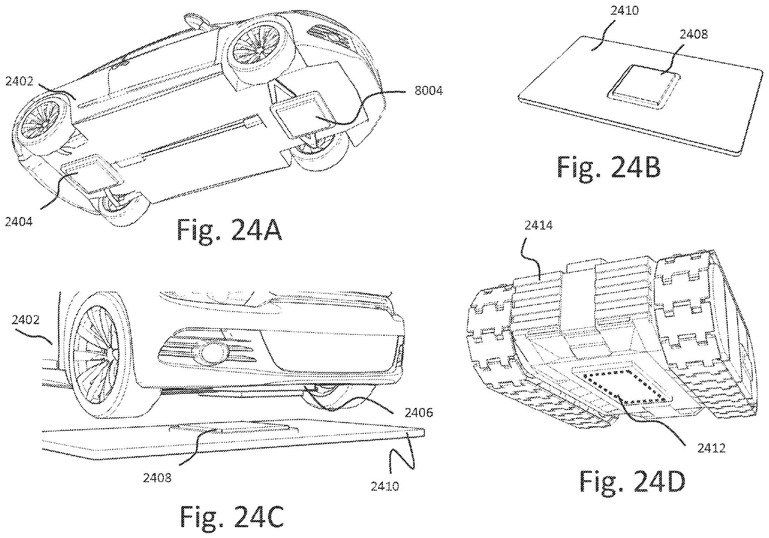

The enclosures with device resonators may be sized and designed to mount under a car, robot, a cart, a scooter, a motorcycle, a bike, a motorized dolly or platform, a forklift, a piece of construction equipment, a truck, or any other vehicle. A few exemplary mounting and charging configurations are as shown in Fig. 24. The device and source resonators and enclosures may be sized and configured for the appropriate power levels for each application which may be more than 3 kW for a car charging system or may be 500 W for a robot charging system. The device resonator may be configured to receive energy from a source resonator and may be used to recharge batteries, power electronics or devices, and the like of the vehicle. One or more of the enclosures and device resonators **2404** may be mounted on the underside of a vehicle **2402,** in the front of the vehicle, towards the back of the vehicle, and the like as depicted in Fig. 24A. A vehicle may have one enclosure mounted on the underside or it may have multiple resonators with enclosures mounted on the underside.

In embodiments the resonator and the enclosure may be mounted inside the vehicle. In some vehicles the floor panels, the wheel wells, the spare tire well, or other parts of the car may be constructed of non-lossy or non non-metallic material, such as plastic, carbon fiber, composites, and the like, providing a window for the magnetic fields to pass through while the resonator is inside the car.

In embodiments, the device resonator may include connections to the vehicle for coolant to provide active cooling or heating to the electronics, components, and resonators inside the enclosure.

In embodiments the source resonator may be mounted in an enclosure **2408** and integrated into a rubber mat **2410,** or a platform as depicted in Fig. 24B. The rubber mat and enclosure may be placed on the floor of a garage or parking space and may connect to a power source allowing wireless power transfer to a vehicle when a vehicle drives over the pad and the source resonator aligning the device resonator with the source resonator as depicted in Fig. 24C.

An appropriately size enclosure and resonator **2412** may be designed to fit on the underside of a robot, a remotely controlled or an autonomous vehicle **2414.** The robot may be designed with a docking cage or charging area with a source resonator that may transfer electrical power to the robot.

**Passive Component Compensation**

Parameters of electrical components of a wireless power transfer system may be impacted by environmental conditions and/or operating parameters or characteristics of the system. The electrical values and performance of components may be impacted by the temperature, humidity, vibration, and the like of the environment and the wireless power transfer system modules. Changes in temperature for example, may change the capacitance of capacitors, the inductance of the conducting loop inductor, the loss of magnetic materials, and the like. High ambient temperatures may affect electrical components, changing their parameters, which may in turn impact the parameters of the wireless power transfer system. For example, a rise in ambient temperature may increase the capacitance of a capacitor which may shift or change the resonant frequency of a resonator in a wireless power transfer system which in turn may impact efficiency of the power transfer.

In some applications the changes of parameters due to the operating point or operation of the system may negatively impact wireless power transfer. For example, operating a wireless power transfer system at high power levels may require large electrical currents in components causing increased power dissipation and a temperature increase of the components. The temperature increase may affect the capacitance, inductance, resistance, and the like of the components and can affect the efficiency, resonant frequency, and the like of the wireless power transfer system.

In some applications the changes of parameters due to the operating point may create a runaway effect that may negatively impact the performance of the wireless power transfer system. For example, power transfer and operation may heat components of the resonator, such as the capacitors, changing their effective capacitance. The change in capacitance may shift the resonant frequency of the resonator and may cause a drop in power transfer efficiency. The drop in power transfer efficiency may in turn lead to increased heating of components causing further change in capacitance, causing a larger shift in resonant frequency, and so on.

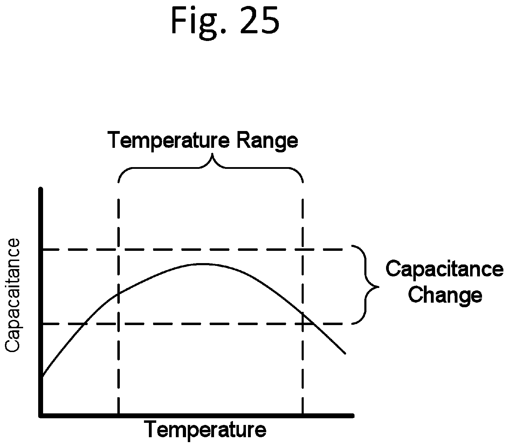

Fig. 25 shows a plot of the effect of temperature on the capacitance of one commercially available ceramic capacitor. Over the working temperature range of the capacitor, the capacitance value may change by 20%. For some technologies or types of capacitors the capacitance change over the working temperature range may be as much as 50% or 200% or more. The capacitance change as a function of temperature may be a monotonically increasing or decreasing function of temperature or it may be a complex function with one or more maxima and minima at one or more different temperatures. The shape and behavior of the capacitance curve as a function of temperature may be a design parameter for various capacitors technologies and the specific characteristics of a batch of components may be tailored during the design and manufacturing and of certain components. The design of temperature characteristics may be a tradeoff between other parameters such as breakdown voltage, total capacitance, temperature range, and the like and therefore for some applications the capacitance variations over its temperature range may not be completely customizable or optimizable.

In embodiments of a wireless power transfer system, components such as capacitors may be used in various parts of the system. Electrical components, such as capacitors, for example, may be used as part of the resonator and may set the resonant frequency of the resonator. Electrical components, such as capacitors, may be used in an impedance matching network and in other parts of the circuits as described herein. Changes in parameters of the components due to temperature may affect important characteristics of the wireless power transfer system such as the quality factor of the resonance, resonator frequency and impedance, system efficiency and power delivery and the like.

In some embodiments the changes in parameter values of components may be compensated with active tuning circuits comprising tunable components. Circuits which monitor the operating environment and operating point of components and system may be integrated in the design. The monitoring circuits may include tunable components that actively compensate for the changes in parameters. For example, a temperature reading may be used to calculate expected changes in capacitance of the system allowing compensation by switching in extra capacitors or tuning capacitors to maintain the desired capacitance.

In some embodiments the changes in parameters of components may be compensated with active cooling, heating, active environment conditioning, and the like.

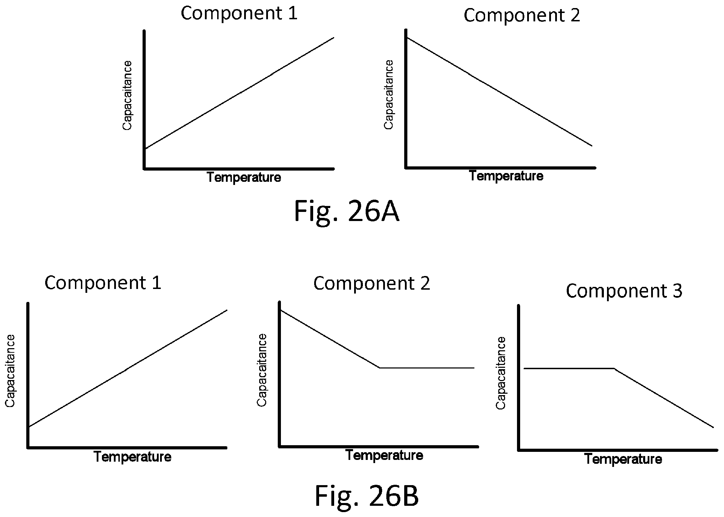

In some embodiments changes in parameters of components may be mitigated by selecting components with characteristics that change in a complimentary or opposite way or direction when subjected to differences in operating environment or operating point. A system may be designed with components, such as capacitors, that have opposite dependence or parameter fluctuations due to temperature, power levels, frequency, and the like. For example, some capacitors or other components of the system may be selected or designed such that they have positive temperature coefficient over a specific temperature range, i.e. the capacitance of the component increases as the temperature increases as shown in Fig. 26A. Some capacitors or other components in the system may be selected or designed such that they have a negative temperature coefficient over a specific temperature range, i.e. the capacitance of the component decreases as the temperature decreases as shown in the second plot of Fig. 26A. By selecting the coefficients appropriately a parallel placement of the two capacitor components with the opposite temperature coefficients may cancel out capacitance variations due to a temperature change. That is, as the capacitance of one component rises due a rise in temperature, the capacitance of the other component will decreases thereby causing a net zero change in the overall capacitance.

The passive parameter variation compensation may be advantageous for many applications. A passive compensation method may be less expensive and simpler than an active tuning method since no active sensors and no control or controller may be needed. A passive compensation method may be advantageous for applications where traditional controllers and sensors may not function or may be difficult to deploy. High temperatures, high radiation environments may make digital or analog active monitoring and control circuitry impractical or impossible to deploy. A passive compensation method may have higher reliability, may be smaller and less expensive, because it requires fewer net components to achieve system performance stabilization.

In embodiments the passive compensation method may be combined with active tuning and control methods or systems. Passive compensation may reduce the range over which an active tuning and control method and system may need to operate or compensate. In some embodiments the compensation due to passive components may not be adequate. Variations in thermal coefficients or component values may result in imperfect passive compensation and require additional active tuning. An addition of passive compensation to active tuning method may reduce the required tuning range requirement for the active tuning method. The active tuning may only be required to compensate for small changes and imperfections due to incomplete or partial passive tuning compensation, which may be a small fraction of the total change in parameters that would have required compensation if passive compensation was not included in the system.

In some embodiments the passive compensation may be implemented over a complete temperature range or operation range of the system. In some embodiments passive compensation may be implemented over a partial temperature or operation range of the system and may require extra tuning from an active tuning system or method.

Passive compensation may be achieved by various arrangements of components with various thermal parameters using components placed in series, parallel, or in any combination thereof. Passive compensation may be achieved with at least two components having different parameter variations that result from the same environmental or component changes. In some embodiments it may be necessary to use three or more components placed in series, parallel, or any combination thereof to obtain the necessary compensation over a desired range. For example, three components with capacitance curves shown in Fig. 26B may be placed in parallel to achieve passive compensation due to capacitance variations over their complete temperature range. In some embodiments one component may be used to offset the variation of several components.

In some system embodiments, specific parts of a resonator or system may be exposed to larger parameter fluctuations than other parts. For example, some parts of the circuits may heat more than others, due to localized exposure to sun, a heat source, higher loss components, an enclosure or ventilation block, and the like. It some systems it may be advantageous to distribute the components throughout an enclosure, resonator, circuit, or design to prevent temperature differences of temperature gradients that may affect components in a non-symmetric way.

In some embodiments the variation of component parameters may be used as a safety mechanism or they may be used to adjust or enhance parameters of power transfer. Components may be chosen or designed to have a specific or predetermined parameter deviation. For example, components, such as capacitors, may be chosen to have a sharp increase or decrease in capacitance beyond, below, or in between a certain temperature value. Capacitors with capacitance curves that have a sharp increase after a specific temperature may used in a device or power capture resonator to automatically detune the device resonator when a threshold temperature is reached. Such a characteristic may be used as a passive safety feature since excessive heat may mean that a device is exceeding its power rating. With proper component selection, the components may detune a device resonator from the resonant frequency of the source reducing the power captured by the device resonator preventing overheating or exceeding power ratings of the devices.

It is to be understood that the methods and designs outlined in this section are applicable to many different types of electrical components and many types of parameter variations. Although the methods and designs were outlined primarily using capacitors, capacitance, and temperature as the cause of capacitance variations it should be clear to those skilled in the art that the methods and designs may be used in a variety of other components of a wireless power transfer system. Similar behavior may be exploited to compensate for changes of inductance of inductors, capacitance of capacitors, reluctance and loss of magnetic materials, and the like due to temperature variations, voltage levels, current levels, humidity, vibration, barometric pressure, magnetic field strength, electric field strength, exposure to the elements, and the like.

In some embodiments the variations of parameters of one type of component may be compensated with a variation of another type of component. For example, variations in inductance of the resonator coil may be compensated by temperature variations of other components such as capacitors.

Electrical elements with the passive compensation may be placed in series, or in parallel, or may be distributed across the inductors of a resonator, a wireless power source, or a wireless power device.

## Exemplary Resonator Optimizations

Properties or performance of resonators and the parameters of wireless power transfer may be affected by changes in the structure, configuration, or operation of the resonators. Changes to the resonator configurations, structures, or operation may be used to optimize the quality factor of the resonator, change the distribution of magnetic fields, reduce losses, or reduce or change the interactions of the resonator with other objects.

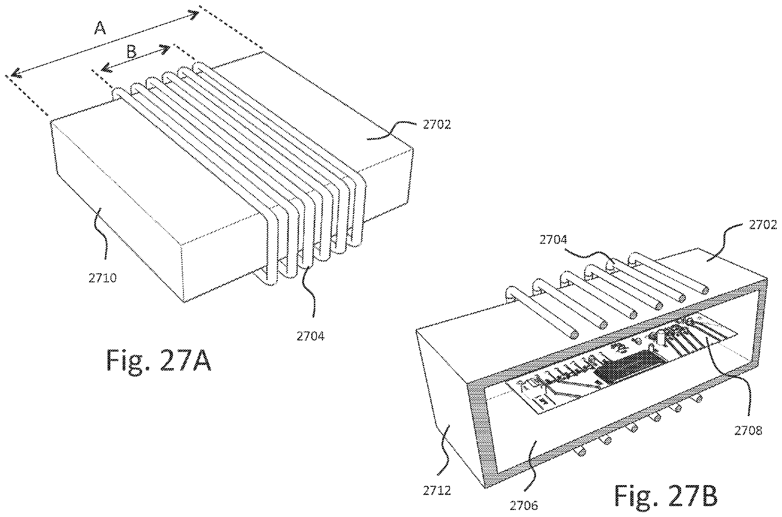

In embodiments, the span of the conductor loops wrapped around magnetic material may affect the magnetic field distribution around the resonator. For a planar resonator structure, or a resonator comprising a conductor wrapped around magnetic material such as depicted in Fig. 27A, the distribution of the magnetic field around the structure may be altered or affected by the span of the conductor winding. A conductor **2704** wrapped around a core of magnetic material **2702** that comprises the resonator structure may be wrapped to have a specific span that covers the magnetic material (the span is depicted by the dimension B in Fig. 27A). This span or dimension may be chosen or modified, for example, by winding the conductor with larger or smaller spacing between individual conductor loops, by varying the number of loops of the conductor around the magnetic material, and the like. The span of the conductor loops, compared to the span or dimension of the magnetic material around which the conductor is wrapped (defined as dimension A in Fig. 27A), may affect the maximum magnetic fields generated or localized around the resonator. For example, when the span of the conductor (dimension B in Fig. 27A) is substantially equal to the length of the magnetic material around which the conductor is wrapped (dimension A in Fig. 27A), the magnetic fields generated or induced in the resonator may be guided and concentrated by the conductor loops to the ends of the magnetic material resulting in relatively high magnetic fields at the endpoints of the magnetic material of the resonator **2710.** If the span of the conductor is much smaller than the length of the magnetic material around which the conductor is wrapped, the magnetic fields generated by the resonator may be concentrated close to the conductor loops resulting in a high magnetic field at those locations. For some systems or applications, the maximum magnetic field strength around the resonator may be a critical parameter and it may be preferable ensure that the magnetic fields are, as much as possible, substantially evenly distributed around the resonator as to eliminate or reduce "magnetic field hot spots" or areas with a relatively high magnetic field compared to other areas around the resonator. For a more uniform field distribution it may be preferable to have the conductor loops span substantially 50% of the total length of the core material and be centered such that equal amounts of the magnetic material extend past the conductor loops in the direction of the dipole moment of the resonator. For systems or applications for which the maximum magnetic field strength around a resonator may be a critical parameter it may be preferable to have the span of the magnetic material to be substantially twice the span of the conductor wrapped around the magnetic material **2704.**

The differences in distribution of the magnetic fields were observed when finite element method simulations were performed comparing the maximum magnetic field strengths for three different spans of conductor winding on the same magnetic material structure. The simulations modeled wireless power transfer between resonators comprising a block of magnetic material 45 cm wide by 45 cm long by 1 cm thick. The maximum magnetic field strengths were calculated for a configuration transferring 3.3 kW of power at a 21 cm separation between the two resonators operating and resonant at 175 kHz. The fields were calculated for resonators with ten loops of conductor wrapped around the magnetic material with a span of 10 cm, 20 cm, and 30 cm. For the configuration having a conductor span that is roughly half the span of the magnetic material (20 cm)the maximum magnetic field at a distance of 3 cm from the device resonator was $0.75 \times 10^{-3}$T RMS. For the conductor spans of 10 cm and 30 cm the maximum magnetic field strengths were both $0.95 \times 10^{-3}$T RMS and concentrated at the conductor or at the ends of the magnetic material respectively.

In systems and applications for which the maximum magnetic field strength may be a critical parameter it may also be preferable to reduce sharp edges or corners of the magnetic material that is wrapped with the conductor loops. It may be preferable to chamfer or radius the corners of the magnetic material.

In embodiments, positioning power and control circuitry of a resonator in an enclosure comprising magnetic material may be used to optimize the perturbed quality factor of a resonator. External circuit boards or electronics which may be part of the power and control circuitry and are often required to be located near a resonator may affect the parameters of the resonator and the wireless power transfer system. A circuit board or electronic components may load the resonator, induce losses, and affect the capacitance, quality factor, inductance, and the like of the resonator. In embodiments the power and control circuitry, which may include amplifiers, power converters, microprocessors, switches, circuit boards, and other lossy objects may be completely or partially enclosed inside the magnetic material of a resonator which may eliminate or reduce the perturbing effects of the circuitry on the resonator parameters.

A drawing of one embodiment that uses the magnetic material of the resonator to house electronic components in shown in Fig. 27B. The figure shows the cross section of a magnetic resonator that comprises conductor loops **2704** wrapped around magnetic material **2702.** The magnetic material **2702** may be a hollow shell such that some or all of the power and control circuitry **2708** or other electrical or electronic circuitry and devices may be inside the magnetic material **2702.** Positioning and enclosing circuitry inside the magnetic material of the resonator may eliminate or substantially reduce the perturbing $Q$ of the electronics on the resonator intrinsic $Q$ and the resulting wireless power transfer efficiency compared to the circuitry being placed outside, or close to the resonator but not enclosed in the magnetic material. The magnetic material enclosure may guide the oscillating magnetic fields generated by the conductor of the resonator or by an external source around and away from the circuitry and objects inside the magnetic material thereby preventing the magnetic fields from interacting with the lossy electronic components and/or other objects.

An exemplary II cm x 5 cm x 20 cm magnetic resonator comprising a hollow box of magnetic material with a 0.5 cm wall thickness and twenty loops of Litz wire conductor wrapped around the middle of the magnetic material may be used to demonstrate the impact of lossy materials on the quality factor of a resonator, and the ability of a hollow shell of magnetic material to reduce the perturbing $Q$ of these lossy materials. The intrinsic $Q$ of the exemplary resonator described above had a quality factor, $Q$ =360. A circuit board, which in some embodiments may be a circuit board containing power and control circuitry, placed directly on top of the resonator conductor on the outside of the magnetic material perturbed the resonator and reduced the perturbed quality factor of the structure to 130. However, placing the same circuit board inside the hollow box of magnetic material that comprised the resonator had no effect on the quality factor of the resonator, yielding a perturbed quality factor substantially equal to the intrinsic quality factor.

Tn embodiments the magnetic material of a resonator may include holes, notches, gaps, and the like that may be used for ventilation, communication, wiring, connections, mounting holes, cooling, and the like. When the power and control circuitry is configured to be mounted inside the magnetic material holes may be required for connection to the conductor or Litz wire on the outside of the resonator. In embodiments the magnetic material may have additional holes, gaps, spaces, voids, and the like on some or all faces or areas of the magnetic material that may have a minimal impact the quality factor of the resonator. For example, for the design depicted in Fig. 27B the walls of magnetic material **2712** on the opposite ends of the dipole moment of the resonator are less critical than the magnetic material on other sides and in some embodiments where minimizing the weight or cost of the resonator is a priority.

In embodiments the enclosure of magnetic material may comprise one or more sections, parts, tiles, blocks, or layers of similar or different magnetic materials. In some embodiments the magnetic material may require a substrate or supporting structure on to which the magnetic material is fastened, glued, or attached. In some embodiments, the surface of the magnetic material on the inside of the enclosure may be lined with one or more layers of a good electrical conductor, such as copper, silver, and the like. The inside of the magnetic material enclosure may further be lined with electrical insulator to prevent short circuits between the enclosure and any internal electrical components or devices. In some embodiments it may be preferable for the magnetic material enclosure to be designed from multiple parts such that it may be disassembled or assembled providing access to the internal electronics and components. In embodiments the magnetic material enclosure may be part of, or integrated into, device packaging surrounding the electronics of the device and the power and control circuitry of the resonator. The conductor loops of the resonator may wrap around the whole of the device and magnetic material enclosure. In embodiments, the magnetic material enclosure may be designed with a minimum number of critical seams and/or with cooling structures attached to reduce heating of the magnetic material as described above.

It should be clear to those skilled in the art that the shape of the magnetic material may include any number of extensions, protrusions, or various geometries while providing an enclosed structure in at least one part of the structure that can be used to completely or partially enclose objects such as circuit boards or electrical components. The designs and configurations may be further extended or modified to include features and designs described herein for resonators using magnetic materials or planar resonators such as using multiple conductors wrapped in orthogonal directions or combining the resonator with a capacitively loaded loop resonator without magnetic material.

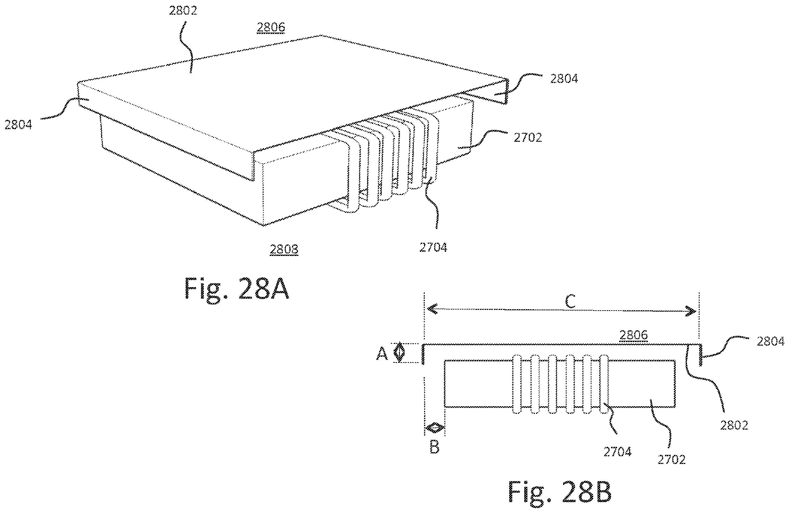

In embodiments, shaping a conductor sheet used for shielding a resonator from loss inducing objects may increase the effective size of the conductor shield or increase the coupling of the resonator without increasing the physical dimensions of the shield. Shaping a conductor shield may also reduce losses or energy dissipation into external objects during wireless power transfer and may increase the quality factor of the resonator in the presence of perturbing objects. As described herein, a sheet of high conductivity material positioned between a high- $Q$ resonator and its surrounding environment may reduce losses due to energy dissipation in objects in the surrounding environment but on the opposite side of the conductor sheet, as shown in Fig. 21. The dimensions of the conductor sheet may be reduced, or the effectiveness of the conductor shield may be improved by shaping the edges of the conductor sheet so they deflect magnetic fields away from objects around the sheet. Fig. 28A depicts a shaped conductor sheet **2802** above a resonator comprising a conductor **2704** wrapped around a block of magnetic material **2702.** Tn this configuration the conductor sheet **2802** shields any lossy objects above the sheet **2806** from the magnetic fields that may be induced or generated by the resonator below. In embodiments it may be preferable for the conductor sheet to have dimensions larger than the resonator or to extend past the resonator. Tn applications where the lossy objects are substantially larger than the resonator it may be beneficial to increase the dimensions or the size of the conductor sheet. However, in many applications the dimensions of the conductor sheet may be limited by practical considerations such as weight, available space, cost, and the like. The effectiveness or the effective size of the conductor sheet may be increased without increasing the physical area of the conductor sheet by shaping the edges of the conductor towards the resonator.

An exemplary embodiment of a conductor shield for the resonator comprising a conductor sheet with shaped edges is shown in Fig. 28A and Fig. 28B. In this exemplary embodiment, the ends the conductor shield **2802** are shaped or bent down, towards the resonator, producing two flaps **2804**. The shaped flaps **2804** of the conductor shield do not add to the overall length of the conductor shield (dimension C in Fig. 28B), but may improve the effective shielding of the conductor from lossy objects above **2806** the conductor shield. The conductor flaps may deflect and guide the magnetic field downwards reducing the field strength on the sides of the resonator and reducing the field interactions with lossy objects that may be above, or near the edge of the conductor shield. This configuration and shape of the conductor shield may increase the effectiveness of the conductor shield without increasing the length (dimension C in Fig. 28B).

In embodiments the shape, separation, and length of the conductor sheet flaps may be specifically configured for each application, environment, power level, positioning of other resonators, power transfer efficiency requirement, and the like. The length of the conductor shield flaps (dimension A in Fig. 28B) and the separation of the flaps from the resonator (dimension B in Fig. 28B) may be configured and changed to achieve desired power transfer parameters for each application

In an exemplary embodiment, the effectiveness of the conductor sheet shaping in resonator shielding applications may be demonstrated by finite element method simulations for exemplary shapes and sizes of conductor shield over a resonator comprising a 32 cm x 30 cm x 1 cm block of magnetic material wrapped with 10 loops of a conductor, spanning 20 cm of the magnetic material and wrapped such that the axis of the loops is parallel to the longest edge of the magnetic material. The resonator has a resonant frequency of 175 kHz and is positioned approximately 2 cm from an infinite sheet of steel, with the largest face of the magnetic material of the resonator parallel to the steel sheet. The perturbed quality factor of the resonator in the presence of the infinite sheet of steel may be calculated for various sizes and shapes of the conductor shield positioned between the resonator and the steel sheet. Without any shielding the perturbed quality factor of the resonator is calculated to be approximately 24. Placing a flat (unshaped) 42 cm by 47 cm copper shield between the resonator and the steel sheet improved the perturbed Q of the resonator to 227. Placing a flat (unshaped) 50 cm by 50 cm copper shield between the resonator and the steel sheet improved the perturbed Q of the resonator to 372. Shaping the conductor shields so that they had the same 42 cm by 47 cm, and 50 cm by 50 cm footprints, but now included 2.5 cm flaps on all edges improved the perturbed quality factors to 422 and 574 respectively. This exemplary embodiment shows just one way a conducting sheet may be shaped to improve the perturbed quality factor of a shielded resonator without increasing the footprint of the conductor shield.

It should be clear to those skilled in the art that the shape, size, and geometry of the conductor flaps may be varied and configured from the exemplary embodiments. Tn some embodiments the conductor shield may only be shaped on the edges that are perpendicular to the dipole moment of the resonator as depicted in Fig. 28. In some embodiments the conductor shield may be shaped on all sides. Tn some embodiments the length, size, thickness and the like of the flaps may not be uniform around the resonator. The size of the flap may be smaller for the side of the resonator with fewer loss inducing objects and larger on the side where there may be more loss inducing objects. In some embodiments the flaps may have one or more bends or curves. The flaps may be angled at 90 degrees or less with respect to the plane of the conductor.

### Repeater Resonator Modes of Operation

A repeater resonator may be used to enhance or improve wireless power transfer from a source to one or more resonators built into electronics that may be powered or charged on top of, next to, or inside of tables, desks, shelves, cabinets, beds, television stands, and other furniture, structures, and/or containers. A repeater resonator may be used to generate an energized surface, volume, or area on or next to furniture, structures, and/or containers, without requiring any wired electrical connections to a power source. A repeater resonator may be used to improve the coupling and wireless power transfer between a source that may be outside of the furniture, structures, and/or containers, and one or more devices in the vicinity of the furniture, structures, and/or containers.

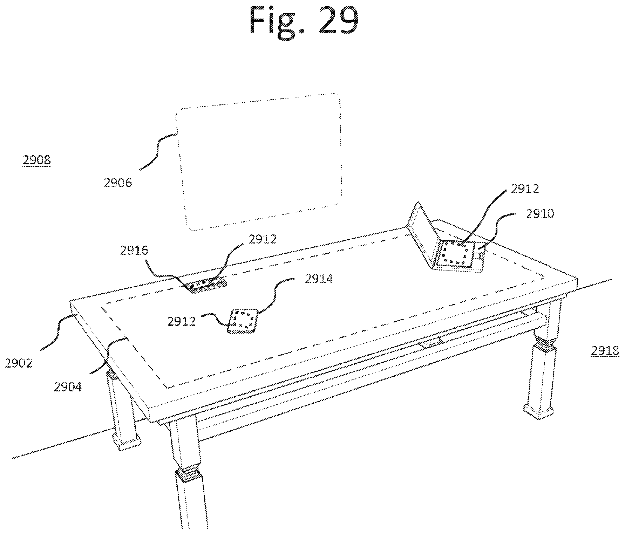

In one exemplary embodiment depicted in Fig. 29 a repeater resonator **2904** may be used with a table surface **2902** to energize the top of the table for powering or recharging of electronic devices **2910, 2916, 2914** that have integrated or attached device resonators **2912**. The repeater resonator **2904** may be used to improve the wireless power transfer from the source **2906** to the device resonators **2912**.

In some embodiments the power source and source resonator may be built into walls, floors, dividers, ceilings, partitions, wall coverings, floor coverings, and the like. A piece of furniture comprising a repeater resonator may be energized by positioning the furniture and the repeater resonator close to the wall, floor, ceiling, partition, wall covering, floor covering, and the like that includes the power source and source resonator. When close to the source resonator, and configured to have substantially the same resonant frequency as the source resonator, the repeater resonator may couple to the source resonator via oscillating magnetic fields generated by the source. The oscillating magnetic fields produce oscillating currents in the conductor loops of the repeater resonator generating an oscillating magnetic field, thereby extending, expanding, reorienting, concentrating, or changing the range or direction of the magnetic field generated by the power source and source resonator alone. The furniture including the repeater resonator may be effectively "plugged in" or energized and capable of providing wireless power to devices on top, below, or next to the furniture by placing the furniture next to the wall, floor, ceiling, etc. housing the power source and source resonator without requiring any physical wires or wired electrical connections between the furniture and the power source and source resonator. Wireless power from the repeater resonator may be supplied to device resonators and electronic devices in the vicinity of the repeater resonator. Power sources may include, but are not limited to, electrical outlets, the electric grid, generators, solar panels, fuel cells, wind turbines, batteries, super-capacitors and the like.

In embodiments, a repeater resonator may enhance the coupling and the efficiency of wireless power transfer to device resonators of small characteristic size, non-optimal orientation, and/or large separation from a source resonator. The efficiency of wireless power transfer may be inversely proportional to the separation distance between a source and device resonator, and may be described relative to the characteristic size of the smaller of the source or device resonators. For example, a device resonator designed to be integrated into a mobile device such as a smart phone **2912,** with a characteristic size of approximately 5cm, may be much smaller than a source resonator **2906,** designed to be mounted on a wall, with a characteristic size of 50 cm, and the separation between these two resonators may be 60 cm or more, or approximately twelve or more characteristic sizes of the device resonator, resulting in relatively low power transfer efficiency. However, if a 50 cm x 100 cm repeater resonator is integrated into a table, as shown in Fig. 29, the separation between the source and the repeater may be approximately one characteristic size of the source resonator, so that the efficiency of power transfer from the source to the repeater may be high. Likewise, the smart phone device resonator placed on top of the table or the repeater resonator, may have a separation distance of less than one characteristic size of the device resonator resulting in high efficiency of power transfer between the repeater resonator and the device resonator. While the total transfer efficiency between the source and device must take into account both of these coupling mechanisms, from the source to the repeater and from the repeater to the device, the use of a repeater resonator may provide for improved overall efficiency between the source and device resonators.

Tn embodiments, the repeater resonator may enhance the coupling and the efficiency of wireless power transfer between a source and a device if the dipole moments of the source and device resonators are not aligned or are positioned in non-favorable or non-optimal orientations. In the exemplary system configuration depicted in Fig. 29, a capacitively loaded loop source resonator integrated into the wall may have a dipole moment that is normal to the plane of the wall. Flat devices, such as mobile handsets, computers, and the like, that normally rest on a flat surface may comprise device resonators with dipole moments that are normal to the plane of the table, such as when the capacitively loaded loop resonators are integrated into one or more of the larger faces of the devices such as the back of a mobile handset or the bottom of a laptop. Such relative orientations may yield coupling and the power transfer efficiencies that are lower than if the dipole moments of the source and device resonators were in the same plane, for example. A repeater resonator that has its dipole moment aligned with that of the dipole moment of the device resonators, as shown in Fig. 29, may increase the overall efficiency of wireless power transfer between the source and device because the large size of the repeater resonator may provide for strong coupling between the source resonator even though the dipole moments of the two resonators arc orthogonal, while the orientation of the repeater resonator is favorable for coupling to the device resonator.

In the exemplary embodiment shown in Fig. 29, the direct power transfer efficiency between a 50 cm x 50 cm source resonator **2906** mounted on the wall and a smart-phone sized device resonator **2912** lying on top of the table, and approximately 60 cm away from the center of the source resonator, with no repeater resonator present, was calculated to be approximately 19%. Adding a 50 cm x 100 cm repeater resonator as shown, and maintaining the relative position and orientation of the source and device resonators improved the coupling efficiency from the source resonator to the device resonator to approximately 60%. In this one example, the coupling efficiency from the source resonator to the repeater resonator was approximately 85% and the coupling efficiency from the repeater resonator to the device resonator was approximately 70%. Note that in this exemplary embodiment, the improvement is due both to the size and the orientation of the repeater resonator.

In embodiments of systems that use a repeater resonator such as the exemplary system depicted in Fig. 29, the repeater resonator may be integrated into the top surface of the table or furniture. In other embodiments the repeater resonator may be attached or configured to attach below the table surface. In other embodiments, the repeater resonator may be integrated in the table legs, panels, or structural supports. Repeater resonators may be integrated in table shelves, drawers, leaves, supports, and the like. In yet other embodiments the repeater resonator may be integrated into a mat, pad, cloth, potholder, and the like, that can be placed on top of a table surface. Repeater resonators may be integrated into items such as bowls, lamps, dishes, picture frames, books, tchotchkes, candle sticks, hot plates, flower arrangements, baskets, and the like.

Tn embodiments the repeater resonator may use a core of magnetic material or use a form of magnetic material and may use conducting surfaces to shape the field of the repeater resonator to improve coupling between the device and source resonators or to shield the repeater resonators from lossy objects that may be part of the furniture, structures, or containers.

In embodiments, in addition to the exemplary table described above, repeater resonators may be built into chairs, couches, bookshelves, carts, lamps, rugs, carpets, mats, throws, picture frames, desks, counters, closets, doors, windows, stands, islands, cabinets, hutches, fans, shades, shutters, curtains, footstools, and the like.

In embodiments, the repeater resonator may have power and control circuitry that may tune the resonator or may control and monitor any number of voltages, currents, phases, temperature, fields, and the like within the resonator and outside the resonator. The repeater resonator and the power and control circuitry may be configured to provide one or more modes of operation. The mode of operation of the repeater resonator may be configured to act only as repeater resonator. In other embodiments the mode of operation of the repeater resonator may be configured to act as a repeater resonator and/or as a source resonator. The repeater resonator may have an optional power cable or connector allowing connection to a power source such as an electrical outlet providing an energy source for the amplifiers of the power and control circuits for driving the repeater resonator turning it into a source if, for example, a source resonator is not functioning or is not in the vicinity of the furniture. Tn other embodiments the repeater resonator may have a third mode of operation in which it may also act as a device resonator providing a connection or a plug for connecting electrical or electronic devices to receive DC or AC power captured by the repeater resonator. In embodiments these modes be selected by the user or may be automatically selected by the power and control circuitry of the repeater resonator based on the availability of a source magnetic field, electrical power connection, or a device connection.

In embodiments the repeater resonator may be designed to operate with any number of source resonators that are integrated into walls, floors, other objects or structures. The repeater resonators may be configured to operate with sources that are retrofitted, hung, or suspended permanently or temporarily from walls, furniture, ceilings and the like.

Although the use of a repeater resonator with furniture has been described with the an exemplary embodiment depicting a table and table top devices it should be clear to those skilled in the art that the same configurations and designs may be used and deployed in a number of similar configurations, furniture articles, and devices. For example, a repeater resonator may be integrated into a television or a media stand or a cabinet such that when the cabinet or stand is placed close to a source the repeater resonator is able to transfer enough energy to power or recharge electronic devices on the stand or cabinet such as a television, movie players, remote controls, speakers, and the like.

In embodiments the repeater resonator may be integrated into a bucket or chest that can be used to store electronics, electronic toys, remote controls, game controllers, and the like. When the chest or bucket is positioned close to a source the repeater resonator may enhance power transfer from the source to the devices inside the chest or bucket with built in device resonators to allow recharging of the batteries.

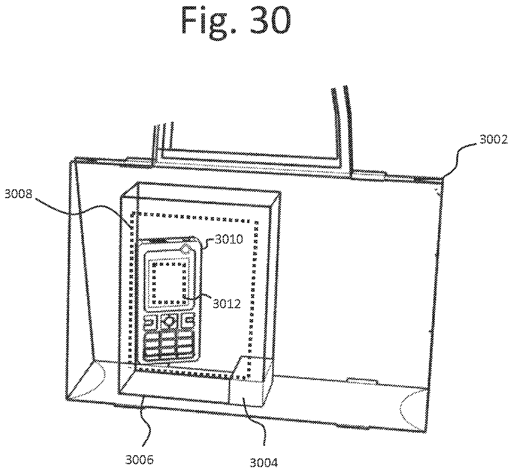

Another exemplary embodiment showing the use of a repeater resonator is depicted in Fig. 30. In this embodiment the repeater resonator may be used in three different modes of operation depending on the usage and state of the power sources and consumers in the arrangement. The figure shows a handbag **3002** that is depicted as transparent to show internal components. In this exemplary embodiment, there may be a separate bag, satchel, pocket, or compartment **3006** inside the bag **3002** that may be used for storage or carrying of electronic devices **3010** such as cell-phones, MP3 players, cameras, computers, e-readers, iPads, netbooks, and the like. The compartment may be fitted with a resonator **3008** that may be operated in at least three modes of operation. In one mode, the resonator **3008** may be coupled to power and control circuitry that may include rechargeable or replaceable batteries or battery packs or other types of portable power supplies **3004** and may operate as a wireless power source for wirelessly recharging or powering the electronic devices located in the handbag **3002** or the handbag compartment **3006.** In this configuration and setting, the bag and the compartment may be used as a portable, wireless recharging or power station for electronics.

The resonator **3008** may also be used as a repeater resonator extending the wireless power transfer from an external source to improve coupling and wireless power transfer efficiency between the external source and source resonator (not shown) and the device resonators **3012** of the device **3010** inside the bag or the compartment. The repeater resonator may be larger than the device resonators inside the bag or the compartment and may have improved coupling to the source.

In another mode, the resonator may be used as a repeater resonator that both supplies power to electronic devices and to a portable power supply used in a wireless power source. When positioned close to an external source or source resonator the captured wireless energy may be used by a repeater resonator to charge the battery **3004** or to recharge the portable energy source of the compartment **3006** allowing its future use as a source resonator. The whole bag with the devices may be placed near a source resonator allowing both recharging of the compartment battery **3004** and the batteries of the devices **3010** inside the compartment **3006** or the bag **3002.**

In embodiments the compartment may be built into a bag or container or may be an additional or independent compartment that may be placed into any bag or storage enclosure such as a backpack, purse, shopping bag, luggage, device cases, and the like.

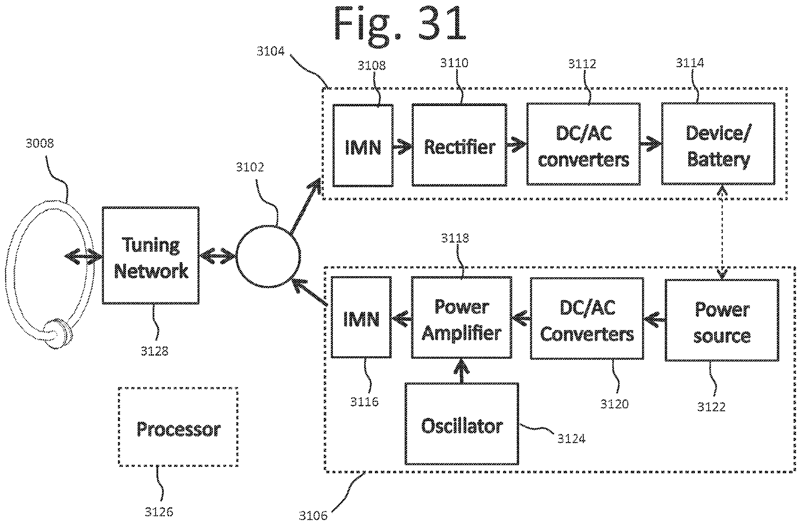

In embodiments, the resonator may comprise switches that couple the power and control circuitry into and out of the resonator circuit so that the resonator may be configured only as a source resonator, only as a repeater resonator, or simultaneously or intermittently as any combination of a source, device and repeater resonator. An exemplary block diagram of a circuit configuration capable of controlling and switching a resonator between the three modes of operation is shown in Fig. 31. In this configuration a capacitively loaded conducting loop **3008** is coupled to a tuning network **3128** to form a resonator. The tuning network **3128** may be used to set, configure, or modify the resonant frequency, impedance, resistance, and the like of the resonator. The resonator may be coupled to a switching element **3102,** comprising any number of solid state switches, relays, and the like, that may couple or connect the resonator to either one of at least two circuitry branches, a device circuit branch **3104** or a source circuit branch **3106,** or may be used to disconnect from any of the at least two circuit branches during an inactive state or for certain repeater modes of operation. A device circuit branch **3104** may be used when the resonator is operating in a repeater or device mode. A device circuit branch **3104** may convert electrical energy of the resonator to specific DC or AC voltages required by a device, load, battery, and the like and may comprise an impedance matching network **3108,** a rectifier **3110,** DC to DC or DC to AC converters **3110,** and any devices, loads, or batteries requiring power **3114.** A device circuit branch may be active during a device mode of operation and/or during a repeater mode of operation. During a repeater mode of operation, a device circuit branch may be configured to drain some power from the resonator to power or charge a load while the resonator is simultaneously repeating the oscillating magnetic fields from an external source to another resonator.

A source circuit branch **3106** may be used during repeater and/or source mode of operation of the resonator. A source circuit branch **3106** may provide oscillating electrical energy to drive the resonator to generate oscillating magnetic fields that may be used to wirelessly transfer power to other resonators. A source circuit branch may comprise a power source **3122,** which may be the same energy storage device such as a battery that is charged during a device mode operation of the resonator. A source circuit branch may comprise DC to AC or AC to AC converters **3120** to convert the voltages of a power source to produce oscillating voltages that may be used to drive the resonator through additional impedance matching components **3116.** A source circuit branch may be active during a source mode of operation and/or during a repeater mode of operation of the resonator allowing wireless power transfer from the power source **3122** to other resonators. During a repeater mode of operation, a source circuit branch may be used to amplify or supplement power to the resonator. During a repeater mode of operation, the external magnetic field may be too weak to allow the repeater resonator to transfer or repeat a strong enough field to power or charge a device. The power from the power source **3122** may be used to supplement the oscillating voltages induced in the resonator **3008** from the external magnetic field to generate a stronger oscillating magnetic field that may be sufficient to power or charge other devices.

In some instances, both the device and source circuit branches may be disconnected from the resonator. During a repeater mode of operation the resonator may be tuned to an appropriate fixed frequency and impedance and may operate in a passive manner. That is, in a manner where the component values in the capacitively loaded conducting loop and tuning network are not actively controlled. In some embodiments, a device circuit branch may require activation and connection during a repeater mode of operation to power control and measurement circuitry used to monitor, configure, and tune the resonator.

In embodiments, the power and control circuitry of a resonator enabled to operate in multiple modes may include a processor **3126** and measurement circuitry, such as analog to digital converters and the like, in any of the components or sub-blocks of the circuitry, to monitor the operating characteristics of the resonator and circuitry. The operating characteristics of the resonator may be interpreted and processed by the processor to tune or control parameters of the circuits or to switch between modes of operation. Voltage, current, and power sensors in the resonator, for example, may be used to determine if the resonator is within a range of an external magnetic field, or if a device is present, to determine which mode of operation and which circuit branch to activate.

It is to be understood that the exemplary embodiments described and shown having a repeater resonator were limited to a single repeater resonator in the discussions to simplify the descriptions. All the examples may be extended to having multiple devices or repeater resonators with different active modes of operation.

**Wireless Power Converter**

In some wireless energy transfer systems and configurations a wireless energy converter may be used to convert the parameters or configurations of wireless power transfer. In some embodiments a system may have one or more sources or one or more devices that arc capable or configured to operate and transfer wireless energy with one or more different and possibly incompatible parameters. A wireless energy converter may be used to translate or convert the parameters or characteristics of wireless power transfer allowing energy transfer between sources and devices that may be configured to receive or capture wireless energy with incompatible or different parameters. Note that throughout this disclosure we may use the terms wireless power converter, wireless energy converter, wireless converter, and wireless power conversion, wireless energy conversion, and wireless conversion interchangeably.

In embodiments a wireless power converter may be used to convert the characteristics of wireless power transfer and allow power transfer between a source and a device that may be designed or configured for wireless energy transfer with different parameters or characteristics. For example, a source resonator may be configured or designed to operate at a specific resonant frequency and may transfer energy via oscillating magnetic fields at that frequency. A device resonator may be configured or designed to operate at a different resonant frequency and may be designed or configured to receive energy wirelessly only if the oscillating magnetic fields are at, or close to, the device resonant frequency. If the resonant frequencies of the source and device are substantially different, very little or no energy may be transferred. A wireless power converter may be used to convert the wireless energy transferred by the source to have characteristics or parameters such that the wireless energy may be utilized by the device. A wireless power converter may, for example, may receive energy via oscillating magnetic fields at one frequency and use the captured energy to generate oscillating magnetic fields at a different frequency that may be utilized and received by the device with a different resonant frequency than the source.

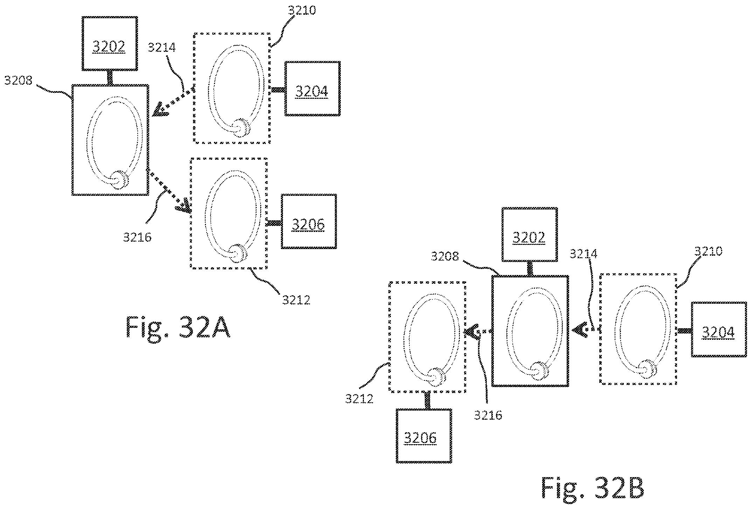

Fig. 32 shows exemplary functionality and uses of a wireless power converter. In wireless energy transfer systems one or more sources **3210** may generate oscillating magnetic fields **3214** at one or more frequencies. A wireless power converter **3208** may couple to the source **3210** and capture the energy from the oscillating magnetic field **3214** and transfer some or all of the captured energy by generating an oscillating magnetic field **3216** at one or more frequencies that may be different from the source resonator frequencies and that may be utilized by the device **3212.** It is important to note that the wireless power converter **3208** may not need to be located between the source **3210** and the device **3212,** but only in the general vicinity of both the source and device. Note that if a device is configured to operate or receive energy with different parameters or characteristics than what is generated by a source, the device may not receive significant amounts of power from the source, even if the source and device are close together. Tn embodiments, a wireless power converter may be used to adapt the parameters of the source to parameters that may be received by the device and may increase the efficiency of the wireless power transfer between what would be an incompatible source and device, in the absence of the converter. In some embodiments the wireless power converter may also serve as a repeater resonator and may extend, enhance, or modify the range of the wireless power transfer when it is placed between a source and a device or in the vicinity of the device.

A wireless power converter may be beneficial for many wireless power systems and applications. In some embodiments the wireless power converter may be used to convert the characteristics of wireless power transfer between normally incompatible resonators or wireless power transfer systems.

In some embodiments the wireless power converters may be utilized by the wireless power transfer system to manage, separate, or enhance the wireless power distribution between sources and devices of different power demands, power outputs, and the like. In embodiments, some wireless power transfer systems and configurations may employ devices with different power demands. Some devices in a system may have power demands for several hundred watts of power while other devices may require only a few watts of power or less. In systems without a wireless power converter, such differences in power demands and device power requirements may impose additional design constraints and limitations on the hardware and operation of the devices. For example, in a system where all devices arc configured to operate at the same frequency, the devices with lower power demands of a few watts may need to be designed to withstand the voltages, currents, and magnetic field strengths equal to those of a device requiring several hundreds of watts of power. In embodiments, circuit components comprised by lower power device resonators may be required to dissipate large amounts of power as heat. One way to reduce the high voltage, current, power, and the like, requirements on lower power devices may be to detune the lower power device resonant frequency from the high power source resonant frequency, or to use frequency hopping or time multiplexing techniques to periodically, or at adjustable intervals, decouple the device from the source. These schemes may reduce the average power received by the device, and may expand the range of components that may be used in the device because components capable of withstanding high voltages, currents, powers, and the like, for short periods of time, may be smaller, less expensive, and more capable than components that must sustain such voltages, currents and powers, for extended periods of time, or for continuous operation.

In embodiments, such as when the resonant frequency of a device is not tunable, or when the resonant frequency can be tuned to an operating point that supports wireless power transmission between a high power source and a lower power device, a wireless power converter may be used to support wireless power transfer.

In an exemplary embodiment, a wireless power configuration may wirelessly transfer two hundred watts or more of power from a source in a wall to a television. In such an embodiment, it may be useful to also supply wireless power to television remote controllers, game controllers, additional displays, DVD players, music players, cable boxes, and the like, that may be placed in the vicinity of the television. Each of these devices may require different power levels and may require power levels much lower than is available from the source. In such an embodiment, it may not be possible to adjust the power available at the source without disrupting the operation of the television, for example. In addition, the television remote controllers, game controllers, additional displays, DVD players, music players, cable boxes, and the like, may also be able to receive power from other wireless power sources, such as a lower power energized surface source, situated on a shelf or a table, as shown in Fig. 15 for example. Without a wireless power converter, it may be necessary to design the wireless power transfer hardware of the lower power devices to withstand the voltages, currents, and magnetic fields generated by a source capable of supplying hundreds of watts to a television, as well as to be efficient when the lower power devices receive power from a lower power energized surface source, for example. Circuits may be designed for the lower power devices that enable this type of operation, but in some embodiments, it may be preferable to optimize the lower power device circuits for operation with lower power sources, and to use a power converter to convert the high power levels available from a high power source to lower power levels, in some region of operation. A wireless power converter may capture some of the wireless energy generated by a high power source, may condition that power according to a variety of system requirements, and may resupply the conditioned power at different frequencies, power levels, magnetic field strengths, intervals, and the like, suitable for reception by the lower power devices referred to in this exemplary embodiment.

Tn some embodiments, for example, it may be preferable to operate high power devices requiring 50 watts of power or more at the lower frequencies such as in the range of 100 kHz to 500 kHz. Allowable magnetic field limits for safety considerations are relatively higher, and radiated power levels may be lower at lower operating frequencies. In some embodiments it may be preferable to operate smaller, lower power devices requiring 50 watts of power or less at higher frequencies of 500 kHz or more, to realize higher $Q$ resonators and/or to utilize electric and electronic components such as capacitors, inductors, AC to DC converters, and the like, that may be smaller or more efficient allowing for smaller and/or tighter resonator and power and control circuitry integration.

In embodiments a wireless power converter may be used to convert wireless power transferred from multiple sources with different parameters to a single source and may be used to convert wireless power parameters to be compatible with more than one device. In embodiments a wireless power converter may be used to amplify a specific wireless power source by converting wireless power from other sources working with different parameters.

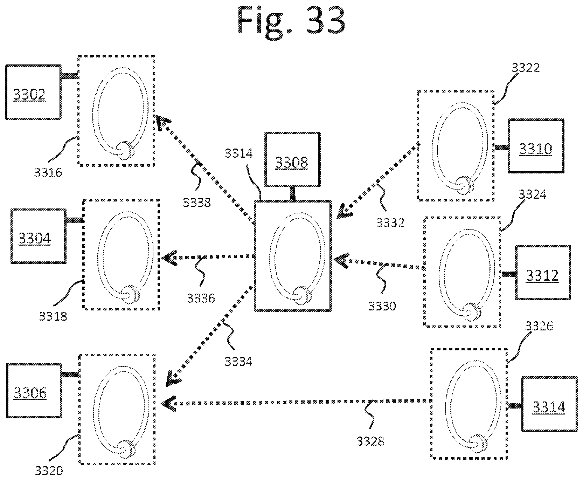

Exemplary embodiments of wireless power transfer system configurations employing wireless power converters are depicted in Fig. 33. As part of the configuration, a wireless power converter **3314** may capture energy from oscillating magnetic fields **3332, 3330** from one or more sources **3322, 3324** that may be configured or designed to operate with different parameters. The wireless power converter **3314** may capture the energy and generate a magnetic field **3334, 3336, 3338** with one or more different parameters than the sources **3322, 3324** from which the energy was received and transfer the energy to one or more devices **3316, 3318, 3320.** In another aspect of the configuration, a wireless power converter **3314** may be used to capture energy from one or more sources **3322, 3324** that may be designed to operate with different parameters and generate a magnetic field **3334** with parameters that match the field **3328** of another source **3326** providing "amplification" or a boost to a field from sources **3322, 3324** and fields **3330, 3332** with different parameters.

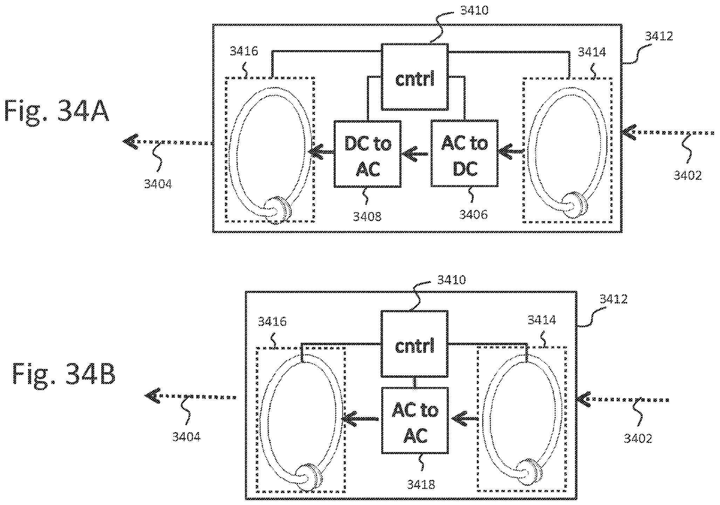

In embodiments a wireless power converter may comprise one or more magnetic resonators configured or configurable to capture wireless energy with one or more parameters and one or more resonators configured or configurable to transfer wireless energy with one or more parameters. For example, a wireless power converter designed to convert the frequency parameter of an oscillating magnetic field is depicted in Fig. 34A. The wireless power converter **3412** may have one or more magnetic resonators **3414, 3416** that are tuned or tunable to one or more frequencies. The oscillating voltages generated in the resonator **3414** by the oscillating magnetic fields **3402** may be rectified and used by a DC to AC converter **3408** to drive another resonator **3416** with oscillating currents generating an oscillating magnetic field **3404** with one or more different frequencies. In embodiments the DC to AC converter of the wireless power converter may be tuned or tunable using a controller **3410** to generate a range of frequencies and output power levels.

Tn embodiments the oscillating voltages of the receiving resonators **3414** may be converted to oscillating voltages at a different frequency using an AC to AC converter **3418** and used to energize a resonator **3416** of a wireless power converter without first converting the received voltages and currents to DC as depicted in Fig. 34B. In embodiments it may be preferable to configure and design a wireless power converter to convert the frequency of magnetic fields such that the captured and transferred magnetic fields are multiples of one another such that a diode, a nonlinear element, a frequency multiplier, a frequency divider, and the like, may be used to convert the frequency of the captured energy to a different frequency without first converting to a DC voltage.

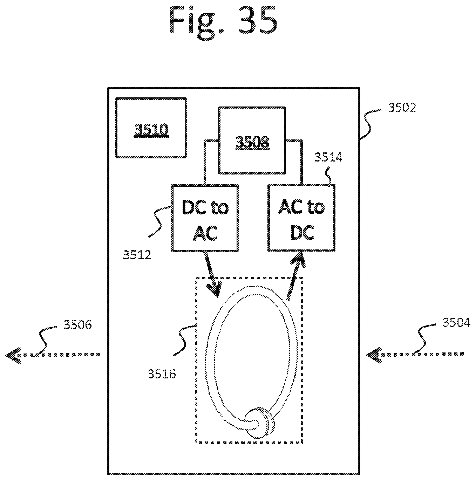

In embodiments a wireless power converter may include one or more resonators that are time multiplexed between capturing energy at one frequency and transferring energy at a different frequency. The block diagram of time multiplexed power converter is depicted in Fig. 35. A time multiplexed wireless power converter **3502** may be tuned to capture oscillating magnetic fields **3504,** convert the generated AC energy to DC energy using an AC to DC converter **3514,** and charge an energy storage element **3508** such as a super capacitor, battery, and the like. After a period of time, the resonator **3516** may be tuned to a different frequency and the energy stored in the energy storage element **3508** may be used to power an amplifier or a DC to AC converter **3512** to drive the tuned resonator **3516** with an oscillating voltage at the new resonant frequency thereby generating an oscillating magnetic field. In embodiments the resonator **3516** may change from capturing to transferring power every few milliseconds, seconds, or minutes. The resonator may be configured to change from capturing to transferring of power as soon as energy in the storage element reaches a predetermined level and may switch back to capturing when the energy in the storage element drops below a predetermined level. In embodiments a wireless power converter that converts power from a high power source to a device with low power requirements may only need to capture power for a small fraction of the time multiplexed cycle and slowly transmit power at the required device power level for the remainder of the cycle.

In an embodiment system utilizing wireless power converters, an area, room, or region may be flooded or energized with low power magnetic fields by multiple sources that may be integrated into walls, ceilings, partitions and the like. Different wireless power converters may be distributed or strategically located at different locations to capture and convert the low power magnetic fields to different frequencies, parameters, and power levels to transfer power to different classes or types of devices within the area. In system embodiments utilizing wireless power converters, sources may be configured or extended to function and operate with a large number of various devices with specialized power demands or configurations without requiring changes or reconfiguration of the sources.

In embodiments a wireless power converter may not require any additional energy input and may simply convert the parameters and characteristics of wireless power transfer. In embodiments the wireless power converters may have additional energy inputs from batteries, solar panels, and the like that may be used to supplement the energy transferred.

In embodiments the wireless power converter may be tunable and configurable such that it may be tuned or configured to convert from any number of frequencies or power levels or energy multiplexing schemes to any number of frequencies or power levels or energy multiplexing schemes. It may be adjusted automatically by sensing power levels or frequencies of a source, or the source with the strongest or appropriate magnetic field, for example. The converter may include communication or signaling capability to allow configuration by a source or sources, device or devices, repeater or repeaters, master controller or controllers or other converters, as to parameters of the conversion that may be desired or required. The converter may communicate or signal to a source or sources to turn on or off, or to increase or decrease power levels, depending on the power requirements of the device or devices, repeater or repeaters, to which the converter is transferring energy or for which the converter is adapting, converting, or translating, the characteristics of the wireless power transfer.

Although many of the specific embodiments of a wireless power converter have been described in terms of a converter that changes the frequency of an oscillating magnetic field it is to be understood that frequency is an exemplary parameter and other parameters may be converted. In embodiments a power converter may change any number of parameters including phase, amplitude, and the like. In some embodiments a wireless power converter may change the sequence or timing of frequency hopping, or allow a single frequency source to power devices that employ or expect a constant or periodic frequency hopping mode of operation. In some embodiments, the converter may use time multiplexing techniques to adjust power levels, power distribution algorithms and sequences, and to implement preferential or hierarchical charging or powering services.

In embodiments a wireless power converter may convert the parameters of wireless power transfer and may also, or instead, change the distribution of the fields generated by a source field. A wireless power converter may include multi-sized or variable size resonators that may be configured to redistribute the magnetic field of a source to allow or enhance operation with a device of a different size or at different separations. In embodiments a small source resonator may not be the most efficient at transferring power to a large device resonator. Likewise, a large source resonator may not be the most efficient at transferring power to a small device resonator. A wireless power converter may include two or more differently sized resonators that capture and redistribute the magnetic field for improved efficiency of wireless power transfer to device resonators without requiring changes or reconfiguration of the source or device resonators.

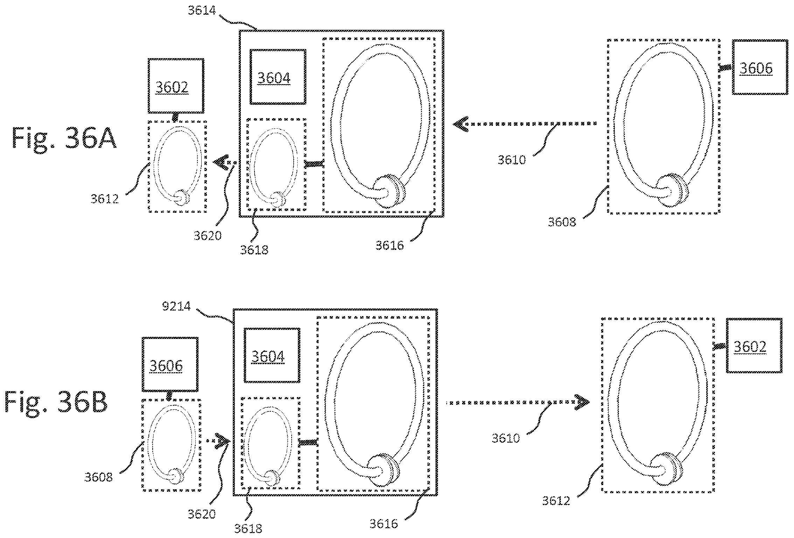

For example, as depicted in Fig. 36A, a wireless power converter **3614** with a large capture resonator **3616** and a small transmitting resonator **3618** may be placed close to a small device resonator **3612** and may improve the wireless power transfer efficiency between a large distant source resonator **3608** and a small device resonator **3612.** Likewise, as depicted in Fig. 36B, a wireless power converter **3614** with a small capture resonator **3618** and a large transmitting resonator **3616** may placed close to a small source resonator **3608** and may improve the wireless power transfer efficiency between a large distant device resonator **3612** and the small source resonator **3608.** The converter resonator may include one or more capture resonators that are sized to maximize the efficiency of wireless power transfer from the source resonator to the converter resonator and one or more transfer resonators that are sized to maximize the efficiency of wireless power transfer from the converter resonator to the device resonator. In some embodiments energy captured by the capture resonator may be used to directly power the transmitting resonator. In embodiments the energy captured by the capture resonator may be converted, modified, metered or amplified before being used to energize the transmitter resonator. A wireless power converter with differently sized resonators may result in improved system efficiency.

## Vehicle Charging Configurations

Wireless power transfer may be used for powering, charging, or delivering electrical energy to a vehicle. As described above, power may be delivered to a vehicle from one or more source resonators generating magnetic fields outside of a vehicle to one or more device resonators on, under, alongside, attached to, and the like, a vehicle, for charging a vehicle battery or for charging or powering electronic systems and devices in or on a vehicle.

In embodiments the source and device resonators of the vehicle charging system may require specific alignment or may have limits on operating parameters such as separation distance, lateral offset, axial misalignment, and the like. In embodiments the wireless power transfer system may include designs which ensure, enable, monitor, or facilitate that the distance, offset, alignment, and the like arc within the specified operating parameters of the system. Tn embodiments the wireless power transfer system may include designs and systems which enable, monitor, or facilitate that the distance, offset, alignment, and the like are the best feasible or optimum operating characteristics with respect to safety, efficiency, magnitude of power transfer, and the like, for a specific configuration.

In car embodiments, for example, a device resonator mounted underneath the car may receive power from a source positioned under the car. A car may receive power, charge batteries, power peripherals, and the like from the energy captured by the device resonator by driving or parking over the source. Depending on the size, type, design, orientation, power levels, surroundings, and the like, the car source and the car may need to be positioned within a specific boundary or location with respect to the source. The wireless power transfer system may include features that enable, facilitate, guide, promote, or ensure proper orientation, position, or alignment of the source and device resonators or the vehicle.

In embodiments a digital camera coupled to a machine vision system may be used to aid or automate source and device resonator alignment. A video camera image of the source and device resonator may be displayed to the user in the vehicle providing guidance as to the location of the source. In some embodiments the camera and machine vision may be coupled with a processing unit and appropriate machine vision algorithms and preprocess alignment and positioning of the car to alert a user with positional information using auditory, vibrational, or visual indicators. The processing and alignment algorithms may include positioning and location information from other systems of the vehicle such that the positioning and location indicators take into account obstructions or position limitations of the car. For example, the processing and alignment algorithms may be coupled to infrared or acoustic sensors in the bumpers of the car to aid in the positioning within the confines of a parking space, garage, and the like.

In embodiments the camera system or machine vision system may be coupled with a processing unit and appropriate machine vision algorithms used to automate the process or parts of the process of resonator alignment. In some embodiments the source or device may be mounted on robotic, or automated tracks, arms, platforms that move into alignment using the camera for positioning and orientation information. In some embodiments the camera, machine vision algorithms, and processing unit may be coupled to a vehicle's sensors and controls allowing the car to position and park itself in proper alignment with the source.

Tn embodiments a camera system or machine vision system may detect, or help to detect obstructions and foreign objects and/or materials between the source and device resonators. In embodiments the camera and machine vision system may constantly monitor the gap and/or vicinity around the source and device for movement, extraneous objects, or any type of undefined or abnormal operating environments or configurations. The system may be designed to stop power or limit power transfer and may be designed to alert the driver, user, or operator when any undefined or abnormal operating environments or configurations are detected by the camera and/or algorithms. In embodiments the camera and machine vision system may be coupled or controlled with self learning or trainable algorithms that can be designed to function in or with a wide variety of environments, vehicles, sources, and systems and may learn or be trained to operate in many environments after periods of supervised operation.

Tn embodiments the camera may be mounted in or around the source and may transmit video or processed information wirelessly to electronics or users inside or outside the vehicle. In embodiments the camera may be mounted on the car and may be mounted under the car. In embodiments the camera may be fitted with an automated door or housing that opens only when the alignment procedure is initiated or when the device or source are in close proximity. The mechanical door or housing may open and close only as needed protecting the camera lens and electronics from road debris, water, dirt, and the like.

In embodiments, transmitted and/or reflected acoustic, microwave, RF, optical, and the like signals may be used to automatically, or with the help of a user, align source and device resonators to within a specified accuracy. The specified accuracy may be a user settable parameter or it may be a parameter that is set by a control system. The settable parameter may be adjusted depending on the time of day, the demand on the electric grid, the cost of electricity (quoted in kW hours for example), the availability of green energy and the like. The settable parameter may be controlled by a utility provider, by a local agency, by the car company, by a services company, by an individual user, and the like.

In embodiments various sensor systems may be used to aid or automate source and device resonator alignment. Acoustic, pressure, contact, inductive, capacitive, and the like sensors may be located in or around the vehicle to determine the vehicles position and guide the user of operator of the vehicle to establish the best alignment. Various bumpers, lasers, balls, whistles, scrapers, strings, bells, speakers, and the like may also be used as indicators to the users or operators for proper alignment positioning. In embodiments any number of parking guides, or parking assistant devices may be incorporated into the system to help guide or position the vehicle in proper or within the acceptable limits of the source.

In embodiments one or more pressure, temperature, capacitive, inductive, acoustic, infrared, ultraviolet, and the like sensors may be integrated into the source, device, source housing, vehicle, or surrounding area and may detect, or help to detect obstructions and foreign objects and/or materials between the source and device resonators. In embodiments the sensors and safety system may constantly monitor the gap and/or vicinity around the source and device for movement, extraneous objects, or any type of undefined or abnormal operating environments or configurations. In embodiments, for example, the housing covering the source resonator may include or may be mounted on top of a pressure sensor that monitors the weight or forces pushing on the enclosure of the source resonator. Extra pressure or additional detected weight, for example, may indicate a foreign or unwanted object that is left on top of the source indicating that it may be unsafe or undesirable to operate the wireless power transfer system. The output of the sensor may be coupled to the processing elements of the wireless power transfer system and may be used to stop or prevent wireless power transfer or prevent when the sensor is tripped or detects abnormalities. In embodiments the system and sensor may be coupled to auditory, visual, or vibrational indicator to alert the user or operator of the wireless power transfer interruption. Tn some embodiments multiple sensors, sensing multiple parameters may be used simultaneously to determine if an obstruction or a foreign object is present. In some embodiments the system may be configured such that at least two sensors must be tripped, such as a pressure and a temperature sensor, for example, to turn off or prevent the wireless power transfer.

In embodiments a theft deterrent or detection system may be incorporated into the source and device that utilizes the various sensors and cameras of the wireless power transmission system to detect unauthorized use of the vehicle.

In embodiments the source and device resonators may be of non-identical dimensions and geometries to reduce the dependence on alignment of the efficiency of power transfer between source and device coils. In some embodiments it may be beneficial to make the source resonator larger than the device resonator which may increase the positional tolerance for a desired energy transfer efficiency between the source and device resonators.

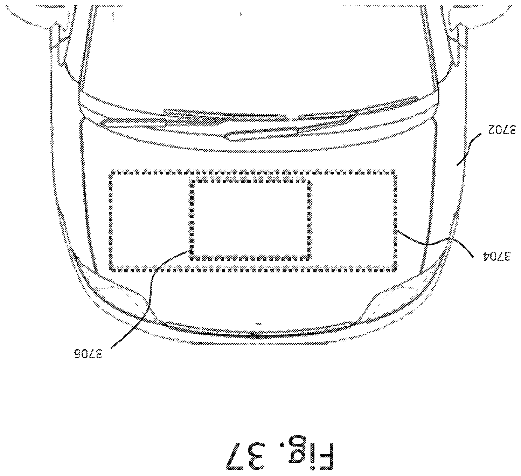

In embodiments various geometries of source and device resonators may be used to reduce the effects of source and device misalignments, such as those that may be associated with parking variations. Parking variations may include forward and back variations, side-to-side variations, angular offsets (when the vehicle is parked at an angle), and the like. For example, in some embodiments the source and device resonators may be prone to variations in alignment in the forward and backward direction of the vehicle. Tn such embodiments, the use of rectangular source inductive loop, oriented with the long axis of the inductive loop parallel to the direction of vehicle positional uncertainty paired with a square device resonator having the same short axis length as the source resonator may yield a better average efficiency as a function of source-to-device resonator displacement than would be achieved by a square source resonator with the same dimensions as the device resonator. Note that the long axis of a rectangular source inductive loop may be aligned with the length of the vehicle, if the positional uncertainty is in that direction and may be aligned with the width of the vehicle if side-to-side positional uncertainty is expected. An exemplary embodiment, showing the relative geometries of a source and a device inductive loop for reducing lateral or side-to-side offset dependency on the vehicle is shown in Fig. 37. The figure shows exemplary relative geometries from the top perspective looking down at the car when the source resonator is located below the car and the device resonator is mounted to the underside of the car. To increase the side to side offset capability of the car 3702 the capacitively loaded loop resonators comprising the source and the device may be of different dimensions. The dimensions of the source 3704 may be larger in the in the side to side dimension or axis of the car than the dimensions of the device 3706.

In embodiments the effects of misalignment between a source and a device may be mitigated or limited with resonator designs that do not require precise alignment. In embodiments the source and device resonator may include planar resonators or resonators comprising a conductor wrapped around a core of magnetic material. In embodiments the dipole moment of the planar resonators may be oriented perpendicular to the dimension of vehicle position uncertainty. The design of the resonators may allow misalignments perpendicular to the dipole moments of the resonators with minimal effects of power transfer efficiency.

In embodiments, device resonators and their respective power and control circuitry may have various levels of integration with other electronic and control systems and subsystems of a vehicle. In some embodiments the power and control circuitry and the device resonators may be completely separate modules or enclosures with minimal integration to existing systems of the vehicle, providing a power output and a control and diagnostics interface to the vehicle. In other embodiments the device resonator or parts of the resonator housing may be integrated into the body, structure, undercarriage, panels of the vehicle. In some embodiments the vehicle may be configured to house a resonator and circuit assembly in a recess area underneath the vehicle making the bottom face of the coil enclosure flush with the underbody. In some embodiments the recessed area may be further lined with a highly conductive material such as aluminum, copper, silver and the like which may electroplated, laminated, sprayed, applied, and the like to the recessed area.

In embodiments the device and source may include active cooling or heating. The device resonator and circuitry may be integrated into a vehicle's cooling system to prevent high temperatures in high power applications. In embodiments the device resonator and circuitry may include its own active cooling or heating system with radiators, fans, liquid coolant, and the like. In embodiments the resonators and power and control circuitry may include various shapes, profiles, protrusions, heat sinks, and the like to aid in temperature control.

In wireless power systems the vehicle power control system may include a power station reservation system that allows users to reserve charging stations for specific times of the day preventing others users from charging from the source. Central information may be used to let users choose specific power sources or sources which use more environmentally friendly sources of energy such as wind or solar power.

In embodiments the device resonator of a vehicle may also be used as a power source. In embodiments vehicle power may be used to power a building during a blackout or a cabin without power. In embodiments the vehicle may be used to transmit power to construction vehicles or tools at a job site.

## Resonator Arrays

In embodiments two or more smaller resonators or two or more blocks of magnetic material wrapped with conductor may be arranged to form a larger resonator with an effective size that is larger than the physical size of the smaller resonators or larger than the size of the blocks of magnetic material. A resonator with a larger effective size may have improved coupling over a larger distance, may have a higher efficiency, improved invariance with respect to positional uncertainty, may be able to transfer higher power levels, and the like. An arrangement of smaller resonators or smaller blocks of magnetic material may offer advantages over a single large resonator with respect to manufacturability, cost, scalability, variability, and the like.

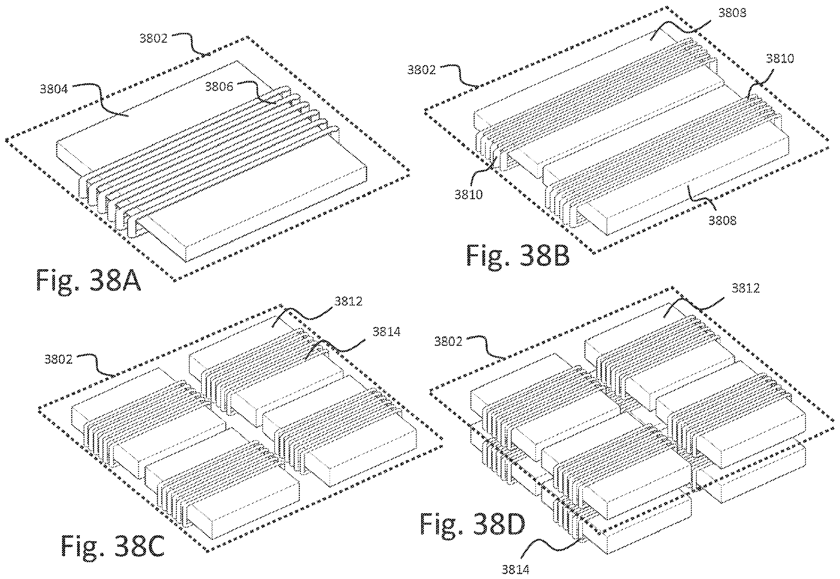

For example, in embodiments as shown in Fig. 38A a planar resonator comprising a conductor **3806** wrapped around a block of magnetic material **3804** may be implemented using one single resonator or one block of magnetic material. The resonator may comprise a substantially continuous block of magnetic material **3804** with a conductor **3806** wrapped around the complete width of the magnetic material forming loops with an enclosed area that are substantially equal to the cross section of the block of magnetic material. The resonator may have an effective size **3802** that is substantially equal to the physical dimensions of the resonator.

In other embodiments, a planar resonator may be implemented using an arrangement of two or more smaller resonators or blocks of magnetic material. These smaller resonators may comprise smaller blocks of magnetic material wrapped by conductors forming loops with enclosed areas that are substantially equal to the cross sectional area of the blocks of magnetic material. As depicted in an example embodiment in Fig. 38B, two smaller blocks of magnetic material **3808,** each wrapped with a conductor **3810** may be arranged side by side to create a resonator with an effective size **3802** that is substantially equal to the physical dimensions of the arrangement of the two blocks of magnetic material. In embodiments, more than two blocks of magnetic material, each comprising a conductor **3814** wrapped around the blocks **3812,** may be arranged in two or three dimensional arrays as depicted in Fig. 38C and Fig. 38D to create a larger effective resonator that has an effective size **3802** that is substantially equal to the physical dimensions of the arrangement of the blocks of magnetic material. The arrays of smaller resonators may be sized and arranged to create an array with the desired effective size and shape and the array may be used instead of a resonator comprising a single substantially continuous block of magnetic material.

In embodiments each block of magnetic material wrapped with a conductor may be treated as a separate resonator and may be coupled to additional electrical elements such as capacitors or inductors for parameter adjustment of each individual block. In other embodiments some or all of the conductors wrapped around the blocks of magnetic material may be connected together and coupled to additional electrical elements such as capacitors, inductors, and the like to make the complete arrangement of blocks of magnetic material and conductors a single resonator. In embodiments, the multiple smaller inductive or resonator structures may be connected in series, or in parallel, or in a network of serial and parallel connections.

Tn some embodiments, an arrangement of smaller resonators or arrangements of smaller blocks of magnetic material wrapped with a conductor may offer advantages over a single large resonator with respect to manufacturability, cost, scalability, variability, and the like. Magnetic materials are often brittle and a large continuous piece of magnetic material of the resonator, especially for a large resonator, may be susceptible to damage and cracking. Smaller arrays of resonators may be more resistant to vibrations and damage as it may be easier to isolate, reinforce, package, and the like the smaller separate blocks of magnetic material. Likewise, resonators comprising arrays of separate blocks of magnetic material wrapped with a conductor may be more scalable or expandable. A resonator array may be made larger or smaller by adding or removing individual resonator elements or adding or removing individual blocks of magnetic material from the array to increase or decrease the effective size of the resonator depending on the application or deployment configuration. Such arrangements may have advantages in that a large range of resonator effective sizes and shapes may be realized by assembling multiple smaller resonators. Then, a single or a few standard resonators may be stocked, tested, manufactured in volume, and the like, and used to support a wide variety of resonator sizes and shapes supplied for wireless power transfer systems.

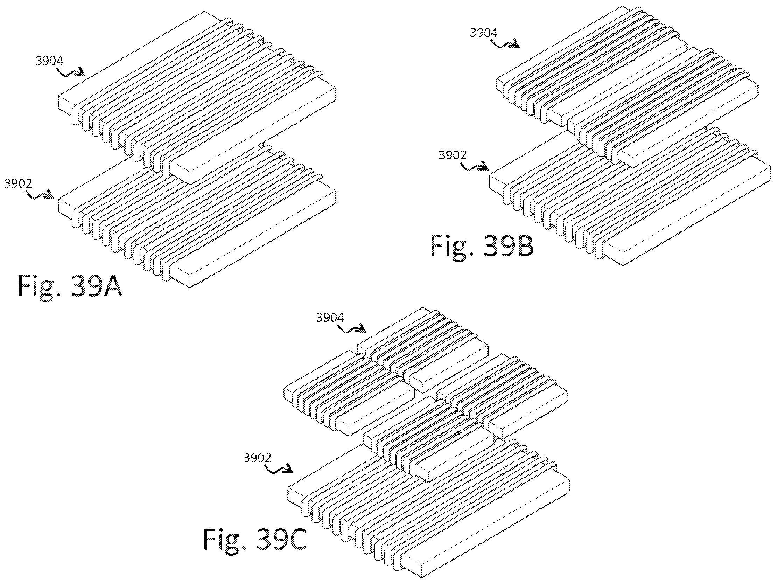

In embodiments, resonators comprising arrangements of smaller resonators or arrangements of blocks of magnetic material may have substantially the same or similar system parameters and wireless power transfer characteristics as a resonator with a larger, substantially continuous piece of magnetic material and may be used to replace or substitute resonators with a larger, substantially continuous piece of magnetic material without a significant impact on the performance or characteristics of wireless power transfer. In one embodiment of a wireless power transfer configuration, the parameters of wireless power transfer between a source and a device were calculated and compared using finite element method models for arrangements for which the device resonator **3904** was implemented as a conductor wrapped around a single substantially continuous blocks of magnetic material (Fig. 39A), for which the device resonator **3904** was implemented as two conductors wrapped around two equally sized blocks of magnetic material (Fig. 39B), and for which the device resonator **3904** was implemented as four conductors wrapped around four equally sized blocks of magnetic material (Fig. 39C). In each configuration of the device, the effective size of the resonator was maintained at 30 cm by 32 cm and was aligned directly 20 cm above a 30 cm by 32 cm source resonator **3902** comprising a conductor wrapped around a substantially continuous block of magnetic material. In the configuration where the device resonator comprises a single block of magnetic material as shown by **3904** in Fig. 39A, the quality factor of the effective device resonator was calculated to be 450, and the coupling factor k between the source and the device was calculated to be 0.124, resulting in a predicted wireless power transfer efficiency of 96.4% between the source and the device. In the configuration where the device resonator comprises two smaller blocks of magnetic material wrapped with a conductor and separated by a 0.1 cm gap of air, as shown by **3904** in Fig. 39B, the quality factor of the effective device resonator was calculated to be 437, and the coupling factor k between the source and the device was calculated to be 0.115 resulting in a predicted wireless power transfer efficiency of 96.2% between the source and the device. In the configuration where the device resonator comprises four smaller blocks of magnetic material wrapped with conductors separated by a 0.2 cm air gap, as shown in Fig. 39C, the quality factor of the effective device resonator was calculated to be 437, the coupling factor k between the source and the device was calculated to be 0.109 resulting in a predicted wireless power transfer efficiency of 96% between the source and the device.

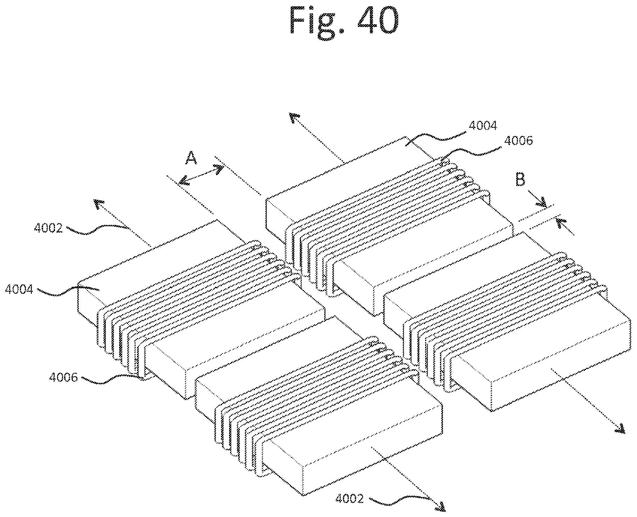

In embodiments, the parameters of the arrangement of resonators comprising smaller blocks of magnetic material may be affected by the orientation, positioning, arrangement, and configuration of the blocks of magnetic material, the conductor, and the like. One factor found to be of importance is the separation distance between the resonators and the smaller blocks of magnetic material that may comprise a resonator with a larger effective area. For example, consider a resonator with a large effective area comprising four separate smaller resonators with separate blocks of magnetic material is depicted in Fig. 40. The size of the separation distances, labeled as A and B in the Figure, may affect the parameters of the resonator and the efficiency of wireless power transfer. For example, for the configuration and orientation depicted in Fig. 39C and described above, changing both dimension A and dimension B from 0.2 cm to 2cm reduced the efficiency of wireless power transfer from the source to the device from 96% to 94.8%.

In embodiments it may be preferable to minimize the gaps between the blocks of magnetic material, and may be especially preferable for gaps that are not parallel to the axis of the dipole moments **4002** of the resonators. In embodiments the size of an acceptable or preferable air gap may be dependent on the overall or effective size of the larger resonator, the size of the individual small resonators, power levels, and the like. In embodiments it may be preferable to ensure that the gaps between the blocks of magnetic material be smaller than 10% of the largest dimension of the effective size of the resonator arrangement. In embodiments it may be preferable to ensure that the gaps between the blocks of magnetic material be smaller than 10% of the smallest dimension of the effective size of the resonator.

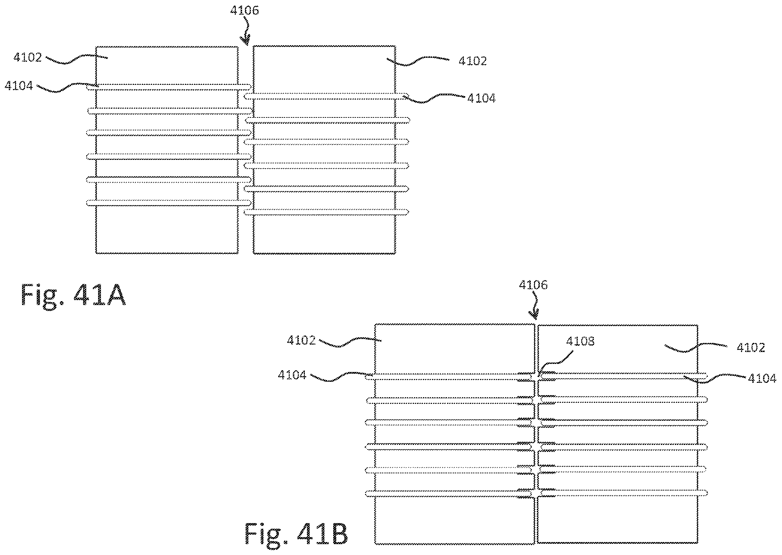

Tn embodiments, the individual smaller resonators or individual blocks of magnetic material wrapped with a conductor and comprising the effective larger resonator may include features, shapes, designs, notches, and the like to enable smaller separation gaps between the smaller blocks of magnetic material or the smaller resonators. In some embodiments, the gap **4106,** as shown in Fig. 41, between adjacent resonators may be reduced reduced by staggering the conductor windings **4104** of the adjacent resonators and allowing a conductor of a neighboring resonator to fit between adjacent windings of the conductor of an another resonator as shown in Fig. 41A. In some embodiments the blocks of magnetic material **4102** may be shaped and may have indentations, notches, holes, and the like **4108** to generate an indentation for the conductor **4104** allowing neighboring blocks of magnetic material to come close together and have a separation **4106** that may be smaller than the thickness of the conductor **4104** as shown in Fig. 41B.

In embodiments the gaps between the resonators may be filled completely or partially with magnetic material blocks, powder, epoxy, and the like. In some embodiments the magnetic material may be different from the blocks of magnetic material that comprise the smaller resonators. In some embodiments it may be preferable to use a flexible form of magnetic material which may prevent or reduce vibration or shock transfer between resonators.

In embodiments each of the smaller blocks of magnetic material comprising a larger effective resonator may be wrapped with separate pieces of conductors and coupled to separate tuning and matching networks. Each block of magnetic material with a wrapped conductor may be an individual resonator and may be tuned or adjusted independently from the other resonators. In embodiments each resonator or groups of resonators may be coupled to separate power and control circuitry which may be synchronized with an oscillator or clock to ensure all resonators and power and control circuitry are operating at the same frequency and phase or at predetermined frequencies and phase offsets. In embodiments a single power and control circuit may be used for all of the resonators and, in the case of a source, may drive all the resonators in parallel with an oscillating voltage, or in the case of a device, one power and control circuit may capture and convert the oscillating voltage on each resonator conductor.

In embodiments a single conductor may be used to sequentially wrap all or groups of blocks of magnetic material of the resonator. A conductor may be wrapped around one block of magnetic material and then wrapped around a second and so on providing a series connection between the conductors around multiple blocks of magnetic material. In such embodiments a single power and control circuit may be used to energize the conductor with oscillating current.

In embodiments the individual smaller resonators and blocks of magnetic material that comprise the resonator arrangement may all have substantially equal dimensions. In other embodiments the blocks of magnetic material may be non-uniform and may have varying thickness or irregular shapes.

In embodiments, the individual smaller resonators or individual blocks of magnetic material wrapped with a conductor comprising the effective larger resonator may all be wrapped such that all the loops formed by the conductor are coaxial or such that the axis of all the loops formed by the conductors are all parallel. In other embodiments, the conductors may be wrapped such that not all the axes of the loops formed by the conductors are parallel. Some blocks of magnetic material may be wrapped or arranged such the conductor forms loops with an axis that is perpendicular to other loops of other conductors and may be used to form a larger effective resonator that has, or has the capability of having a magnetic dipole moment in more than one direction.

In embodiments a resonator comprising an arrangement of smaller blocks of magnetic material may include blocks of magnetic material without a wrapped conductor.

In embodiments of a resonator comprising an arrangement of smaller blocks of magnetic material or smaller resonators the conductors may be selectively energized or activated depending on the power levels, distances, magnetic field limits, and the like during wireless power transfer. In embodiments, for example, a source resonator comprising an arrangement that includes multiple conductors may energize one or only a portion of the conductors when low levels of wireless power transfer are required and may energize most or all of the conductors when high levels of wireless power transfer are required.

In some embodiments different conductors or different numbers of conductors may be energized depending on the relative location of a source and a device including distance or lateral offset. For example, in embodiments for a vehicle charging application, where the source resonator may be of a larger dimension than the device resonator as shown in Fig. 37, the source resonator may comprise smaller blocks of magnetic material or smaller resonators for which only the blocks and conductors that are directly below the device resonator may be energized. In such an embodiment the source and device resonators may tolerate greater lateral offset while ensuring that the strongest magnetic fields are always confined to the area below the device resonator.

It is to be understood that any description of blocks of magnetic material, small or large, may refer to blocks that comprise a single monolithic block, tile, structure, crystal, sheet, square, shape, form, and the like, of magnetic material or may comprise any combination of separate smaller blocks, tiles, structures, crystals, sheets, squares, shapes, forms, and the like, of similar or different types of magnetic material that arc attached, packed, assembled or secured together to form a substantially continuous form.

**Integrated Resonator-Shield Structures**

In some embodiments and applications of wireless power transfer it may be necessary or desirable to place the resonator structure in close proximity to another object such as electronic devices, circuit boards, metallic objects, lossy objects, and the like. In some embodiments close proximity to some types of objects, such as batteries, circuit boards, lossy objects, and/or metals, may adversely affect or perturb the performance of the power transfer system. Close proximity to some objects may reduce the quality factor of one or more of the resonators involved in the power transfer or may impact the coupling between two or more of the resonators. In some embodiments the electromagnetic fields generated by the resonators may also affect objects around the resonator by, for example, affecting the operation of electronic devices or circuits, or causing heating of the object.

In embodiments, the effects of the electromagnetic fields on objects as well as the effects of objects on the parameters of wireless power transfer or parameters of the resonators may be at least partially mitigated by introducing a shielding structure between the resonator and the object. In some embodiments, the shielding structure and the resonator may be integrated into one structure allowing the resonator structure to be placed or located near an object with minimal effects on quality factor Q of the resonator and likewise minimal effects on the external object. In some embodiments, an integrated resonator and shield structure may be smaller in at least one dimension, than a structure comprising a resonator and a shield assembled from each of its parts separately.

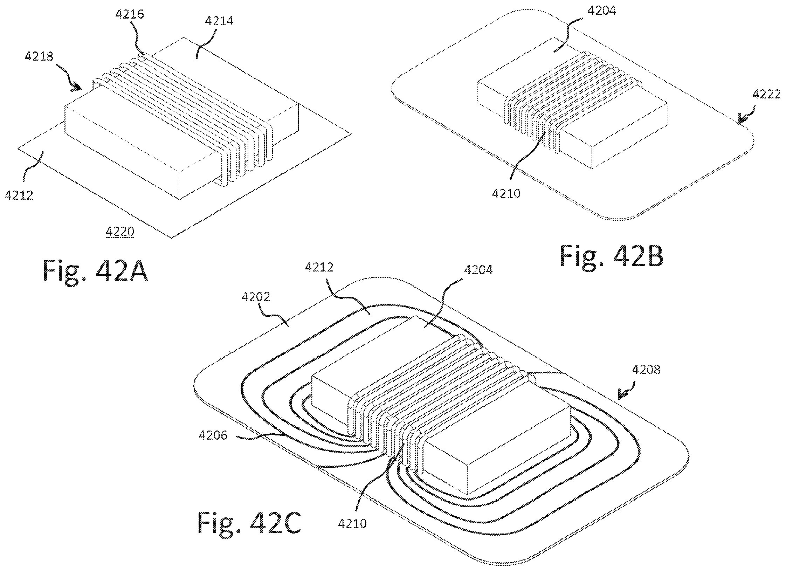

As described above, one method of shielding against perturbations from external objects for planar resonators, or resonators comprising a block of magnetic material, is to place a sheet of a good conductive material between the resonator and the object. For example, as shown in Fig. 42A for a planar resonator **4218** comprising a block of magnetic material **4214** and a conductor wire **4216** wrapped all the way around the block **4214,** a shield comprising a sheet of a good electrical conductor **4212** can be positioned next to the resonator **4218** at least partially shielding the resonator from the effects of objects located below **4220** the conductor shield **4212,** and likewise at least partially shielding the objects positioned below **4220** the shield from the effects of the electromagnetic fields that may be generated by the resonator. Note that while the figures may not show the resonator capacitors explicitly, it should be clear the magnetic resonators described here comprise inductive elements comprised of conductive wire loops, either in air or wrapped around a block of magnetic material and capacitive elements, as described above.

One physical effect of the addition of a conductive shield such as shown in Fig. 42A is the generation of an "image" resonator, on the other side of the conductive shield. One of ordinary skill in the art will recognize that the "image" described here is similar to the image charges and the method of images used to replicate electromagnetic boundary conditions along a perfect conductor. The "image" resonator will have "image" currents that mirror the electromagnetic currents in the resonator itself. In the limit where the size of the shield is infinitely larger than that of the resonator, the electromagnetic fields in the region of the actual resonator can be expressed as a superposition of the fields generated by the actual resonator and those generated by the image resonator. In some embodiments, an additional benefit of including a shield in the resonator structure is that the shield doubles the effective thickness of the magnetic material in the resonator structure.

In the limit where the shield is flat, large, close to the resonator, and highly conductive, the image currents and the actual currents flowing on the inner conductor segments (between the actual resonator and its image) of the real and image structures will be substantially equal and opposite and the electromagnetic fields they generate are substantially cancelled out. Therefore the wire segments that traverse the bottom of the magnetic material contribute very little to the overall field of the resonator. However, their resistive losses reduce the resonator Q and their thickness increases the overall thickness of the structure.

In some embodiments, a conductive shield may be placed in proximity to a planar resonator so that a thinner resonator may be used to achieve similar performance to one that is twice as thick. In other embodiments, the thin resonator may be made thinner by moving or removing the segments of the conducting wire that traverse the "bottom" of the magnetic material as shown in Fig. 42A. As described above, these wire segments contribute very little to the overall field, but their resistive losses reduce the resonator Q and their thickness increases the overall thickness of the structure. If these conducting wire segments are to be moved or removed from the resonator structure, an alternate electrical path for the current must be provided so that current can flow through the inductive element and around the magnetic material of the resonator.

One structure that removes the wire segments from below the block of magnetic material while preserving the shielding is shown in Fig. 42B. In embodiments, current may be returned to the remaining segments of the winding by connecting the remaining winding segments directly to the conductor shield. Such a resonator and shield combination may have a higher-Q than an equivalent resonator not electrically connected to a shield but using a continuous wire wrapping, provided that the current distribution in the newly integrated shield and remaining windings is substantially the same as in the configuration for which the conductor shield is separate. In some embodiments the same current distribution in the integrated resonator-shield structure may be achieved by driving or controlling the current in each conductor wire segment individually. In other embodiments the current distribution may be achieved by separating the shield into optimized individual conductor segments as will be shown below.

In embodiments it may be advantageous to explicitly incorporate the shield as part of the resonator, and use the conductor shield to carry currents that are directly connected to other parts of the resonator that do not have a shielding function. The integrated resonator-shield structure may eliminate the resistive losses of the image currents generated in the shield and may have an increased quality factor compared to a structure using a separate shield and resonator.

An example embodiment of the inductive portion of an integrated resonator-shield structure is shown in Fig. 42B and comprises a sheet of conductor **4222,** a block of magnetic material **4204,** and conductor wire segments **4210.** The block of magnetic material **4204** is positioned on top of the sheet of conductor **4222** and the core is partially wrapped by the conductor wire segments **4210.** The ends of the conductor wire segments **4210** are connected to opposite sides of the conductor shield not covered by the block of magnetic material. In other words, the conductor wire segments only partially wrap the block of magnetic material. That is, the conductor wire segments do not wrap completely around the core of magnetic material, but rather connect to the shield or segments of the shield to complete the electrical circuit. In Fig. 42B, the conductor wire segments wrap the top and both sides of the block of magnetic material. The conductor wire segments connect to the conductor shield which is used to complete the electrical connection between the two ends of the conductor wire segment. Tn embodiments, the conductor shield functions in part as the current path for the conductor wire segments.

In some embodiments, the overall current distribution in the winding segments and shield of an integrated resonator may differ substantially from that of the separate resonator and shield, even after accounting for the redundant currents. This difference may occur if, for example, the remaining segments of winding are simply electrically connected to the shield (e.g., by soldering), in which case the separate windings would all be connected in parallel with the shield and unless additional power control is added for each conductor wire segment the electrical current would flow preferentially in those portions of winding exhibiting the lowest impedance. Such a current distribution may not be suitable for all applications. For example, such a current distribution may not be the one that minimizes losses and/or optimizes performance.

One alternative embodiment of the integrated resonator-shield structure is to split the continuous conductor shield into distinct, electrically isolated conductor segments. In Fig. 42C the integrated resonator-shield structure comprises a conductor shield **4208** that is split or divided into distinct isolated conductor segments **4202, 4212,** etc that connect the ends of different conductor wire segments **4210, 4214** forming an electrical connection between the conductor wire segments and creating one continuous conducting path. The net result is a series connection of conductor wire segments alternated with electrically isolated segments of the conductor shield.

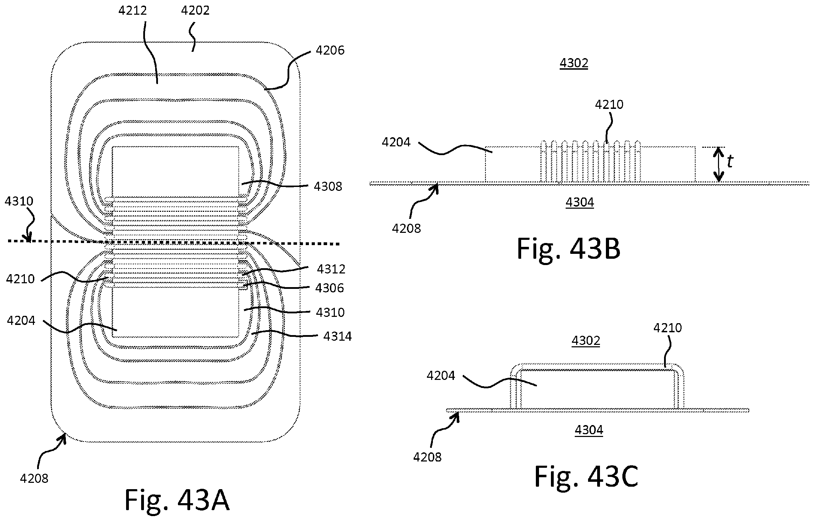

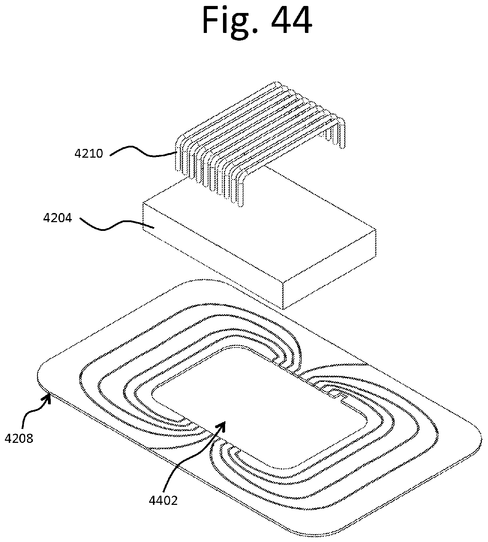

The top, side, front, and exploded views of one embodiment of the integrated resonator-shield structure are shown in Fig. 43A, 43B, 43C, and Fig. 44 respectively. The integrated resonator-shield structure has a conductor shield **4208** that is split into multiple isolated conductor segments or paths, **4202, 4212,** that are connected to the ends of the conductor wire segments **4210, 4214,** the conductor wire segments then partially wrap the block of magnetic material **4204,** or rather the conductor wire segments are routed so as to cover part of the magnetic material. As can be seen from the front view of the resonator in Fig. 43C, the conductor wire segment **4210** does not wrap completely around the core of magnetic material **4204,** but only wraps partially with the ends of the conductor wire segment **4210** connected to different segments of the conductor shield **4208.**

Tn embodiments the conductor shield may be split into multiple segments and shaped such that the shield segments connect to the ends of the wire conductor segments in a manner that results in each or some of the wire conductors segments being connected in series. An exemplary conductor shield with segments shaped and configured to connect the conductor wire segments in series is shown in Fig. 43A. Each segment **4202, 4212** of the conductor shield **4208** is shaped to connect two ends of different conductor wire segments **4210.** In this configuration for example, the individual shield segments and the conductor wire segments are connected in series to produce one continuous conductor that partially wraps around the core of magnetic material **4204** top to bottom, and partially wraps around the block of magnetic material in the plane of the shield. For the embodiment shown in Fig. 43A for example, the effective conductor starts at the end of one conductor wire segment **4306** and alternates between the conductor wire segments above the block of magnetic material **4204** and the segments of the conductor shield **4208** that are routed around the block of magnetic material **4204.** The first conductor wire segment **4306** is routed over the block of magnetic material **4204** and connects to a conductor shield segment **4310** which in turn connects to another conductor wire segment **4312** that is routed over the magnetic material and connects to another conductor segment **4314** and the pattern of alternating conductor wire segments and conducting shield segments is repeated until the last conductor segment of the conductor shield **4308.** The combination of the segments on the conductor shield and the conductor wire segments above the core of magnetic material create an effective continuous conductor and thus a magnetic resonator with an integrated shield that may be used to transfer or capture wireless power via oscillating magnetic fields. In embodiments, the conductor wire segments may comprise any type of wire such as solid wire, Litz wire, stranded wire and the like. In other embodiments, the conductor wire segments may comprise PCB or flex circuit traces, conductor strapping, strips, tubing, tape, ink, gels, paint, and the like.

The structure shown in Fig. 43A, for example, may be used as a source magnetic resonator by coupling the two ends of the effective conductor **4306, 4308** to at least one capacitor and to an oscillating voltage power source. The oscillating currents in the effective conductor will generate oscillating magnetic fields that are substantially parallel to the conductor shield **4208** while providing shielding against lossy objects that may be positioned below **4304** the resonator-shield structure. In addition, the fields that are generated may appear as if they have been generated by a resonator with a block of magnetic material that is twice as thick as the actual dimension of the magnetic material block, t, under certain coupling scenarios.

In embodiments it may preferable to connect the conductor wire segments and the segments of the conductor shield such that when the effective conductor is energized by an external power source or by external oscillating magnetic field, the currents in the conductor wire segments flow substantially in the same direction. For example, for the embodiments shown in Fig. 43A, the conductor wire segments are connected such that when the effective conductor is energized through the conductor ends or leads **4308, 4306,** all the currents in all individual conductor wire segments **4210,**etc. flow in the same direction, wherein the direction depends on the polarity of the induced voltages on the effective conductor. Current flowing in the same direction in the conductor wire segments may generate the strongest magnetic field.

In embodiments it may be preferable to connect and arrange the segments of the conductor shield such that the currents in the shield segments flow in opposite directions for shield segments above or below the center line **4310** of the resonator. For example, for the embodiment shown in Fig. 43A, the conductor segments of the conductor shield are connected such that when the effective conductor is energized at the ends **4308, 4306,** the electric currents above the center line of the resonator **4310** flow in the opposite rotation than the currents below of the center line of the resonator **4310** in the conductor segments **4202, 4212** of the conductor shield **4208.** That is, if the currents in conductor segments above the center line flow in substantially a clockwise direction, the currents below the center line should flow substantially in the counterclockwise direction. The counter flowing current of the top and bottom portions of the segments of the conducting shield may direct the magnetic fields generated by the respective portions of the resonator to enhance one another or point toward the same direction strengthening the dipole moment of the resonator towards a plane parallel with the conductor shield.

In embodiments the splitting of the integrated shield that generates the conductor shield segments could be done self-consistently so that the resulting current distribution for the integrated structure would perform at least as well (as defined by the resulting quality factor, effectiveness in shielding, coupling to other resonators, and the like) as the original system comprising a separate resonator and shield.

Tn embodiments the shape and distribution of the segments on the conductor shield may be designed to equalize currents in each segment of the shield, in each conductor winding segment, or in sections of combined segments. It may be preferable to shape and divide the conductor shield and shape the shield segments such that each shield segment carries substantially equal electric current. Such a current distribution may reduce proximity losses for example. The shaping of the shield segments is often done so they are narrower or thinner when they are closest to the magnetic material and thicker or wider when they are farther away may be preferable in some embodiments because the distribution arising from driving all of the conductor segments in parallel with equal current best approximates the current distribution in a solid shield located close to a resonator in a non integrated resonator-shield structure.

The general characteristics of the pattern may be seen in the shield segment shapes in the embodiments shown in Fig. 43A for example. Tn the Figure, the conductor segments **4212, 4202** span or cover a larger area of the conductor shield **4208** the further the segments are from the block of magnetic material **4204.** In the non-integrated resonator-shield structure, the effective currents induced in the conductor shield increase in areas closer to the block of magnetic material **4204.** Shaping the shield segments as shown in Fig. 43A forces a substantially similar current distribution in the integrated structure with the segmented shield.

In embodiments, the conductor shield may not need to extend all the way below the block of magnetic material. In embodiments the area under the block of magnetic material may be substantially void of magnetic fields during operation of the resonator. In embodiments the conductor shield may have a hole or cut-out below the block of magnetic material (in the area where the block of magnetic material and the conductor shield would otherwise overlap). In embodiments, removing this shielding material may make the resonator structure lighter or less expensive to make. For example, Fig. 44 depicts an exploded view of an embodiment of a integrated resonator-shield structure which comprises a conductor shield **4208** with a cutout or hole **4402** in the area of the conductor shield which would otherwise overlap with the block of magnetic material **4204** in the assembled structure.

In embodiments, the effective size of the shield may be larger than the dimensions of the block of magnetic material or the inductive portion of the resonator. The exact dimension of the conductor shield may differ for different applications. For example, in resonators designed for small devices such as cell phones or other hand held electronics, it may be preferable to ensure that the conductor shield extends out at least 15-20% of the length of the block of magnetic material in each direction. This shield extension may provide additional shielding from lossy materials in the cell phones or other hand held electronics. The size of the shield with respect to the magnetic material may depend on the types and sizes of objects the shield is meant to be effective against. The size of the conductor shield may be reduced if, for example, objects or materials behind the shield are not very lossy. In embodiments where the resonator may placed on a plane of very lossy steel, however, it may be desirable to make the shield larger to minimize the losses in the steel and the shield may have dimensions larger than 30% larger or more than the dimensions of the block of magnetic material.

Tn embodiments the segmented shield may be manufactured by any number of fabrication techniques, including machining, electroplating, electro-deposition, etching, painting, patterning, and the like and by rigid and flexible printed, deposited, etched, and the like, circuit board techniques. The individual segments on the conductor shield may be formed by machining a single piece of conductor. In embodiments the separation between the shield segments may comprise an additional separation or insulation space, layer or material. Such additional separation may provide improved electrical isolation between the segments and may prevent electrical arcing between two adjacent conductor traces.

Tn embodiments, the conductor shield may be further divided into multiple layers of conductors separated by insulators. A layered shield may be used to increase the cross section of conductor over which electrical current flows beyond the limits set by the skin depth effect at the frequency of operation, as described in previous sections. In embodiments, a layered shield may reduce the AC resistance of the conductor segments and increase the quality factor of the structure. A layered shield may also be used to achieve an integrated resonator-shield structure having dipole moments with substantially mutually orthogonal orientations in a thin and compact structure. Such a structure might comprise conductor wire segments that arc orthogonal to each other on top of the block of magnetic material. Each layer of shield segment may itself be further divided into narrower tracks of conductor that would provide additional control over the current density profile in the shield and may further increase the performance of the structure.

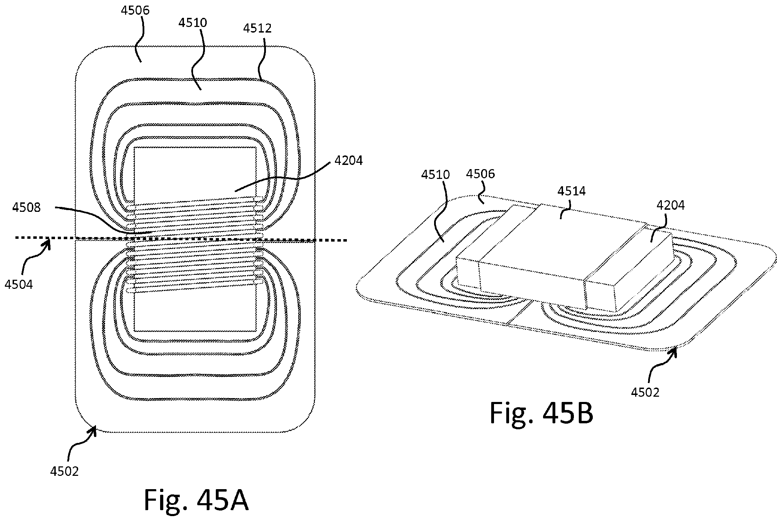

In embodiments the segments of the conductor shield may be shaped and arranged to provide a serial connection of the conductor wire segments that are partially wrapped around the block of magnetic material. For example, in the embodiment depicted in Fig. 43A, the shield segments **4212, 4202** are non symmetric with respect to the center line **4310** of the resonator. Each shield trace is shaped to connect the ends of two different conductor wire segments **4210** allowing the conductor wire segments to be arranged in a symmetric pattern with respect to the centerline **4310.** Such an arrangement may be advantageous for some configurations since it may allow simpler conductor wire design. The conductor wires that partially wrap around the block of magnetic material are all parallel and at right angles to the resonator structure. In other embodiments the shield segments may be completely or partially symmetric with respect to the center line of the conductor shield requiring the conductor wire segments that wrap partially above the magnetic core to be arranged such that they connect two ends of different shield segments. For example, in the embodiment depicted in Fig. 45A the shield segments **4506, 4510** of the conductor shield **4502** are symmetric with respect to the center line **4504** of the resonator. A serial connection of the conductor segments is provided by a non symmetric alignment, or diagonal alignment of the conductor wire segments **4508** that partially wrap the block of magnetic material **4204.** In some embodiments a combination of non-symmetrical or symmetric shield segments and non-symmetrical or symmetrical conductor wire segment routing may be used to connect some or all of the conductors in series or parallel depending on the desired properties of the resonator. For example, for some higher power configurations wherein large currents may be present in the resonator it may be advantageous to use an arrangement in which at least some of the conductor wire segments are connected in parallel to reduce losses in the conductors.

In embodiments the conductor wire segments that partially wrap the block of magnetic material may be comprised of individual wires or braided wires such as Litz wire. In embodiments the conductor wires may be comprised of flex circuits or traces or printed circuits or traces and may be shaped to fold over the block of magnetic material and may have appropriate contacts or attachments to make electrical connections with the conductor segments of the conductor shield. For example, Fig. 45B depicts an exemplary embodiment in which the conductor wire segment is integrated into a single piece **4514** that may be a printed circuit board, a flex circuit, and the like, and is formed to fold over the block of magnetic material **4204** and make appropriate electrical contacts with the conductor segments of the conductor shield **4502.**

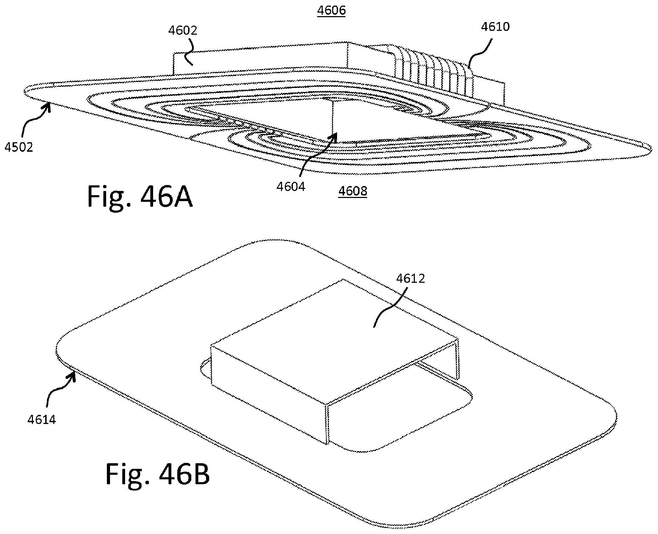

In embodiments, the shield and conductor wire segments may be fabricated in the same process, potentially improving reproducibility and performance while reducing manufacturing costs. In embodiments, an integrated shield and conductor wire segments structure may be fabricated as a flexible PCB, and the resonator structure may be completed by simply inserting the block of magnetic material within the integrated shield and winding, and then connecting the resulting structure to the appropriate circuitry. Tn the exemplary embodiment depicted in Fig. 46B, the complete structure of the conductor shield **4614** with the conductor segments (not shown) and the conductor wire part **4612** comprising individual conductor segments (not shown) may be one printed circuit board wherein the conductor wire part **4612** is bent or shaped to facilitate or support the placement of a block of magnetic material.

In embodiments, some or all of the supporting circuitry of the resonator may be fabricated on the same printed circuit board as the conductor shield of the integrated resonator-shield structure. For example, one side of the printed circuit board may have the printed conductor traces of the conductor shield while the other side may have electronic components and printed traces and may be used to contain the power and control circuitry for the resonators.

Tn embodiments, the block of magnetic material may be hollow or may have a cavity on the side facing the conductor shield where the effective magnetic fields or the resonator are minimal. The cavity in the magnetic material may be used to house electric or electronic components such as amplifiers or rectifiers used to power and control the resonator. The electronic components may be located in the cavity without significantly affecting the properties and parameters of the resonators and likewise not being significantly affected by the magnetic fields of the resonator. For example, Fig. 46A depicts an exemplary integrated resonator-shield structure wherein the bottom side **4608,** or the side that faces the conductor shield **4502** of the magnetic material **4602** is shaped to have a cavity **4604** into which components or electronic devices may be located. Placing the components in the cavity **4604** may provide for an integrated resonator-shield structure with the power and control circuitry designed under the magnetic material and shield with minimal or no impact on the height or thickness of the resonator structure. In some embodiments, an antenna or the like may be placed in the cavity and may be operated at a frequency where the magnetic material is substantially transparent or at least not an effective shield. In such embodiments, the antenna may suffer little attenuation from the presence of the resonator.

In embodiments, the conductor shield of the integrated resonator-shield structure may have additional bends, curves, flaps, and the like to enhance, improve, or alter the magnetic fields generated or affecting the resonator. The conductor shield of the integrated resonator-shield structure may have any of the bends, curves, flaps and the like that were described herein for the designs comprising a separate resonator and conductor shield. For example, similarly to the conductor shield depicted in Fig. 28A in which the conductor shield **2802** is shaped to have flaps **2804,** the conductor shield of the integrated resonator-shield structure may be shaped to include flaps that extend towards the block of magnetic material which may increase the effective size of the integrated shield without requiring a larger size conductor shield.

In embodiments, the design of the integrated resonator-shield structure may be sized, modified, configured, and the like to operate at specific configurations, power levels, frequencies, orientations, environments, and the like which may be required for specific applications. The number of conductor wire segments, the number of separate conductor segments on the conductor shield, the wire gauge, the thickness of the conductor shield, the thickness of the magnetic material, the dimensions of the shield, and the like may all be modified and manipulated to meet specific design requirements.

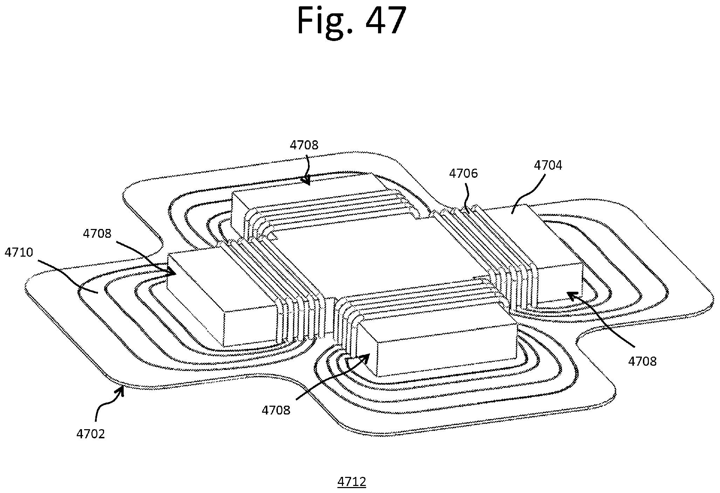

In embodiments, the integrated resonator-shield structure may be modified and extended to structures that have more than one magnetic dipole moment. The block of magnetic material may be partially wrapped with conductor wire segments in orthogonal directions or in non-parallel directions with the segments of the conductor shield arranged to connect the conductor wire segments in a serial or parallel or switched configuration. For example, an exemplary embodiment of an integrated resonator-shield structure having two orthogonal dipole moments is shown in Fig. 47. In the embodiment a block of magnetic material **4704** with four protrusions **4708** is partially wrapped with conductor wire segments **4706** that extend around the block of magnetic material **4704** and connect to the conductor segments **4710** of the conductor shield **4702** of the structure. The shield segments **4710** may be shaped to connect the conductor wire segments **4706** in series, in parallel, or may comprise switches so that different dipole moments can be individually excited. The structure has conductor wire segments wrapping the block of magnetic material in orthogonal directions and is capable of producing two orthogonal magnetic dipole moments that are each parallel to the surface of the conductor shield. The segments of the conductor shield provide for a continuous current path while eliminating losses associated with non-integrated shields used to shield a resonator from perturbating objects that may be located below **4712** the structure.

## Medical and Surgical Applications

Wireless power transfer may be used in hospital and operating room environments. A large number of electric and electronic equipment is used in hospitals and operating rooms to monitor patients, administer medications, perform medical procedures, maintain administrative and medical records, and the like. The electric and electronic equipment is often moved, repositioned, moved with a patient, or attached to a patient. The frequent movement may result in problems related to power delivery to the devices. Equipment and electronic devices that are often moved and repositioned may create a power cable hazards and management problem due to cables that become tangled, strained, unplugged, that become a tripping hazard, and the like. Devices with a battery backup that are capable of operating for a period of time without a direct electrical connection require frequent recharging or plugging and unplugging from electrical outlets every time a device is used or repositioned. Wireless power transfer may be used to eliminate the problems and hazards of traditional wired connection in hospital and operating room environments.

Wireless power transfer may be used to power surgical robots, equipment, sensors, and the like. Many medical procedures and surgical operations utilize robots or robotic equipment to perform or aid in medical procedures or operations. Wireless power transfer may be used to transfer power to the robotic equipment, to parts of the equipment, or to instruments or tools manipulated by the equipment which may reduce the potentially hazardous and troublesome wiring of the systems.

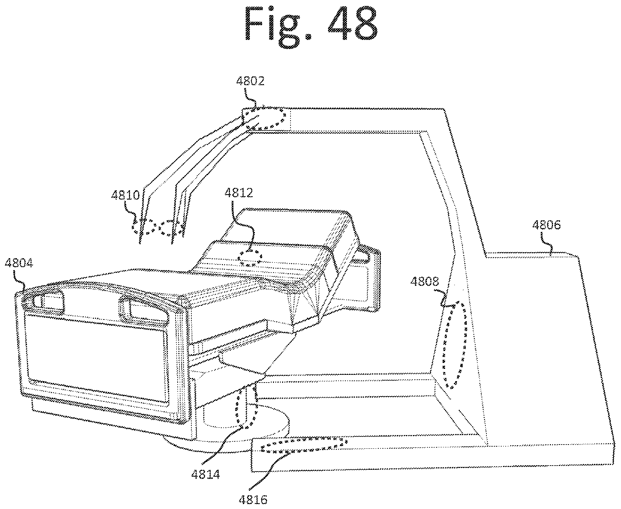

One example configuration of a surgical robot utilizing wireless power transfer is shown in Fig. 48. The figure depicts a surgical robot **4806** and an operating bed **4804.** In some embodiments the surgical robot may receive power wirelessly for operation or charging its battery or energy storage system. The received power may be distributed to systems or parts such as motors, controllers, and the like via conventional wired methods. The surgical robot may have a device resonator in its base **4816,** neck **4802,** main structure **4808,** and the like for capturing oscillating magnetic energy generated by a source. In some embodiments the robot may be wirelessly powered from a source **4814** that is integrated, attached, or next to the operating bed.

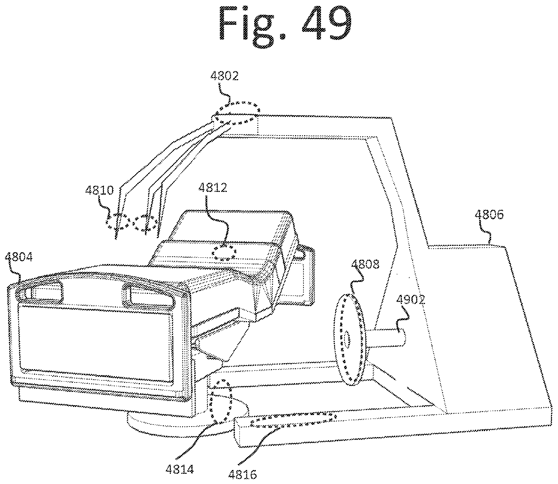

In some embodiments the source resonator or the device resonator may be mounted on an articulating arm, or a moving or configurable extension as depicted in Fig. 49. The arm or moving extension **4902** may be configured to respond to positional changes of the robot, power demands, or efficiency of the wireless power transfer to reposition the source or the device to ensure that adequate levels of power are delivered to the robot. In some embodiments the movable source or device may be moved manually by an operator or may be automatic or computerized and configured to align or to maintain a specific separation range or orientation between the source and the device.

In embodiments the movable arm or extension may be used in situations or configurations where there may be a positional offset, mismatch, later offset, or height offset between the source and the device. In embodiments the movable arm that houses or is used to position the source or device resonator may be computer controlled and may autonomously position itself to obtain the best power transfer efficiency. The arm, for example, may move in all directions scanning the most efficient configuration or position and may use learning or other algorithms to fine tune its position and alignment. In embodiments the controller may use any number of measurements from the sensor to try to align or seek the best or most efficient position including, but limited to, impedance, power, efficiency, voltage, current, quality factor, coupling rate, coupling coefficient measurements, and the like.

In other embodiments the surgical robot may use wireless power transfer to power motors, sensors, tools, circuits, devices, or systems of the robot, that arc manipulated by the robot, or that are integrated into the robot. For example, many surgical robots may have complex appendages that have multiple degrees of freedom of movement. It may be difficult to provide power along or through the various joints or moving parts of the appendages due to bulkiness, inflexibility, or unreliability of wires.

Likewise, powering of the various tools or instruments necessary for a procedure may pose reliability and safety problems with power connections and connectors in the presence of body fluids. A surgical robot may utilize one or more source resonator **4802** and one or more device resonators **4810, 4812** located in the appendages or tools to power motors, electronics, or devices to allow movement of the appendages or powering of tools, cameras, and the like that the robot manipulates which may be inside, or outside of a patient. The power may be transferred wirelessly without any wires regardless of the articulation or rotation of the appendages and may increase the degrees or articulation capability of the appendages. In some embodiments the sources may be integrated into the robot and powered by the robot that may receive its own power wirelessly or from a wired connection. In some embodiments the source powering the appendages and the tools may be mounted on the operating bed, under the bed, or next to the patient.

As those skilled in the art will appreciate, the systems described and shown in the figures are specific exemplary embodiments and systems may utilize any one of many different robot devices of various shapes and capabilities, tools, and the like. Likewise the source may be mounted on any number of objects of various dimensions depending on the application and use of the robot. The source may be mounted on the operating room bed or pedestal as shown in the Fig. 48. In other embodiments a source may be mounted in the floor, walls, ceilings, other devices, and the like.

Wireless power transfer may be used to power or recharge movable equipment such as an IV or drug delivery racks or computer stands. Such stands or racks are often repositioned temporarily or moved from one location to another with a patient. The electronic devices attached to these racks often have battery backup allowing them to operate for a period of time without a direct electrical connection such that they can be moved or repositioned and maintain their functionality. However, every time a traditional rack is moved or repositioned it needs to be unplugged and plugged back into an outlet for recharging or powering and the cable must be wound or untangled from other cables.

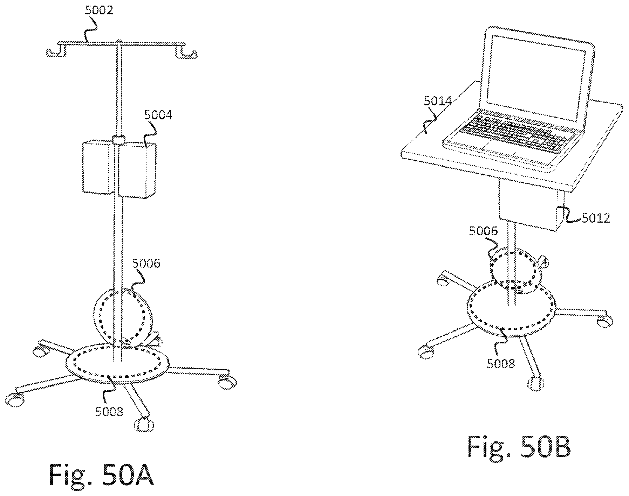

The problems with traditional movable wired drug delivery, patient monitoring, or computer racks may be overcome by integrating a wireless power transfer system to the devices. For example, sample embodiments of a drug delivery rack and a computer rack are depicted in Fig. 50. Device resonators 5008,5006 and power and control circuitry may be integrated or attached to the base or the body of the rack or the supporting structure allowing wireless power transfer from a source resonator mounted into the floor, wall, charging station, or other objects. To be charged or powered the rack 5002 or stand 5014 may be positioned in the proximity of the source, within a meter distance of the source, or within a foot separation of the source. The wireless power transfer enabled rack and the electrical equipment does not require plugging or unplugging or cable management. The wireless power transfer enabled rack or electrical equipment may be powered by positioning the rack or electrical equipment in a specific area of a room or in proximity to the source. In this configuration, for example, a device or rack that may is only used for short period of time to measure or diagnose a patient may be moved from the charging location and brought anywhere close to the patient to take a measurement and moved back into the charging location without requiring precise positioning or plugging or unplugging of the equipment.

**Claims**

1. A source for a wireless power transfer system, comprising:

   a source resonator (344);
   a source impedance matching controller (338);
   impedance matching network components (342) coupled to the source resonator and the source impedance matching controller, wherein the impedance matching network components can be adjusted according to signals received from the source impedance matching controller;
   sensing and measurement circuitry (314,316,318,320,402,404) configured to obtain measured signals associated with the source resonator (344) and the impedance matching network components (342);
   a PWM, pulse width modulation, generator (306; 410) coupled to the impedance matching network components (342) and being configured to control a driving signal to drive the source resonator (344) through the impedance matching network components (342); and
   a processing unit (330) coupled to the sensing and measurement circuitry (314,316,318,320,402,404), the PWM generator (306,410), and the source impedance matching controller (342) and configured to execute a control algorithm (328) including adjusting operation of the PWM generator (306,410) and the source impedance matching (338) based on the measured signals from the sensing and measurement circuitry (314,316,318,320,402,404).

2. The source of claim 1, wherein the sensing and measurement circuitry and the processing unit are formed by an integrated circuit chip.

3. The source of claim 1, wherein at least one of the source resonator and the impedance matching network components comprises a tunable component having a tunable parameter value, and wherein the source impedance matching controller is configured to control the tunable parameter value of the tunable component.

4. The source of claim 3, wherein the source impedance matching controller is configured to adjust at least one of operation of the resonator and characteristics of the resonator.

5. The source of claim 4, wherein the source impedance matching controller is configured to adjust at least one of power delivered to the resonator and power delivered from the resonator to a receiving device.

6. The source of claim 4, wherein the source impedance matching controller is configured to adjust a resonant frequency of the resonator.

7. The source of claim 1, wherein the sensing and measurement circuitry is coupled to an analog-to-digital converter (ADC) (314; 316).

8. The source of claim 1, further comprising:

an amplifier coupled to the impedance matching network and comprising at least two power transistors (336); and at least two transistor gate drivers (334) coupled to the at least two power transistors and to the PWM generator, wherein the PWM generator is configured to drive the amplifier through the at least two power transistors.

9. The source of claim 8, further comprising an adjustable DC power supply (304) coupled to the amplifier and to the system controller, wherein the system controller is configured to control a voltage output of the adjustable DC power supply.

10. The source of claim 8, further comprising:

an adjustable DC power supply (304) coupled to the amplifier; and a bus voltage (Vbus) controller (326) coupled to the system controller and to the adjustable DC power supply, wherein the Vbus controller is configured to control a voltage output of the adjustable DC power supply.

11. The source of claim 8, wherein the processing unit is configured to control at least one of a duty cycle, a phase, and a frequency of a driving signal supplied to the amplifier.

12. The source of claim 11, wherein processing unit is configured to maintain zero voltage switching at the amplifier.

13. The source of claim 8, further comprising fault detection circuitry (340) configured to change or interrupt operation of the amplifier, wherein the fault detection circuitry comprises one or more comparators configured to monitor at least one of voltage signals and current signals of the system.

14. The source of claim 13, wherein the one or more comparators monitor a bus voltage of the system.

15. The source of claim 13, wherein the fault detection circuitry comprises an output, and wherein the fault detection circuitry is configured to at least one of adjust the PWM generator, reduce a system output power, and initiate a system shutdown, by generating a signal at the output.

**Patentansprüche**

1. Quelle für ein drahtloses Energieübertragungssystem, aufweisend:

einen Quellenresonator (344);

einen Quellenimpedanzangleichregler (338);

Impedanzangleich-Netzwerkkomponenten (342), die mit dem Quellenresonator und dem Quellenimpedanzangleichregler verbunden sind, wobei die Impedanzangleich-Netzwerkkomponenten angepasst werden können im Einklang mit Signalen, die vom Quellenimpedanzangleichregler empfangen werden;

Abtast- und Mess-Schaltkreise (314, 316, 318, 320, 402, 404), die dafür ausgelegt sind, Messsignale in Zusammenhang mit dem Quellenresonator (344) und den Impedanzangleich-Netzwerkkomponenten (342) zu erlangen;

einen PWM-, Pulsweitenmodulations-, Generator (306; 410), die mit den Impedanzangleich-Netzwerkkomponenten (342) verbunden und dafür ausgelegt ist, ein Antriebssignal zu steuern, um den Quellenresonator (344) durch die Impedanzangleich-Netzwerkkomponenten (342) anzusteuern; und

eine Verarbeitungseinheit (330), die mit den Abtast- und Mess-Schaltkreisen (314, 316, 318, 320, 402, 404), dem PWM-Generator (306, 410) und dem Quellenimpedanzangleichregler (342) verbunden und dafür ausgelegt ist, einen Steueralgorithmus (328) aufweisend einen Einstellvorgang des PWM-Generators (306, 410) und des Quellenimpedanzangleichs (338) basierend auf den Messsignalen von den Abtast- und Mess-Schaltkreisen (314, 316, 318, 320, 402, 404) auszuführen.

2.  Quelle von Anspruch 1, wobei die Abtast- und Mess-Schaltkreise und die Verarbeitungseinheit durch einen integrierten Schaltungschip gebildet sind.

3.  Quelle von Anspruch 1, wobei mindestens entweder der Quellenresonator und/oder die Impedanzangleich-Netzwerkkomponenten eine abstimmbare Komponente aufweist, welche einen abstimmbaren Parameterwert aufweist, und wobei der Quellenimpedanzangleichregler dafür ausgelegt ist, den abstimmbaren Parameterwert der abstimmbaren Komponente zu steuern.

4.  Quelle nach Anspruch 3, wobei der Quellenimpedanzangleichregler dafür ausgelegt ist, mindestens entweder den Betrieb des Resonators und/oder die Eigenschaften des Resonators anzupassen.

5.  Quelle nach Anspruch 4, wobei der Quellenimpedanzangleichregler dafür ausgelegt ist, mindestens entweder die dem Resonator zugeführte Energie und/oder die vom Resonator zu einer Empfangseinrichtung gelieferte Energie anzupassen.

6.  Quelle nach Anspruch 4, wobei der Quellenimpedanzangleichregler dafür ausgelegt ist, eine Resonanzfrequenz des Resonators anzupassen.

7.  Quelle nach Anspruch 1, wobei die Abtast- und Mess-Schaltkreise mit einem Analog/Digital-Wandler (ADC) (314; 316) verbunden sind.

8.  Quelle nach Anspruch 1, ferner aufweisend:

einen Verstärker, der mit dem Impedanzangleich-Netzwerk verbunden ist und mindestens zwei Leistungstransistoren (336) aufweist; und

mindestens zwei Transistorgate-Treiber (334), die mit den mindestens zwei Leistungstransistoren und dem PWM Generator verbunden sind,

wobei der PWM-Generator dafür ausgelegt ist, den Verstärker durch die mindestens zwei Leistungstransistoren anzusteuern.

9.  Quelle nach Anspruch 8, ferner aufweisend eine einstellbare Gleichstromversorgung (304), die mit dem Verstärker und dem Systemregler verbunden ist, wobei der Systemregler dafür ausgelegt ist, eine Spannungsausgabe der einstellbaren Gleichstromversorgung zu steuern.

10. Quelle nach Anspruch 8, ferner aufweisend:

eine einstellbare Gleichstromversorgung (304), die mit dem Verstärker verbunden ist; und

einen Busspannungs- (Vbus-) Regler (326), der mit dem Systemregler und der einstellbaren Gleichstromversorgung verbunden ist,

wobei der Vbus-Regler dafür ausgelegt ist, eine Spannungsausgabe der einstellbaren Gleichstromversorgung zu steuern.

**11.** Quelle nach Anspruch 8, wobei die Verarbeitungseinheit dafür ausgelegt ist, mindestens entweder ein Tastverhältnis, eine Phase und/oder eine Frequenz eines dem Verstärker bereitgestellten Treibersignals zu steuern.

**12.** Quelle nach Anspruch 11, wobei die Verarbeitungseinheit dafür ausgelegt ist eine Nullspannungsschaltung am Verstärker aufrechtzuerhalten.

**13.** Quelle nach Anspruch 8, ferner aufweisend Fehlererkennungsschaltkreise (340), die dafür ausgelegt sind, den Betrieb des Verstärkers zu verändern oder zu unterbrechen, wobei die Fehlererkennungsschaltkreise einen oder mehrere Komparatoren aufweisen, welche dafür ausgelegt sind, mindestens entweder Spannungssignale und/oder Stromsignale des Systems zu überwachen.

**14.** Quelle nach Anspruch 13, wobei der eine oder die mehreren Komparatoren eine Busspannung des Systems überwachen.

**15.** Quelle nach Anspruch 13, wobei die Fehlererkennungsschaltkreise einen Ausgang aufweisen, und wobei die Fehlererkennungsschaltkreise dafür ausgelegt sind, durch Erzeugen eines Signals am Ausgang mindestens entweder den PWM-Generator anzupassen, einen System-Ausgangsstrom zu reduzieren und/oder ein Herunterfahren des Systems einzuleiten.

## Revendications

**1.** Source pour un système de transfert d'énergie sans fil, comprenant :

un résonateur de source (344) ;
un dispositif de commande d'adaptation d'impédance de source (338) ;
des composants de réseau d'adaptation d'impédance (342) couplés au résonateur de source et au dispositif de commande d'adaptation d'impédance de source, dans lequel les composants de réseau d'adaptation d'impédance peuvent être réglés en fonction de signaux reçus du dispositif de commande d'adaptation d'impédance de source ;
un ensemble de circuits de détection et de mesure (314, 316, 318, 320, 402, 404) configuré pour obtenir des signaux mesurés associés au résonateur de source (344) et aux composants de réseau d'adaptation d'impédance (342) ;
un générateur de modulation d'impulsions en durée (PWM) (306 ; 410) couplé aux composants de réseau d'adaptation d'impédance (342) et qui est configuré pour commander un signal d'excitation pour exciter le résonateur de source (344) au moyen des composants de réseau d'adaptation d'impédance (342) ; et
une unité de traitement (330) couplée à l'ensemble de circuits de détection et de mesure (314, 316, 318, 320, 402, 404), au générateur de modulation PWM (306, 410) et au dispositif de commande d'adaptation d'impédance de source (342) et configurée pour exécuter un algorithme de commande (328) comprenant le réglage du fonctionnement du générateur de modulation PWM (306, 410) et de l'adaptation d'impédance de source (338) en se basant sur les signaux mesurés provenant de l'ensemble de circuits de détection et de mesure (314, 316, 318, 320, 402, 404) .

**2.** Source selon la revendication 1, dans lequel l'ensemble de circuits de détection et de mesure et l'unité de traitement sont formés par un microcircuit intégré.

**3.** Source selon la revendication 1, dans lequel le résonateur de source et/ou les composants d'adaptation d'impédance de réseau comprennent un composant accordable ayant une valeur de paramètre accordable et dans lequel le dispositif de commande d'adaptation d'impédance de source est configuré pour commander la valeur de paramètre accordable du composant accordable.

**4.** Source selon la revendication 3, dans lequel le dispositif de commande d'adaptation d'impédance de source est configuré pour régler le fonctionnement du résonateur et/ou des caractéristiques du résonateur.

**5.** Source selon la revendication 4, dans lequel le dispositif de commande d'adaptation d'impédance de source est configuré pour ajuster l'énergie délivrée au résonateur et l'énergie délivrée depuis le résonateur à un dispositif de réception.

**6.** Source selon la revendication 4, dans lequel le dispositif de commande d'adaptation d'impédance de source est configuré pour ajuster une fréquence de résonance du résonateur.

**7.** Source selon la revendication 1, dans lequel l'ensemble de circuits de détection et de mesure est couplé à un convertisseur analogique-numérique (ADC) (314 ; 316).

**8.** Source selon la revendication 1, comprenant en outre :

un amplificateur couplé au réseau d'adaptation d'impédance et comprenant au moins deux transistors de puissance (336) ; et
au moins deux circuits d'attaque de grille de transistor (334) couplés aux deux, ou plus, transistors de puissance et au générateur de modulation PWM,
dans lequel le générateur de modulation PWM est configuré pour exciter l'amplificateur au moyen des deux, ou plus, transistors de puissance.

**9.** Source selon la revendication 8, comprenant en outre une alimentation en courant continu (304) couplée à l'amplificateur et au dispositif de commande de système, dans lequel le dispositif de commande de système est configuré pour commander une tension de sortie de l'alimentation en courant continu ajustable.

**10.** Source selon la revendication 8, comprenant en outre :

une alimentation en courant continu ajustable (304) couplée à l'amplificateur ; et
un dispositif de commande de tension de bus (Vbus) (326) couplé au dispositif de commande de système et à l'alimentation en courant continu ajustable,
dans lequel le dispositif de commande de tension de bus est configuré pour commander une tension de sortie de l'alimentation en courant continu ajustable.

**11.** Source selon la revendication 8, dans lequel l'unité de traitement est configurée pour commander un cycle de service et/ou une phase et/ou une fréquence d'un signal d'excitation fourni à l'amplificateur.

**12.** Source selon la revendication 11, dans lequel l'unité de traitement est configurée pour conserver une commutation de tension nulle au niveau de l'amplificateur.

**13.** Source selon la revendication 8, comprenant en outre un ensemble de circuits de détection d'anomalie (340) configuré pour modifier ou interrompre le fonctionnement de l'amplificateur, dans lequel l'ensemble de circuits de détection d'anomalie comprend un ou plusieurs comparateurs configurés pour surveiller des signaux de tension et/ou des signaux de courant du système.

**14.** Source selon la revendication 13, dans lequel le ou les comparateurs surveillent une tension de bus du système.

**15.** Source selon la revendication 13, dans lequel l'ensemble de circuits de détection d'anomalie comprend une sortie et dans lequel l'ensemble de circuits de détection d'anomalie est configuré pour régler le générateur de modulation PWM et/ou pour réduire une puissance de sortie du système et/ou pour déclencher un arrêt du système en générant un signal au niveau de la sortie.

Fig. 1

EP 3 252 962 B1

Fig. 2A

Fig. 2B

Fig. 2C

Fig. 2D

Fig. 2E

Fig. 2F

Fig. 3

Fig. 4

Fig. 5A

Fig. 5B

**Fig. 6A**

```
┌──────────────┐        ┌──────────────┐
│    Power     │        │    Power     │
│  Generator   │────────│    Load      │── 604
└──────────────┘        └──────────────┘
        602
```

**Fig. 6B**

```
┌──────────────┐   ┌──────────────┐   ┌──────────────┐
│    Power     │   │   Tunable    │   │    Power     │
│  Generator   │───│  Impedance   │───│    Load      │── 604
└──────────────┘   │  Matching    │   └──────────────┘
        602        │   Network    │
                   └──────────────┘
                          606
```

**Fig. 6C**

```
┌──────────────┐   ┌──────────────┐   ┌──────────────┐
│   Tunable    │   │   Tunable    │   │    Power     │
│    Power     │───│  Impedance   │───│    Load      │── 604
│  Generator   │   │  Matching    │   └──────────────┘
└──────────────┘   │   Network    │
        608        └──────────────┘
                          606
```

Fig. 7

EP 3 252 962 B1

Fig. 8

Fig. 9

EP 3 252 962 B1

Fig. 10

f=250kHz, dc=40%, $C_1$=10nF, $\omega L_s'$=1000Ω

64

## Fig. 11A

f=250kHz, dc=40%, $C_1$=10nF, $C_2$=7.5nF

EP 3 252 962 B1

Fig. 11B

f=250kHz, dc=40%, $C_1$=10nF, $C_2$=7.5nF

EP 3 252 962 B1

## Fig. 11C

$f=250kHz, C_1=10nF, C_2=7.5nF, \omega L'=1000\Omega$

Fig. 12

Fig. 13

## Fig. 14

$f=250kHz$, $C_{as}=640pF$, $R_s=0.19\Omega$, $L_s=100\mu H$, $C_{1s}=10nF$, $\omega L'_s=1000\Omega$
$Z_{load}=50\Omega$, $R_d=0.3\Omega$, $L_d=40\mu H$, $C_{1d}=87.5nF$, $C_{2d}=13nF$, $\omega L'_d=400\Omega$

Fig. 15

## Fig. 16

Fig. 17A

Fig. 17B

Fig. 17C

Fig. 18A

Fig. 18B

Fig. 19A

Fig. 19B

Fig. 20A

1804

1800

1806

1806

1808

1802

Fig. 20B

1804

1800

1808

1808

1802

1802

76

Fig. 21

Fig. 22

Fig. 23

2402  8004

Fig. 24A

2404

2410  2408

Fig. 24B

2402

2406

2408  2410

Fig. 24C

2414

2412

Fig. 24D

# Fig. 25

Fig. 26A

Fig. 26B

2702

2708

Fig. 27B

2704

2706

2712

2702

2704

A

B

2710

Fig. 27A

Fig. 28A

Fig. 28B

EP 3 252 962 B1

## Fig. 29

Fig. 30

EP 3 252 962 B1

# Fig. 31

Fig. 32B

Fig. 32A

EP 3 252 962 B1

Fig. 33

EP 3 252 962 B1

Fig. 34A

Fig. 34B

EP 3 252 962 B1

## Fig. 35

Fig. 36A

3614

3602

3612

3604

3620

3618

3610

3616

3606

3608

Fig. 36B

9214

3606

3608

3604

3620

3618

3616

3610

3602

3612

Fig. 37

Fig. 38A

Fig. 38B

Fig. 38C

Fig. 38D

3904

3902

Fig. 39B

3904

3902

Fig. 39A

3904

3902

Fig. 39C

Fig. 40

4102
4104

4108

4106

4102
4104

Fig. 41B

4102
4104

4106

4102
4104

Fig. 41A

4222

4204

4210

Fig. 42B

4214

4216

4218

4212

4220

Fig. 42A

4208

4204

4212

4210

4202

4206

Fig. 42C

Fig. 43A

Fig. 43B

Fig. 43C

Fig. 44

Fig. 45B

Fig. 45A

Fig. 46A

Fig. 46B

Fig. 47

EP 3 252 962 B1

# Fig. 48

Fig. 49

Fig. 50B

Fig. 50A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 78961110 A
- US 20100237709 A
- US 72205010 A
- US 20100181843 A
- JP 2009038924 A
- WO 2010014634 A2
- US 20050159913 A1